# EUROPEAN PATENT APPLICATION

(11) **EP 4 247 061 A1**
(43) Date of publication of application: **20.09.2023**
(21) Application number: 21905511.8
(22) Date of filing: 30.11.2021
(51) Int. Cl.: H04W 40/36

(54) **COMMUNICATION METHOD, APPARATUS, AND SYSTEM**

(30) Priority: 15.12.2020 CN 202011479765; 14.01.2021 CN 202110049294
(71) Applicant: Huawei Technologies Co., Ltd., Shenzhen, Guangdong 518129 (CN)
(72) Inventor: CAI, Yu, Shenzhen, Guangdong 518129 (CN); XU, Haibo, Shenzhen, Guangdong 518129 (CN)
(74) Representative: Maiwald GmbH
(86) International application number: PCT/CN2021/134412
(87) International publication number: WO 2022/127582

(57) **Abstract**

This application relates to a communication method, apparatus, and system. The method includes: a first terminal device initiates RRC reestablishment in a first manner when determining that a second terminal device cannot continue to provide a relay service to the first terminal device, where the first manner is determined based on first information, and the first manner is a manner of initiating RRC reestablishment through a Uu interface, a manner of initiating RRC reestablishment through a new terminal device, or a manner of initiating RRC reestablishment through the second terminal device. In embodiments of this application, the first terminal device may select a manner of initiating RRC reestablishment, so that the manner of initiating RRC reestablishment by the first terminal device is more flexible.

## Description

### CROSS-REFERENCE TO RELATED APPLICATIONS

This application claims priority to Chinese Patent Application No. 202011479765.X, filed with the China National Intellectual Property Administration on December 15, 2020 and entitled "METHOD FOR REESTABLISHING RRC CONNECTION BY UE IN LAYER 2 RELAY", which is incorporated herein by reference in its entirety; and this application claims priority to Chinese Patent Application No. 202110049294.7, filed with the China National Intellectual Property Administration on January 14, 2021 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

When a terminal device is relatively far away from a network device, for example, the terminal device is not located within a coverage area of the network device, the terminal device is located at a coverage edge of the network device, or quality of a link between the terminal device and the network device is relatively poor, the terminal device may communicate with the network device through another terminal device. That is, the another terminal device may provide a relay service to the terminal device, so that the terminal device can communicate with the network device. The terminal device that communicates with the network device through the another terminal device may be referred to as a remote (remote) terminal device, and the terminal device that provides the relay service to the remote terminal device may be referred to as a relay (relay) terminal device.

In a process in which the remote terminal device communicates with the network device through the relay terminal device, if the remote terminal device detects that a radio link failure (radio link failure, RLF) occurs on a sidelink (sidelink, SL) between the remote terminal device and the relay terminal device, a service of the remote terminal device may be interrupted. There is currently no solution to this problem.

### SUMMARY

Embodiments of this application provide a communication method, apparatus, and system, to improve service continuity of a remote terminal device.

According to a first aspect, a first communication method is provided. For example, the method may be applied to a first communication system. The first communication system includes, for example, a first terminal device and a second terminal device. The method includes: The first terminal device initiates RRC reestablishment in a first manner when the first terminal device determines that the second terminal device cannot continue to provide a relay service to the first terminal device, where the first manner is a manner of initiating RRC reestablishment through a Uu interface, a manner of initiating RRC reestablishment through a new terminal device, or a manner of initiating RRC reestablishment through the second terminal device. The method further includes: The first terminal device receives first information from a first network device through the second terminal device, where the first information is used to indicate to initiate RRC reestablishment through a Uu interface, indicate to initiate RRC reestablishment through a new terminal device, or indicate to initiate RRC reestablishment through the second terminal device; or the first information includes RSRP of a cell selected by the first terminal device and/or RSRP of a third terminal device selected by the first terminal device.

In this embodiment of this application, if the first terminal device determines that the second terminal device cannot continue to provide the relay service to the first terminal device, the first terminal device may initiate RRC reestablishment, to resume a service of the first terminal device as soon as possible. In addition, the first terminal device may select a manner of initiating RRC reestablishment, for example, may initiate RRC reestablishment through a Uu interface, may initiate RRC reestablishment through a new terminal device, or may continue to initiate RRC reestablishment through the second terminal device, so that the manner of initiating RRC reestablishment by the first terminal device is more flexible. In addition, for example, the first terminal device may select, based on a factor such as network quality, a relatively good manner to initiate RRC reestablishment. This increases a success rate of RRC reestablishment, improves service continuity of the first terminal device, and reduces a packet loss caused due to service discontinuity. For example, the first manner may be indicated by the network device. For example, in a process in which the first terminal device communicates with the first network device through the second terminal device, the first network device sends the first information to the first terminal device through the second terminal device, and correspondingly, the first terminal device receives the first information from the first network device through the second terminal device. The first terminal device may determine the first manner based on an indication of the first information, and then initiate RRC reestablishment. The network device performs indication, and the first terminal device does not need to independently determine the manner of initiating RRC reestablishment. This can simplify an execution process of the terminal device. Therefore, the method in this embodiment of this application can be applied to more terminal devices (for example, the solution in this embodiment of this application can be applied to even a terminal device with a limited capability). For another example, the first manner may be independently determined by the first terminal device, and does not need to be indicated by the network device. This can reduce signaling overheads.

With reference to the first aspect, in a first optional implementation of the first aspect, when the first information includes the RSRP of the cell selected by the first terminal device and/or the RSRP of the third terminal device selected by the first terminal device, if RSRP of a first cell is less than or equal to a first RSRP threshold, and the first terminal device does not select a terminal device that can provide the relay service, the first manner is the manner of initiating RRC reestablishment through a Uu interface, where the first cell is a cell selected by the first terminal device; if RSRP of a first cell is greater than a first RSRP threshold, the first manner is the manner of initiating RRC reestablishment through a Uu interface, where the first cell is a cell selected by the first terminal device; if the RSRP of the cell selected by the first terminal device is less than or equal to a first RSRP threshold, and the first terminal device selects the third terminal device that can provide the relay service, the first manner is a manner of initiating RRC reestablishment through the third terminal device; or if a difference between the RSRP of the cell and the RSRP of the third terminal device selected by the first terminal device is less than or equal to a first RSRP threshold, the first manner is a manner of initiating RRC reestablishment through the third terminal device, where the third terminal device is a new terminal device that is selected by the first terminal device and that can provide the relay service, or the third terminal device and the second terminal device are a same terminal device. The first manner may alternatively be determined by the first terminal device. For example, the first terminal device may determine the first manner based on the RSRP of the cell selected by the first terminal device and/or the RSRP of the third terminal device selected by the first terminal device, so that the first terminal device may perform RRC reestablishment in a better manner based on the RSRP, to increase a success rate of RRC reestablishment.

With reference to the first aspect or the first optional implementation of the first aspect, in a second optional implementation of the first aspect, that the first terminal device determines that the second terminal device cannot continue to provide a relay service to the first terminal device includes: The first terminal device detects an SL RLF between the first terminal device and the second terminal device; or a first protocol layer in the first terminal device requests to release a connection between the first terminal device and the second terminal device. The first terminal device may determine, based on a plurality of different cases, that the second terminal device cannot continue to provide the relay service to the first terminal device, to reduce a delay in initiating RRC reestablishment by the first terminal device.

With reference to the first aspect, the first optional implementation of the first aspect, or the second optional implementation of the first aspect, in a third optional implementation of the first aspect, when the first manner is the manner of initiating RRC reestablishment through a Uu interface, the method further includes: The first terminal device starts a first timer, where the first timer is stopped when the first terminal device selects a cell, or is stopped when the first terminal device selects a new terminal device that can provide the relay service; the first timer is stopped when the first terminal device selects a cell, or is stopped when the first terminal device completes establishment of a connection to a new terminal device that can provide the relay service; or the first timer is stopped when the first terminal device selects a cell, or is stopped when the first terminal device obtains an identifier of a serving cell of a new terminal device that is selected by the first terminal device and that can provide the relay service; and the first terminal device stops the first timer when selecting the first cell. When initiating RRC reestablishment through a Uu interface, the terminal device may start the first timer. If the first terminal device selects a suitable cell (for example, the first cell) before the first timer expires, the first terminal device may stop the first timer. If the first terminal device does not select a suitable cell when the first timer expires, the first terminal device may stop cell selection. For example, the first terminal device may enter an RRC idle mode, or the first terminal device may initiate RRC reestablishment through a terminal device. A cell selection time of the first terminal device may be effectively controlled by using the first timer, to increase a success rate of RRC reestablishment.

With reference to the third optional implementation of the first aspect, in a fourth optional implementation of the first aspect, that the first terminal device starts a first timer includes: The first terminal device starts the first timer when initiating RRC reestablishment in the first manner; the first terminal device starts the first timer when determining that the second terminal device cannot continue to provide the relay service to the first terminal device; or the first terminal device starts the first timer after initiating RRC reestablishment in the first manner and before performing cell selection. The first terminal device may start the first timer in different cases. This is not limited in this embodiment of this application.

With reference to the first aspect, the first optional implementation of the first aspect, or the second optional implementation of the first aspect, in a fifth optional implementation of the first aspect, when the first manner is the manner of initiating RRC reestablishment through a Uu interface, after the first terminal device initiates RRC reestablishment in the first manner, the method further includes: if the first terminal device does not select a cell, the cell selected by the first terminal device is no longer suitable, the first terminal device does not receive an RRC reestablishment message from a second network device, or the RSRP of the cell selected by the first terminal device is less than or equal to a second RSRP threshold, the first terminal device selects a new terminal device that can provide the relay service; and the first terminal device initiates RRC reestablishment through the third terminal device when the first terminal device selects the third terminal device, where the third terminal device can provide the relay service to the first terminal device. If the first terminal device does not select a suitable cell or the like in a process of initiating RRC reestablishment through a Uu interface, the first terminal device possibly cannot continue to initiate RRC reestablishment through the Uu interface. In this case, the first terminal device may select a terminal device to initiate RRC reestablishment through the terminal device, to increase a success rate of RRC reestablishment performed by the terminal device. The third terminal device and the second terminal device may be a same terminal device or different terminal devices.

With reference to the fifth optional implementation of the first aspect, in a sixth optional implementation of the first aspect, that the first terminal device does not select a cell includes: The first terminal device does not select a cell when a first timer expires, where the first timer is started when the first terminal device initiates RRC reestablishment in the first manner, the first timer is started when the first terminal device determines that the second terminal device cannot continue to provide the relay service to the first terminal device, or the first timer is started after the first terminal device initiates RRC reestablishment in the first manner and before cell selection is performed. That the first terminal device does not select a suitable cell may mean that the first terminal device does not select a suitable cell when the first timer expires. A cell selection time of the first terminal device can be effectively controlled by using the first timer, to prevent the terminal device from indefinitely performing cell selection.

With reference to the fifth optional implementation of the first aspect, in a seventh optional implementation of the first aspect, that the first terminal device does not receive an RRC reestablishment message from a second network device includes: The first terminal device does not receive the RRC reestablishment message from the second network device when a second timer expires, where the second timer is started after the first terminal device selects a cell. If the first terminal device selects a suitable cell, the first terminal device may start the second timer. If the first terminal device receives the RRC reestablishment message from the network device before the second timer expires, the first terminal device may stop the second timer. If the first terminal device does not receive the RRC reestablishment message from the network device when the second timer expires, the first terminal device does not receive the RRC reestablishment message from the network device. For example, the first terminal device may initiate RRC reestablishment through a terminal device, or the first terminal device may enter an RRC idle mode. A time in which the terminal device receives the RRC reestablishment message from the network device can be effectively controlled by using the second timer, to prevent the terminal device from indefinitely waiting for the message from the network.

With reference to the first aspect, the first optional implementation of the first aspect, or the second optional implementation of the first aspect, in an eighth optional implementation of the first aspect, when the first manner is the manner of initiating RRC reestablishment through a new terminal device, the method further includes: The first terminal device starts a second timer when the first terminal device initiates RRC reestablishment in the first manner, when the first terminal device determines that the second terminal device cannot continue to provide the relay service to the first terminal device, or before the first terminal device reselects a terminal device that can provide the relay service; and the first terminal device stops the second timer when the first terminal device selects the third terminal device, when the first terminal device completes establishment of a connection to the third terminal device, or when the first terminal device obtains an identifier of a serving cell of the third terminal device. When initiating RRC reestablishment through a terminal device (a new terminal device or the second terminal device), the terminal device may start the second timer. If the first terminal device selects a suitable terminal device (for example, the third terminal device) before the second timer expires, the first terminal device may stop the second timer. If the first terminal device does not select a suitable terminal device when the second timer expires, the first terminal device may stop selecting a terminal device. For example, the first terminal device may enter an RRC idle mode, or the first terminal device may initiate RRC reestablishment through a Uu interface. A terminal device selection time of the first terminal device may be effectively controlled by using the second timer, to increase a success rate of RRC reestablishment.

With reference to the eighth optional implementation of the first aspect, in a ninth optional implementation of the first aspect, that the first terminal device initiates RRC reestablishment in a first manner includes: The first terminal device establishes an SL RLC bearer of a first SRB; the first terminal device sends an RRC reestablishment request message to a second network device through the third terminal device, where the second network device is a network device accessed by the third terminal device; and the first terminal device receives an RRC reestablishment message from the second network device through the third terminal device, where the RRC reestablishment message is transmitted on the first SRB. If the first terminal device initiates RRC reestablishment through the third terminal device, the first terminal device may communicate with the second network device through the third terminal device.

With reference to the first aspect, the first optional implementation of the first aspect, or the second optional implementation of the first aspect, in a tenth optional implementation of the first aspect, when the first manner is the manner of initiating RRC reestablishment through a new terminal device, the method further includes: The first terminal device starts a first timer, where the first timer is stopped when the first terminal device selects a cell, or is stopped when the first terminal device selects a new terminal device that can provide the relay service; the first timer is stopped when the first terminal device selects a cell, or is stopped when the first terminal device completes establishment of a connection to a new terminal device that can provide the relay service; or the first timer is stopped when the first terminal device selects a cell, or is stopped when the first terminal device obtains an identifier of a serving cell of a new terminal device that is selected by the first terminal device and that can provide the relay service; and the first terminal device reselects a terminal device that can provide the relay service, and the first terminal device stops the first timer when selecting the third terminal device; the first terminal device reselects a terminal device that can provide the relay service, and the first terminal device stops the first timer when selecting the third terminal device and establishing a connection to the third terminal device; or the first terminal device reselects a terminal device that can provide the relay service, and the first terminal device stops the first timer when selecting the third terminal device and obtaining an identifier of a serving cell of the third terminal device. In this manner, both a cell selection process and a terminal device selection process may be performed by the terminal device. The terminal device may initiate RRC reestablishment in a manner that first succeeds (for example, if the terminal device first selects a suitable cell, it is considered that the cell selection process is successful, or if the terminal device first selects a suitable terminal device, it is considered that the terminal device selection process is successful), to further reduce a delay in RRC reestablishment.

With reference to the tenth optional implementation of the first aspect, in an eleventh optional implementation of the first aspect, that the first terminal device starts a first timer includes: The first terminal device starts the first timer when initiating RRC reestablishment in the first manner; the first terminal device starts the first timer when determining that the second terminal device cannot continue to provide the relay service to the first terminal device; or the first terminal device starts the first timer after initiating RRC reestablishment in the first manner and before reselecting the terminal device that can provide the relay service.

With reference to the first aspect, the first optional implementation of the first aspect, the second optional implementation of the first aspect, or any one of the eighth optional implementation of the first aspect to the eleventh optional implementation of the first aspect, in a twelfth optional implementation of the first aspect, when the first manner is the manner of initiating RRC reestablishment through a new terminal device, the method further includes: The first terminal device sends data of a second SRB to the third terminal device, where the second SRB is an SRB between the first terminal device and the second network device, the second network device is a network device accessed by the third terminal device, and the third terminal device is a new terminal device selected by the first terminal device; the third terminal device receives the data of the second SRB from the first terminal device; the third terminal device establishes or reestablishes an RLC bearer corresponding to the first SRB of the first terminal device, where the RLC bearer of the first SRB includes a first RLC bearer between the first terminal device and the third terminal device and a second RLC bearer between the first terminal device and the second network device, and the first SRB is an SRB between the first terminal device and the second network device; the third terminal device sends the data of the second SRB to the second network device; the third terminal device receives data of the first SRB from the second network device through the second RLC bearer; and the third terminal device sends the data of the first SRB to the first terminal device through the first RLC bearer. If the first terminal device initiates RRC reestablishment through the third terminal device, the third terminal device may establish or reestablish the RLC bearer corresponding to the first SRB of the first terminal device, to forward information between the first terminal device and the second network device through the RLC bearer. The first SRB is, for example, an SRB 1, or may be another SRB. The second SRB is, for example, an SRB 0, or may be another SRB. In this implementation, the third terminal device may also belong to the first communication system.

With reference to the twelfth optional implementation of the first aspect, in a thirteenth optional implementation of the first aspect, that the third terminal device establishes or reestablishes an RLC bearer corresponding to the first SRB of the first terminal device includes: The third terminal device receives the data of the second SRB from the first terminal device, and the third terminal device establishes or reestablishes the RLC bearer of the first SRB; the third terminal device receives first indication information from the second network device, and the third terminal device establishes or reestablishes the RLC bearer of the first SRB, where the first indication information is used to indicate to establish the RLC bearer of the first SRB, indicate to receive the data of the first SRB that is sent by the second network device to the first terminal device, indicate to receive the RRC reestablishment message sent by the second network device to the first terminal device, or indicate that the first terminal device sends the RRC reestablishment request message through the third terminal device; or the third terminal device receives second indication information from the first terminal device, and the third terminal device establishes or reestablishes the RLC bearer of the first SRB, where the second indication information is used to indicate to establish the RLC bearer of the first SRB, indicate to receive the data of the first SRB that is sent by the second network device to the first terminal device, indicate to receive the RRC reestablishment message sent by the second network device to the first terminal device, or indicate that the first terminal device sends the RRC reestablishment request message through the third terminal device. The third terminal device may establish or reestablish, based on different trigger conditions, the RLC bearer corresponding to the first SRB of the first terminal device. For example, in a trigger manner, if the third terminal device receives the data of the second SRB from the first terminal device, neither the first terminal device nor another device needs to specially trigger the third terminal device. In this case, the first terminal device needs to send only the data of the second SRB to the third terminal device, and the third terminal device knows that the RLC bearer corresponding to the first SRB of the first terminal device needs to be established or reestablished. Therefore, signaling overheads can be reduced. Alternatively, the second network device or the first terminal device may indicate the third terminal device by using the indication information. In this way, the third terminal device can more clearly know when to establish or reestablish the RLC bearer corresponding to the first SRB of the first terminal device. In this implementation, the third terminal device may also belong to the first communication system.

With reference to the first aspect, the first optional implementation of the first aspect, or the second optional implementation of the first aspect, in a fourteenth optional implementation of the first aspect, when the first manner is the manner of initiating RRC reestablishment through the second terminal device, the method further includes: The second terminal device detects an RLF between the second terminal device and the first network device; and the second terminal device initiates RRC reestablishment. For example, the first terminal device or the second terminal device may first find that the second terminal device cannot continue to provide the relay service to the first terminal device. For example, if the second terminal device detects the RLF between the second terminal device and the first network device, the second terminal device may determine that the second terminal device cannot continue to provide the relay service to the first terminal device. This makes the solution in this embodiment of this application more flexible.

With reference to the fourteenth optional implementation of the first aspect, in a fifteenth optional implementation of the first aspect, the method further includes: The second terminal device sends third indication information to the first terminal device, where the third indication information is used to indicate to perform RRC reestablishment, or is used to indicate that an RLF occurs on the second terminal device. If the second terminal device determines that the second terminal device cannot continue to provide the relay service to the first terminal device, the second terminal device may notify the first terminal device in a timely manner, so that the first terminal device can take a corresponding measure as soon as possible, to reduce a probability that the service of the first terminal device is interrupted.

With reference to the fifteenth optional implementation of the first aspect, in a sixteenth optional implementation of the first aspect, that the first terminal device determines that the second terminal device cannot continue to provide a relay service to the first terminal device includes: The first terminal device determines, based on the third indication information, that the second terminal device cannot continue to provide the relay service to the first terminal device. If the second terminal device first finds that the second terminal device cannot provide the relay service to the first terminal device, the second terminal device may notify the first terminal device by using the third indication information, and the first terminal device may determine, based on the third indication information, that the second terminal device cannot continue to provide the relay service to the first terminal device.

With reference to the sixteenth optional implementation of the first aspect, in a seventeenth optional implementation of the first aspect, the method further includes: The first terminal device starts a fifth timer after receiving the third indication information; and when the fifth timer expires, if the first terminal device does not receive an identifier of a second cell from the second terminal device, the first terminal device enters an RRC idle mode; or before the fifth timer expires, if the first terminal device receives an identifier of a second cell from the second terminal device, the first terminal device disables the fifth timer, where the second cell is a cell selected by the second terminal device. If an RLF occurs between the second terminal device and the network, the second terminal device initiates RRC reestablishment. However, the second terminal device may successfully perform RRC reestablishment, or may fail to perform RRC reestablishment. In this implementation, after receiving the third indication information, the first terminal device may start the fifth timer. If the first terminal device does not receive the identifier of the second cell from the second terminal device when the fifth timer expires, an RRC reestablishment process performed by the second terminal device may fail, and the first terminal device may independently enter the RRC idle mode, the first terminal device may reselect a terminal device to initiate RRC reestablishment, or the first terminal device may initiate RRC reestablishment through a Uu interface. The fifth timer is used, so that the first terminal device can take a corresponding measure in a timely manner, to reduce a probability that the service of the first terminal device is interrupted. In addition, when the fifth timer is used, the second terminal device does not need to notify the first terminal device of information about whether the RRC reestablishment succeeds. Therefore, signaling overheads are reduced.

With reference to any one of the fourteenth optional implementation of the first aspect to the seventeenth optional implementation of the first aspect, in an eighteenth optional implementation of the first aspect, the method further includes: The second terminal device sends the identifier of the second cell to the first terminal device after completing RRC reestablishment; or the second terminal device sends the identifier of the second cell to the first terminal device when selecting the second cell, where the second cell is a cell selected by the second terminal device by initiating RRC reestablishment. If the second terminal device selects a suitable cell (for example, the second cell) by initiating RRC reestablishment, the second terminal device may send the identifier of the second cell to the first terminal device, so that the first terminal device calculates shortMAC-I that needs to be carried in an RRC reestablishment request message.

With reference to the eighteenth optional implementation of the first aspect, in a nineteenth optional implementation of the first aspect, after the second terminal device initiates RRC reestablishment, the method further includes: The second terminal device sends fourth indication information to the first terminal device if the second terminal device does not select a cell, where the fourth indication information is used to indicate that the RRC reestablishment fails, or indicate to release the connection to the first terminal device; and after receiving the fourth indication information, the first terminal device enters the RRC idle mode, initiates RRC reestablishment by selecting a new terminal device, or initiates RRC reestablishment through a Uu interface. If the second terminal device does not select a suitable cell, the second terminal device may send the fourth indication information to the first terminal device, to indicate that the RRC reestablishment fails, so that the first terminal device can take a corresponding measure in a timely manner, to reduce a probability that the service of the first terminal device is interrupted.

With reference to the fifteenth optional implementation of the first aspect or the sixteenth optional implementation of the first aspect, in a twentieth optional implementation of the first aspect, the method further includes: The first terminal device sends fifth indication information to the second terminal device, where the fifth indication information is used to indicate that RRC reestablishment is not to be performed through the second terminal device, or indicate to release the connection to the second terminal device. If receiving the third indication information, the first terminal device may send the fifth indication information to the second terminal device, to respond to the third indication information.

With reference to the fourteenth optional implementation of the first aspect, in a twenty-first optional implementation of the first aspect, the method further includes: The second terminal device skips providing the relay service before selecting a suitable cell in an RRC reestablishment process or before completing RRC reestablishment. If a terminal device establishes a connection to the second terminal device that is undergoing an RLF or is performing the RRC reestablishment process, the terminal device possibly cannot immediately transmit data through the second terminal device, or cannot be connected to a network device through the second terminal device, which causes a relatively high delay to a service of the terminal device. However, in the technical solution in this embodiment of this application, the problem can be resolved, so that another terminal device can select a more suitable terminal device as soon as possible to provide the relay service, to reduce a service interruption time of the terminal device.

With reference to the twenty-first optional implementation of the first aspect, in a twenty-second optional implementation of the first aspect, that the second terminal device skips providing the relay service includes: The second terminal device skips sending a discovery message related to the relay service, or refuses to establish a connection to a terminal device that requests to provide the relay service. For example, a terminal device having a capability of providing the relay service may send a discovery message. The discovery message may include information related to the relay service, for example, may indicate that the terminal device that sends the discovery message can provide the relay service. In this case, in this embodiment of this application, before selecting a suitable cell or before completing the RRC reestablishment process, the second terminal device skips sending the discovery message related to the relay service.

With reference to the twenty-first optional implementation of the first aspect, in a twenty-third optional implementation of the first aspect, that the second terminal device skips providing the relay service includes: The second terminal device sends sixth indication information to the first terminal device, where the sixth indication information is used to indicate that the second terminal device is in an RLF state, indicate that the second terminal device is performing RRC reestablishment, or indicate that a connection between the second terminal device and the first network device is unavailable. The second terminal device may actively send the sixth indication information, so that the first terminal device can learn, in a timely manner, that the network device temporarily cannot be accessed through the second terminal device.

With reference to the twenty-third optional implementation of the first aspect, in a twenty-fourth optional implementation of the first aspect, the sixth indication information is included in a first message, and the first message is a discovery message or a message used to establish a connection between terminal devices. Alternatively, the sixth indication information may be included in another message.

With reference to the twenty-first optional implementation of the first aspect, in a twenty-fifth optional implementation of the first aspect, that the second terminal device skips providing the relay service includes: The second terminal device sends seventh indication information to the first terminal device, where the seventh indication information is used to indicate not to send a connection establishment request message, or indicate not to perform a PCS connection establishment process. The second terminal device may actively send the seventh indication information, so that the first terminal device can learn, in a timely manner, that a connection to the second terminal device temporarily cannot be established.

With reference to the twenty-fifth optional implementation of the first aspect, in a twenty-sixth optional implementation of the first aspect, the seventh indication information is included in a second message, and the second message is a discovery message or a message used to establish a connection between terminal devices. Alternatively, the seventh indication information may be included in another message.

With reference to the twenty-first optional implementation of the first aspect, in a twenty-seventh optional implementation of the first aspect, that the second terminal device skips providing the relay service includes: The second terminal device skips responding to a message that is from the first terminal device and that is used to establish a connection to the second terminal device. If the second terminal device skips responding to the message used to establish a connection, another terminal device cannot establish a connection to the second terminal device. In this manner, the second terminal device does not need to send indication information. Therefore, signaling overheads can be reduced.

With reference to the twenty-seventh optional implementation of the first aspect, in a twenty-eighth optional implementation of the first aspect, the method further includes: After selecting a new cell or completing RRC reestablishment, the second terminal device responds to the message that is from the first terminal device and that is used to establish a connection to the second terminal device. If the terminal device skips responding, before selecting a suitable cell in the RRC reestablishment process, to a message that is from another terminal device and that is used to establish a connection, the terminal device may respond to the message after completing RRC reestablishment or selecting a new cell, to establish a connection to the another terminal device, and the another terminal device does not need to send a message again, to reduce signaling overheads.

According to a second aspect, a second communication method is provided. The method may be performed by a terminal device, may be performed by a chip system, where the chip system can implement a function of a terminal device, or may be performed by a relatively large device including a terminal device. The method includes: A second terminal device receives shortMAC-I from a first terminal device; the second terminal device reestablishes an RLC bearer corresponding to a first SRB of the first terminal device, where the RLC bearer of the first SRB includes an RLC bearer between the first terminal device and the second terminal device and a second RLC bearer between the first terminal device and a second network device, and the second network device is a network device accessed by the second terminal device; the second terminal device sends an RRC reestablishment request message to the second network device, where the RRC reestablishment request message includes shortMAC-I; the second terminal device receives an RRC reestablishment message from the second network device through the second RLC bearer; and the second terminal device sends the RRC reestablishment message to the first terminal device through the first RLC bearer.

With reference to the second aspect, in a first optional implementation of the second aspect, that the second terminal device establishes or reestablishes an RLC bearer corresponding to a first SRB of the first terminal device includes: The second terminal device receives data of a second SRB from the first terminal device, and the second terminal device establishes or reestablishes the RLC bearer of the first SRB; the second terminal device receives first indication information from the second network device, and the second terminal device establishes or reestablishes the RLC bearer of the first SRB, where the first indication information is used to indicate to establish the RLC bearer of the first SRB, indicate to receive data of the first SRB that is sent by the second network device to the first terminal device, indicate to receive the RRC reestablishment message sent by the second network device to the first terminal device, or indicate that the first terminal device sends the RRC reestablishment request message through the second terminal device; or the second terminal device receives second indication information from the first terminal device, and the second terminal device establishes or reestablishes the RLC bearer of the first SRB, where the second indication information is used to indicate to establish the RLC bearer of the first SRB, indicate to receive data of the first SRB that is sent by the second network device to the first terminal device, indicate to receive the RRC reestablishment message sent by the second network device to the first terminal device, or indicate that the first terminal device sends the RRC reestablishment request message through the second terminal device.

For technical effects brought by the second aspect or the optional implementations of the second aspect, refer to the description of the technical effects brought by the first aspect or the corresponding implementations.

According to a third aspect, a third communication method is provided. The method may be performed by a terminal device, may be performed by a chip system, where the chip system can implement a function of a terminal device, or may be performed by a relatively large device including a terminal device. The method includes: A first terminal device communicates with a first network device through a second terminal device, where the second terminal device provides a relay service to the first terminal device; the first terminal device determines that the second terminal device cannot continue to provide the relay service to the first terminal device; and the first terminal device enters an RRC idle mode, where that the first terminal device determines that the second terminal device cannot continue to provide the relay service to the first terminal device includes one or more of the following: The first terminal device detects an SL RLF between the first terminal device and the second terminal device; a first protocol layer in the first terminal device requests to release a connection between the first terminal device and the second terminal device; or a connection between the first terminal device and the second terminal device is released.

If the first terminal device determines that the second terminal device cannot continue to provide the relay service to the first terminal device, the first terminal device may release the connection to the second terminal device, and return to the RRC idle mode. This is easy to implement, and can reduce power consumption. After returning to the RRC idle mode, the first terminal device may reestablish an RRC connection to the network device, or may reselect a terminal device, to resume a service of the first terminal device.

According to a fourth aspect, a fourth communication method is provided. The method may be performed by a terminal device, may be performed by a chip system, where the chip system can implement a function of a terminal device, or may be performed by a relatively large device including a terminal device. The method includes: A second terminal device detects an RLF between the second terminal device and a first network device; the second terminal device initiates RRC reestablishment; and the second terminal device skips providing a relay service before selecting a suitable cell in an RRC reestablishment process or before completing RRC reestablishment.

With reference to the fourth aspect, in a first optional implementation of the fourth aspect, that the second terminal device skips providing a relay service includes: The second terminal device skips sending a discovery message related to the relay service, or refuses to establish a connection to a terminal device that requests to provide the relay service.

With reference to the fourth aspect, in a second optional implementation of the fourth aspect, that the second terminal device skips providing a relay service includes: The second terminal device sends sixth indication information to a first terminal device, where the sixth indication information is used to indicate that the second terminal device is in an RLF state, indicate that the second terminal device is performing RRC reestablishment, or indicate that a connection between the second terminal device and the first network device is unavailable.

With reference to the second optional implementation of the fourth aspect, in a third optional implementation of the fourth aspect, the sixth indication information is included in a first message, and the first message is a discovery message or a message used to establish a connection between terminal devices.

With reference to the fourth aspect, in a fourth optional implementation of the fourth aspect, that the second terminal device skips providing a relay service includes: The second terminal device sends seventh indication information to a first terminal device, where the seventh indication information is used to indicate not to send a connection establishment request message, or indicate not to perform a PCS connection establishment process.

With reference to the fourth optional implementation of the fourth aspect, in a fifth optional implementation of the fourth aspect, the seventh indication information is included in a second message, and the second message is a discovery message or a message used to establish a connection between terminal devices.

With reference to the fourth aspect, in a sixth optional implementation of the fourth aspect, that the second terminal device skips providing a relay service includes: The second terminal device skips responding to a message that is from a first terminal device and that is used to establish a connection to the second terminal device.

With reference to the sixth optional implementation of the fourth aspect, in a seventh optional implementation of the fourth aspect, the method further includes: After selecting a new cell or completing RRC reestablishment, the second terminal device responds to the message that is from the first terminal device and that is used to establish a connection to the second terminal device.

For technical effects brought by the fourth aspect or the optional implementations of the fourth aspect, refer to the description of the technical effects brought by the first aspect or the corresponding implementations.

According to a fifth aspect, a communication system is provided, for example, is referred to as a first communication system. The first communication system may include the first terminal device according to the first aspect, include an electronic device (for example, a chip system) disposed in the first terminal device, or include a relatively large device including the first terminal device. In addition, the first communication system further includes the second terminal device according to the first aspect, includes an electronic device (for example, a chip system) disposed in the second terminal device, or includes a relatively large device including the second terminal device. Optionally, the first communication system may further include the third terminal device according to the first aspect, include an electronic device (for example, a chip system) disposed in the third terminal device, or include a relatively large device including the third terminal device. The first terminal device and/or the second terminal device include/includes a corresponding means (means) or module for performing the foregoing method.

For example, the first terminal device is configured to initiate RRC reestablishment in a first manner when determining that the second terminal device cannot continue to provide a relay service to the first terminal device, where the first manner is determined based on first information, and the first manner is a manner of initiating RRC reestablishment through a Uu interface, a manner of initiating RRC reestablishment through a new terminal device, or a manner of initiating RRC reestablishment through the second terminal device; and
the first terminal device is further configured to receive the first information from a first network device through the second terminal device, where the first information is used to indicate to initiate RRC reestablishment through a Uu interface, indicate to initiate RRC reestablishment through a new terminal device, or indicate to initiate RRC reestablishment through the second terminal device; or
the first information includes RSRP of a cell selected by the first terminal device and/or RSRP of a third terminal device selected by the first terminal device.

According to a sixth aspect, a communication apparatus is provided. The communication apparatus may be the second terminal device according to the second aspect, an electronic device (for example, a chip system) disposed in the second terminal device, or a relatively large device including the second terminal device. The communication apparatus includes a corresponding means (means) or module configured to perform the foregoing method. For example, the communication apparatus includes a processing unit (which is also referred to as a processing module sometimes) and a transceiver unit (which is also referred to as a transceiver module sometimes).

For example, the transceiver unit is configured to receive shortMAC-I from a first terminal device;
the processing unit is configured to reestablish an RLC bearer corresponding to a first SRB of the first terminal device, where the RLC bearer of the first SRB includes an RLC bearer between the first terminal device and the second terminal device and a second RLC bearer between the first terminal device and a second network device, and the second network device is a network device accessed by the second terminal device;
the transceiver unit is further configured to send an RRC reestablishment request message to the second network device, where the RRC reestablishment request message includes shortMAC-I;
the transceiver unit is further configured to receive an RRC reestablishment message from the second network device through the second RLC bearer; and
the transceiver unit is further configured to send the RRC reestablishment message to the first terminal device through the first RLC bearer.

For another example, the communication apparatus includes a processor. The processor is coupled to a memory, and is configured to execute instructions in the memory, to implement the method performed by the second terminal device according to the second aspect. Optionally, the communication apparatus further includes other components such as an antenna, an input/output module, and an interface. These components may be hardware, software, or a combination of software and hardware.

According to a seventh aspect, a communication apparatus is provided. The communication apparatus may be the first terminal device according to the third aspect, an electronic device (for example, a chip system) disposed in the first terminal device, or a relatively large device including the first terminal device. The communication apparatus includes a corresponding means (means) or module configured to perform the foregoing method. For example, the communication apparatus includes a processing unit (which is also referred to as a processing module sometimes) and a transceiver unit (which is also referred to as a transceiver module sometimes).

For example, the transceiver unit is configured to communicate with a first network device through a second terminal device, where the second terminal device provides a relay service to the first terminal device;
the processing unit is configured to determine that the second terminal device cannot continue to provide the relay service to the first terminal device; and
the processing unit is configured to enable the first terminal device to enter an RRC idle mode, where the processing unit is configured to determine, by using one or more of the following, that the second terminal device cannot continue to provide the relay service to the first terminal device:

An SL RLF between the first terminal device and the second terminal device is detected;
a first protocol layer in the first terminal device requests to release a connection between the first terminal device and the second terminal device; or
a connection to the second terminal device is released.

For another example, the communication apparatus includes a processor. The processor is coupled to a memory, and is configured to execute instructions in the memory, to implement the method performed by the first terminal device according to the third aspect. Optionally, the communication apparatus further includes other components such as an antenna, an input/output module, and an interface. These components may be hardware, software, or a combination of software and hardware.

According to an eighth aspect, a communication apparatus is provided. The communication apparatus may be the second terminal device according to the fourth aspect, an electronic device (for example, a chip system) disposed in the second terminal device, or a relatively large device including the second terminal device. The communication apparatus includes a corresponding means (means) or module configured to perform the foregoing method. For example, the communication apparatus includes a processing unit (which is also referred to as a processing module sometimes) and a transceiver unit (which is also referred to as a transceiver module sometimes).

For example, the processing unit is configured to detect an RLF between the second network device and a first network device;
the processing unit is further configured to initiate RRC reestablishment (or the processing unit is further configured to use the transceiver unit); and
the processing unit is further configured to skip providing a relay service before selecting a suitable cell in an RRC reestablishment process or before completing RRC reestablishment.

For another example, the communication apparatus includes a processor. The processor is coupled to a memory, and is configured to execute instructions in the memory, to implement the method performed by the second terminal device according to the fourth aspect. Optionally, the communication apparatus further includes other components such as an antenna, an input/output module, and an interface. These components may be hardware, software, or a combination of software and hardware.

According to a ninth aspect, a computer-readable storage medium is provided. The computer-readable storage medium is configured to store a computer program or instructions. When the computer program/the instructions is/are run, the method performed by the terminal device or the network device according to the foregoing aspects is implemented.

According to a tenth aspect, a computer program product including instructions is provided. When the computer program product is run on a computer, the methods according to the foregoing aspects are implemented.

In embodiments of this application, the first terminal device may select a manner of initiating RRC reestablishment, so that the manner of initiating RRC reestablishment by the first terminal device is more flexible. In addition, for example, the first terminal device may select, based on a factor such as network quality, a relatively good manner to initiate RRC reestablishment. This increases a success rate of RRC reestablishment, improves service continuity of the first terminal device, and reduces a packet loss caused due to service discontinuity.

### BRIEF DESCRIPTION OF DRAWINGS

FIG. 1 is a schematic diagram of a scenario in which remote UE is connected to a network through relay UE;
FIG. 2A and FIG. 2B are two schematic diagrams of a control plane protocol stack architecture in a layer 2 relay technology;
FIG. 3A and FIG. 3B are schematic diagrams of two application scenarios according to an embodiment of this application;
FIG. 4 to FIG. 17 are flowcharts of a plurality of communication methods according to an embodiment of this application;
FIG. 18 is a schematic block diagram of a communication apparatus according to an embodiment of this application; and
FIG. 19 is a schematic block diagram of a terminal device according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

Some terms or concepts in embodiments of this application are explained and described below, to facilitate understanding by a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to be connected to a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communications (machine-to-machine/machine-type communications, M2M/MTC), an internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable scenario, smart transportation, a smart city (smart city), an unmanned aerial vehicle, and a robot. The terminal device may be sometimes referred to as user equipment (user equipment, UE), a terminal, an access station, a UE station, a remote station, a wireless communication device, a user apparatus, or the like. For ease of description, in embodiments of this application, descriptions are provided by using an example in which the terminal device is UE.

When a terminal device is relatively far away from a network device (for example, not located within a coverage area of the network device), a terminal device is located at a coverage edge of a network device, quality of a link between a terminal device and a network device is relatively poor, a terminal device cannot be directly served by a network device, a terminal device is not provided with a Uu interface, a terminal device has a relatively low battery level, a terminal device is in an energy saving mode, a terminal device is expected to reduce power consumption, or the like, the terminal device may communicate with the network device through a relay terminal device (UE-to-Network Relay UE). In embodiments of this application, the relay terminal device may also be referred to as relay user equipment (relay UE), and the relay terminal device may be a terminal device that provides network access to a remote (remote) terminal device; and the remote terminal device may also be referred to as remote user equipment (remote UE). That is, the remote UE is UE that needs other UE to provide a relay service to access a network; and the relay UE is UE that provides a relay service to other UE. That the relay UE provides a relay service to the remote UE may be understood as that information sent by the remote UE to the network device is forwarded to the network device through the relay UE, and information sent by the network device to the remote UE is also forwarded to the remote UE through the relay UE.

The network device in embodiments of this application includes, for example, an access network device and/or a core network device. The access network device is a device having a wireless transceiver function, and is configured to communicate with the terminal device. The access network device includes but is not limited to a base station (BTS, NodeB, eNodeB/eNB, or gNodeB/gNB) or a transmission reception point (transmission reception point, TRP) in the foregoing communication system, a base station in subsequent evolution of the 3rd generation partnership project (3rd generation partnership project, 3GPP), or an access node, a wireless relay node, a wireless backhaul node, or the like in a wireless fidelity (wireless fidelity, Wi-Fi) system. The base station may be a macro base station, a micro base station, a picocell base station, a small cell, a relay station, or the like. A plurality of base stations may support the foregoing networks using a same access technology, or may support the foregoing networks using different access technologies. The base station may include one or more co-site or non-co-site transmission reception points. The network device may alternatively be a radio controller, a centralized unit (centralized unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in a vehicle-to-everything (vehicle-to-everything, V2X) technology may be a roadside unit (roadside unit, RSU). Descriptions are provided below by using an example in which the access network device is a base station. The base station may communicate with a terminal device, or may communicate with a terminal device through a relay station. The terminal device may communicate with a plurality of base stations in different access technologies. The core network device is configured to implement functions such as mobility management, data processing, session management, and policy and charging. Names of devices implementing a core network function in systems of different access technologies may be different. This is not limited in embodiments of this application. A 5G system is used as an example. In this case, the core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of a network device may be the network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

Cellular network-based device-to-device (device-to-device, D2D) communication, also referred to as a proximity service (proximity service, ProSe) in the 3rd generation partnership project (the 3rd generation partnership project, 3GPP), is a technology in which terminal devices directly communicate with each other under control of a network. Cellular network-based device-to-device communication can improve spectral efficiency of a cellular communication system, reduce transmit power of the terminal device, and resolve a problem of a lack of spectrum resources in a wireless communication system to some extent.

Proximity service direct communication (ProSe Direct Communication) means that two or more adjacent ProSe-enabled UEs directly communicate with each other without using any network node. Proximity service direct communication may be implemented by using a sidelink communication (sidelink communication) access layer function.

5G ProSe direct communication means that two or more adjacent ProSe-enabled UEs directly communicate with each other without using any network node but by using an NR technology.

A ProSe UE-to-network relay (which is briefly referred to as relay UE below) or a 5G ProSe UE-to-network relay is UE that provides a function of supporting remote UE in being connected to a network.

Sidelink communication means that two or more adjacent UEs directly communicate with each other without using any network node.

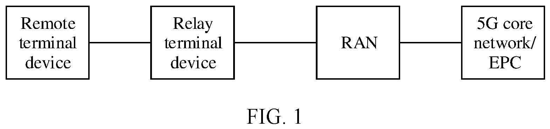

For example, FIG. 1 is a schematic diagram of a scenario in which remote UE is connected to a network through relay UE. In FIG. 1, an example in which a core network accessed by the relay UE is a 5G core network (5G core, 5GC) or an evolved packet core network (evolved packet core, EPC) is used. NR sidelink communication or sidelink communication may be used between the remote UE and the relay UE on a PC5 interface. The remote UE is connected to the relay UE through the PC5 interface, and the relay UE is connected to a radio access network (radio access network, RAN) through a Uu interface.

SL transmission is performed between a source (source)-destination (destination) pair. A source may be identified by a source layer-2 (source layer-2) identity number (ID), and a destination may be identified by a destination layer-2 ID. The source layer-2 ID may be used to identify a transmit end (transmit end) of data in SL communication, and the destination layer-2 ID may be used to identify a target (target) end or a receive end of data in SL communication. The transmit end refers to a source of SL communication (or a media access control (media access control, MAC) protocol data unit (protocol data unit, PDU)), and the receive end refers to a destination of SL communication (or a MAC PDU).

NR sidelink communication is an access layer function that enables vehicle-to-everything (vehicle-to-everything, V2X) communication between two or more UEs, uses an NR technology, and does not use any network node. NR sidelink communication may further enable 5G ProSe direct communication.

A PCS reference point/interface is a reference point/interface between UEs.

A Uu reference point/interface is a reference point/interface between UE and a radio access network (for example, a next generation (next generation, NG)-RAN, or an evolved universal mobile telecommunications system terrestrial radio access network (evolved universal mobile telecommunications system terrestrial radio access network, E-UTRAN)).

A PCS-radio resource control (radio resource control, RRC) connection is a logical connection between two UEs in a source-destination pair. After a PCS unicast link (PCS unicast link) between two UEs is established, a corresponding PC5-RRC connection is established. The PC5-RRC connection is in a one-to-one correspondence with the PCS unicast link.

Currently, UE relay technologies include a layer 2 relay technology and a layer 3 relay technology.

The layer 2 relay technology is also referred to as layer 2 UE-to-network relay (L2 UE-to-Network Relay). In the layer 2 relay technology, the remote UE may establish an RRC connection to a base station through the relay UE, and the remote UE is controlled by a serving cell of the relay UE.

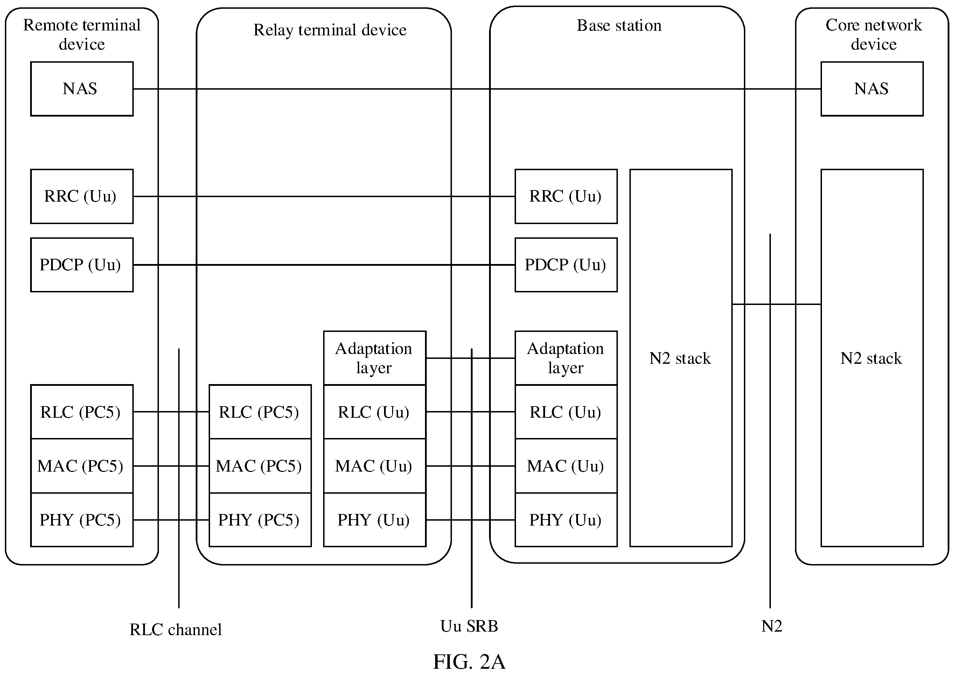

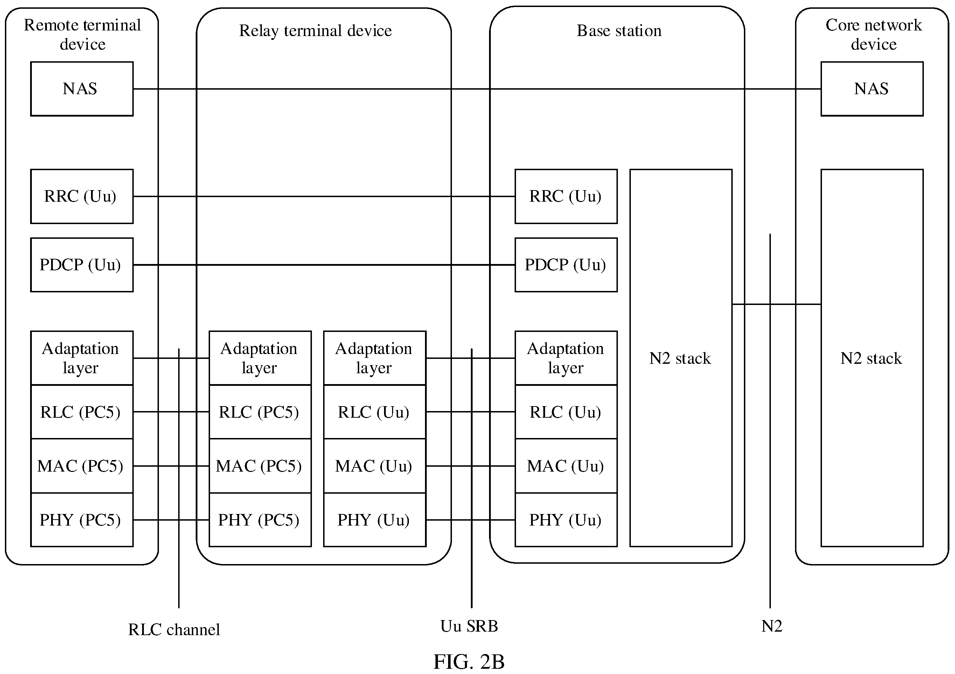

FIG. 2A and FIG. 2B are two schematic diagrams of a control plane protocol stack architecture in layer 2 UE-to-network relay. Control plane data between a remote terminal device and a radio access network device is forwarded by a relay terminal device at a radio link control (radio link control, RLC) layer or an adaptation layer. For a service data adaptation protocol (service data adaptation protocol, SDAP) layer, a packet data convergence protocol (packet data convergence protocol, PDCP) layer, and an RRC layer on a Uu interface of the remote terminal device, an end-to-end connection is established between the remote terminal device and the radio access network device. For an RLC layer, a MAC layer, and a physical (PHY) layer, an end-to-end connection is established between the remote terminal device and the relay terminal device and between the relay terminal device and the radio access network device. After each of the relay terminal device and the remote terminal device establish a corresponding RLC entity and logical channel, and each of the relay terminal device and the radio access network device establish a corresponding RLC entity and logical channel, control signaling may be transmitted between the remote terminal device and the radio access network device. A Uu radio bearer (radio bearer, RB) of the remote terminal device is transmitted through an RLC bearer between the remote terminal device and the relay terminal device and an RLC bearer between the relay terminal device and the access network device. The adaptation layer on the Uu interface is used to identify the remote terminal device and the Uu RB of the remote terminal device. In FIG. 2A, a PCS interface does not support an adaptation (adapt) layer, but in FIG. 2B, a PCS interface can support an adaptation layer. An RLC channel in FIG. 2A or FIG. 2B is an RLC channel.

The Uu RB is an RB between the UE and the access network device. The Uu RB of the remote terminal device described in this specification may also be referred to as an end-to-end radio bearer of the remote terminal device. At an access layer, an RB defines a data packet processing manner, and an RB provides services to data packets in a same data packet processing manner. RBs are classified into a signaling radio bearer (signaling radio bearer, SRB) and a data radio bearer (data radio bearer, DRB). The SRB is used to transmit control plane data, and may be further used to transmit an RRC message, a non-access stratum (non-access stratum, NAS) message, and the like. The DRB is used to transmit user plane data. A PDCP sub-layer provides an RB to an SDAP sub-layer.

The layer 3 relay technology is also referred to as layer 3 UE-to-network relay (L3 UE-to-Network Relay). In the layer 3 relay technology, a relay terminal device performs relay based on an internet protocol (internet protocol, IP) layer. There is no peer protocol layer between a base station and a remote terminal device. Therefore, an access network device cannot sense existence of the remote terminal device, and can sense existence only of the relay terminal device. That is, when information sent by the remote terminal device arrives at the access network device, the access network device does not parse the information, and directly forwards the information to a core network device. In this case, it may be considered that the remote terminal device communicates with the core network device through the relay terminal device.

In addition, an SL RLF is further used in embodiments of this application. The SL RLF is briefly described below.

Once a case 1 occurs, UE considers that an RLF between the UE and a destination is detected, and considers that a PC5-RRC connection to the destination is released. In this case, a physical layer in the UE may indicate, to an upper layer of an RRC layer in the UE, that the PC5-RRC connection to the destination is released (that is, the PCS connection is unavailable). In this case, if the UE is in an RRC connected (RRC_CONNECTED) mode, the UE sends a sidelink UE information NR (sidelink UE information NR) message to a base station. The message includes a sidelink failure list (sl-FailureList), and sl-FailureList includes one or more SL-Failure information elements (information elements, IEs). Each SL-Failure IE may include an SL destination identity IE (sl-DestinationIdentity IE) and sl-Failure, and sl-Failure included in the SL-Failure IE may be considered as an IE or information. Herein, sl-DestinationIdentity is used to indicate information about the destination of a unicast connection in which an SL failure occurs, and sl-Failure is used to indicate a cause for the SL failure. The UE may set a value of a sidelink destination identity (sl-DestinationIdentity) in SL-Failure IE to a destination identity of the destination, and may set a value of sl-Failure in the SL-Failure IE to RLF. That a value of sl-Failure is set to RLF may be used to indicate that the cause for the SL failure is that an SL RLF occurs.

The case 1 may be any one of the following four cases: 1. A maximum quantity of sidelink RLC retransmissions is reached for the destination of the UE. 2. A timer T400 for the destination expires. 3. A maximum quantity of consecutive hybrid automatic repeat request (hybrid automatic repeat request, HARQ) discontinuous transmissions (discontinuous transmission, DTX) is reached for the destination. 4. Integrity check of an SL-signaling radio bearer (signaling radio bearer, SRB) 2 or an SL-SRB 3 of the destination fails.

In embodiments of this application, unless otherwise specified, a quantity of nouns represents " a singular noun or a plural noun", that is, represents "one or more". "At least one" means one or more, and " a plurality of" means two or more. "And/Or" describes an association relationship between associated objects, and represents that three relationships may exist. For example, A and/or B may represent the following three cases: Only A exists, both A and B exist, and only B exists. A and B may be singular or plural. The character "/" usually indicates an "or" relationship between associated objects. For example, A/B indicates A or B. "At least one of the following items (pieces)" or a similar expression thereof refers to any combination of these items, including a single item (piece) or any combination of a plurality of items (pieces). For example, at least one of a, b, or c may represent a, b, c, a and b, a and c, b and c, or a, b, and c, where a, b, and c may be singular or plural.

Ordinal numerals such as "first" and "second" in embodiments of this application are used to distinguish between a plurality of objects, and are not used to limit sizes, content, a sequence, a time sequence, priorities, or importance of the plurality of objects. For example, a first RSRP threshold and a second RSRP threshold may be a same RSRP threshold or different RSRP thresholds. In addition, the names do not indicate that the two RSRP thresholds have different information amounts, values, priorities, importance, or the like. In addition, numbers for steps in embodiments described in this application are merely used to distinguish between different steps, and are not used to limit a sequence of the steps. For example, step S501 may be performed before step S502, may be performed after S502, or may be simultaneously performed with S502.

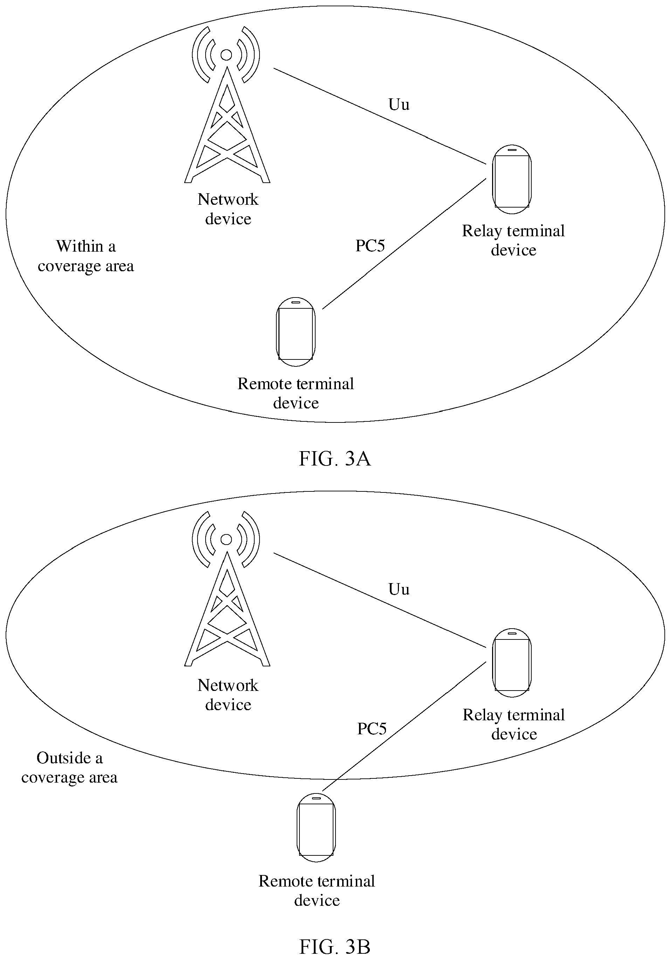

FIG. 3A is a schematic diagram of an application scenario according to an embodiment of this application. In FIG. 3A, a remote terminal device is connected to a relay terminal device, and the remote terminal device may communicate with a network device through the relay terminal device. FIG. 3B is a schematic diagram of another application scenario according to an embodiment of this application. In FIG. 3B, a remote terminal device is connected to a relay terminal device, and the remote terminal device may communicate with a network device through the relay terminal device. A difference between FIG. 3A and FIG. 3B lies in that in FIG. 3A, the remote terminal device is located within a coverage area (in-coverage), and in FIG. 3B, the remote terminal device is located outside a coverage area (out-of-coverage).

The network device in FIG. 3A or FIG. 3B is, for example, an access network device, and the access network device is, for example, a base station. The access network device corresponds to different devices in different systems. For example, the access network device may correspond to an eNB in a 4G system, and corresponds to an access network device, for example, a gNB, in a 5G system. Certainly, the technical solutions provided in embodiments of this application may also be applied to a future mobile communication system. Therefore, the network device in FIG. 3A or FIG. 3B may correspond to a network device in the future mobile communication system. In this embodiment of this application, an example in which the access network device is a base station is used. Actually, with reference to the foregoing description, the access network device may alternatively be a device such as an RSU.

A method provided in embodiments of this application is described below with reference to the accompanying drawings. In the accompanying drawings corresponding to embodiments of this application, all optional steps are represented by using dashed lines. In embodiments of this application, an RLC bearer is a low-layer part of a radio bearer, and an RLC bearer configuration is a low-layer part of a radio bearer configuration, and includes an RLC configuration and a logical channel configuration. Establishing an RLC bearer includes establishing an RLC entity and configuring a corresponding logical channel. Releasing an RLC bearer includes releasing an RLC entity and releasing a corresponding logical channel. In addition, for ease of understanding, remote UE and relay UE are used below for description. "Remote UE" described below may be replaced with a "first terminal device", "relay UE" or "relay UE 1" described below may be replaced with a second terminal device, and "new relay UE" or "relay UE 2" described below may be replaced with a third terminal device. All embodiments of this application are applicable to the control plane protocol stack architecture shown in FIG. 2A or FIG. 2B.

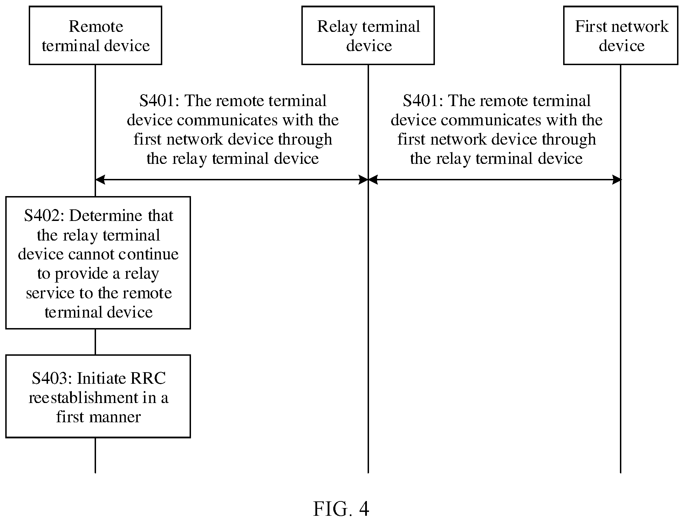

An embodiment of this application provides a first communication method. FIG. 4 is a flowchart of the method. If this embodiment of this application is applied to the network architecture shown in FIG. 3A, remote UE described below may be a remote terminal device in the network architecture shown in FIG. 3A, relay UE described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, remote UE described below may be a remote terminal device in the network architecture shown in FIG. 3B, relay UE described below may be a relay terminal device in the network architecture shown in FIG. 3B, and a first network device described below may be a network device in the network architecture shown in FIG. 3B.

S401: The remote UE communicates with the first network device through the relay UE.

For example, when the remote UE is relatively far away from the network device (for example, not located within a coverage area of the network device), the remote UE is located at a coverage edge of the network device, quality of a link between the remote UE and the network device is relatively poor, the remote UE cannot be directly served by the network device, the remote UE is not provided with a Uu interface, the remote UE has a relatively low battery level, the remote UE is in an energy saving mode, or the remote UE is expected to reduce power consumption, the remote UE may access a network through the relay UE, and the relay UE provides a relay service to the remote UE. The remote UE may establish an RRC connection to the first network device through the relay UE. When the remote UE is in an RRC connected mode, the remote UE may transmit data to the first network device through the relay UE.

For example, the remote UE may send first data to the relay UE, and the first data needs to be sent to the first network device. After receiving the first data from the remote UE, the relay UE sends the first data to the first network device. For another example, the first network device sends second data to the relay UE, and the second data needs to be sent to the remote UE. After receiving the second data from the first network device, the relay UE may send the second data to the remote UE. In this way, the remote UE implements communication with the first network device through the relay UE.

S402: The remote UE determines that the relay UE cannot continue to provide the relay service to the remote UE. In embodiments of this application, that the remote UE determines that the relay UE cannot continue to provide the relay service to the remote UE may also be understood as that the remote UE determines that a link between the remote UE and the first network device is faulty, the remote UE determines that there is a link failure, the remote UE determines that normal communication cannot be performed, or the remote UE determines that an RRC connection needs to be reestablished.

For example, if the remote UE detects an SL RLF between the remote UE and the relay UE, the remote UE determines that the relay UE cannot continue to provide the relay service to the remote UE. For another example, if a first protocol layer in the remote UE requests to release a connection between the remote UE and the relay UE, the remote UE may determine that the relay UE cannot continue to provide the relay service to the remote UE. For another example, if a connection between the remote UE and the relay UE is released, the remote UE may determine that the relay UE cannot continue to provide the relay service to the remote UE. For another example, if the relay UE detects a Uu RLF between the relay UE and the first network device, the relay UE may send third indication information to the remote UE. The third indication information may indicate to perform RRC reestablishment (in this case, the third indication information may also be referred to as RRC reestablishment indication information), or may indicate that an RLF occurs on the relay UE (in this case, the third indication information may also be referred to as RLF indication information). After receiving the third indication information, the remote UE may determine that the relay UE cannot continue to provide the relay service to the remote UE. For another example, if the relay UE detects a Uu RLF between the relay UE and the first network device, the relay UE may initiate RRC connection reestablishment. For example, the relay UE may perform cell selection. If the relay UE selects a suitable cell, the relay UE may send an identifier of the cell to the remote UE. After receiving the identifier of the cell, the remote UE may determine that the relay UE cannot continue to provide the relay service to the remote UE. The foregoing specific content is described in a corresponding embodiment below.

Alternatively, the remote UE may determine, in another manner, that the relay UE cannot continue to provide the relay service to the remote UE. The connection between the remote UE and the relay UE is, for example, a PC5-RRC connection or a PCS unicast link. The first protocol layer is, for example, a PC5-S layer, or may be another protocol layer in the remote UE.

S403: The remote UE initiates RRC reestablishment in a first manner.

The first manner is, for example, a manner of initiating RRC reestablishment through a Uu interface, a manner of initiating RRC reestablishment through new relay UE, or a manner of continuing to initiate RRC reestablishment through the relay UE. In embodiments of this application, the manner of initiating RRC connection reestablishment through a Uu interface means that the remote UE is directly connected to the network device, and is not connected to the network device through the relay UE. That is, an RB of the remote UE is transmitted through an RLC bearer between the remote UE and the network device. In embodiments of this application, the manner of initiating RRC connection reestablishment through new relay UE means that the remote UE is connected to the network device through the new relay UE, and the layer 2 relay protocol stack architecture shown in FIG. 2A or FIG. 2B may be used. An RB of the remote UE is transmitted through a sidelink RLC bearer between the remote UE and the new relay UE and an RLC bearer between the new relay UE and the network device. In embodiments of this application, the manner of initiating RRC connection reestablishment through the relay UE means that the remote UE is connected to the network device through the relay UE and the layer 2 relay protocol stack architecture shown in FIG. 2A or FIG. 2B is used. An RB of the remote UE is transmitted through a sidelink RLC bearer between the remote UE and the relay UE and an RLC bearer between the relay UE and the network device.

For example, if the remote UE detects the SL RLF between the remote UE and the relay UE, the first protocol layer in the remote UE requests to release the connection between the remote UE and the relay UE, or the connection between the remote UE and the relay UE is released, the remote UE may determine that the relay UE cannot continue to provide the relay service to the remote UE. In this case, the first manner is, for example, the manner of initiating RRC reestablishment through a Uu interface or the manner of initiating RRC reestablishment through new relay UE. For another example, if the relay UE detects the Uu RLF between the relay UE and the first network device, the relay UE may send the third indication information to the remote UE, and the remote UE may determine, based on the third indication information, that the relay UE cannot continue to provide the relay service to the remote UE. In this case, the first manner is, for example, the manner of initiating RRC reestablishment through a Uu interface, the manner of initiating RRC reestablishment through new relay UE, or the manner of continuing to initiate RRC reestablishment through the relay UE.

The first manner is, for example, determined based on first information. In an optional implementation, the first information may be specified in a protocol. For example, it is specified in the protocol that if the remote UE determines that the relay UE cannot continue to provide the relay service to the remote UE, the remote UE initiates RRC reestablishment through a Uu interface, initiates RRC reestablishment through new relay UE, or continues to initiate RRC reestablishment through the relay UE. That is, if the first information is specified in the protocol, the remote UE may not need to perform the step of determining the first manner. Correspondingly, actually, the first information may not be used in this embodiment of this application, and the remote UE only needs to perform a corresponding operation based on the protocol.

In another optional implementation, the first information may come from the network device. For example, in a process of communicating, by the remote UE, with the first network device through the relay UE, the first network device sends the first information to the remote UE through the relay UE. Correspondingly, the remote UE receives the first information from the first network device through the relay UE. The first information may indicate to initiate RRC reestablishment through a Uu interface, indicate to initiate RRC reestablishment through new relay UE, or indicate to initiate RRC reestablishment through the relay UE. In this case, the remote UE may determine the first manner based on the indication of the first information, and then initiate RRC reestablishment.

If either of the two manners is used for the first information, for example, if the remote UE determines, based on the third indication information, that the relay UE cannot continue to provide the relay service to the remote UE, after determining that the relay UE cannot continue to provide the relay service to the remote UE, the remote UE may initiate RRC reestablishment through a Uu interface, initiate RRC reestablishment through new relay UE, or continue to initiate RRC reestablishment through the relay UE. If the remote UE does not initiate RRC reestablishment through the relay UE (for example, the remote UE initiates RRC reestablishment through a Uu interface, or initiates RRC reestablishment through new relay UE), optionally, the remote UE may further send information to the relay UE. The information indicates, for example, not to perform RRC reestablishment through the relay UE, the information indicates, for example, to release the PCS unicast link between the remote UE and the relay UE, or the information indicates, for example, to release the PC5-RRC connection between the remote UE and the relay UE. After receiving the information, the relay UE can determine that the remote UE does not perform RRC reestablishment through the relay UE.

In still another optional implementation, the first information may be obtained by the remote UE. For example, the first information includes reference signal received power (reference signal received power, RSRP) of a cell selected by the remote UE, the first information includes RSRP of new relay UE selected by the remote UE, or the first information includes RSRP of a cell selected by the remote UE and RSRP of new relay UE selected by the remote UE. In embodiments of this application, the RSRP of the relay UE is, for example, SL-RSRP of the relay UE or RSRP corresponding to a discovery message from the relay UE.

For example, if the remote UE selects a suitable cell, and RSRP of the selected cell is less than or equal to a first RSRP threshold, but the remote UE does not select new relay UE, the first manner is the manner of performing RRC reestablishment through a Uu interface, and the remote UE may perform RRC reestablishment through the Uu interface. Alternatively, if the remote UE selects a suitable cell, and RSRP of the selected cell is less than or equal to a first RSRP threshold, the first manner is the manner of performing RRC reestablishment through a Uu interface, and the remote UE may perform RRC reestablishment through the Uu interface. Alternatively, if the remote UE selects a suitable cell, RSRP of the selected cell is less than or equal to a first RSRP threshold, and the remote UE selects new relay UE, the first manner is the manner of performing RRC reestablishment through new relay UE, and the remote UE may perform RRC reestablishment through the new relay UE. Alternatively, if the remote UE selects a suitable cell, but does not select new relay UE, the first manner is the manner of performing RRC reestablishment through a Uu interface, and the remote UE may perform RRC reestablishment through the Uu interface. Alternatively, if the remote UE selects a suitable cell, and RSRP of the selected cell is greater than a first RSRP threshold, the first manner is the manner of performing RRC reestablishment through a Uu interface, and the remote UE may perform RRC reestablishment through the Uu interface. Alternatively, if the remote UE selects a suitable cell, and the remote UE cannot serve as a remote terminal device, or the remote UE cannot communicate with a network through other UE, the first manner is the manner of performing RRC reestablishment through a Uu interface, and the remote UE may perform RRC reestablishment through the Uu interface.

For another example, if the remote UE selects new relay UE, and does not select a suitable cell, the first manner is the manner of performing RRC reestablishment through new relay UE, and the remote UE may perform RRC reestablishment through the new relay UE. Alternatively, if the remote UE selects new relay UE and a suitable cell, and a difference between RSRP of the selected cell and RSRP of the new relay UE is less than or equal to a first RSRP threshold, it indicates that there is relatively good signal quality if the remote UE performs RRC reestablishment through the new relay UE. In this case, the first manner is the manner of performing RRC reestablishment through new relay UE, and the remote UE may perform RRC reestablishment through the new relay UE.

For example, the first RSRP threshold may be specified in a protocol, or may be configured by the network device.

Alternatively, the first manner may not be determined based on the first information, but may be determined based on a process of selecting a cell and/or a process of selecting new relay UE by the remote UE. For example, if the remote UE determines that the relay UE cannot continue to provide the relay service to the remote UE, the remote UE may perform cell selection, and may select new relay UE. If the remote UE first selects a suitable cell, the first manner is the manner of initiating RRC reestablishment through a Uu interface. If the remote UE first selects new relay UE, the first manner is the manner of initiating RRC reestablishment through new relay UE. For another example, if the remote UE determines that the relay UE cannot continue to provide the relay service to the remote UE, the remote UE may perform cell selection, and the first manner is the manner of initiating RRC reestablishment through a Uu interface. If the remote UE fails to initiate RRC reestablishment through the Uu interface, the remote UE may select new relay UE. In this case, the first manner is the manner of initiating RRC reestablishment through new relay UE. The specific content is described in another embodiment below.

In embodiments of this application, that the remote UE initiates RRC reestablishment includes, for example, that the remote UE sends an RRC reestablishment request message. For example, that the remote UE initiates RRC reestablishment through a Uu interface may include: The remote UE sends an RRC reestablishment request message to a corresponding network device through the Uu interface. For another example, that the remote UE initiates RRC reestablishment through new relay UE may include: The remote UE sends, through the new relay UE, an RRC reestablishment request message to a network device corresponding to a serving cell of the new relay UE. For another example, that the remote UE initiates RRC reestablishment through the original relay UE may include: The remote UE sends, through the original relay UE, an RRC reestablishment request message to a network device corresponding to a serving cell of the original relay UE.

It should be noted that in embodiments of this application, the new relay UE (for example, relay UE 2 in the following) selected by the remote UE and the original relay UE (for example, relay UE 1 in the following) may be same UE or different UE. In addition, content such as a specific process in which the remote UE initiates RRC reestablishment is also described in another embodiment below.

In this embodiment of this application, if the remote UE determines that the relay UE cannot continue to provide the relay service to the remote UE, the remote UE may initiate RRC reestablishment, to resume a service of the remote UE as soon as possible. In addition, the remote UE may select a manner of initiating RRC reestablishment, for example, may initiate RRC reestablishment through a Uu interface, may initiate RRC reestablishment through new relay UE, or may continue to initiate RRC reestablishment through the original relay UE, so that the manner of initiating RRC reestablishment by the remote UE is more flexible. In addition, for example, the remote UE may select, based on a factor such as network quality, a relatively good manner to initiate RRC reestablishment. This increases a success rate of RRC reestablishment, improves service continuity of the remote UE, and reduces a packet loss caused due to service discontinuity.

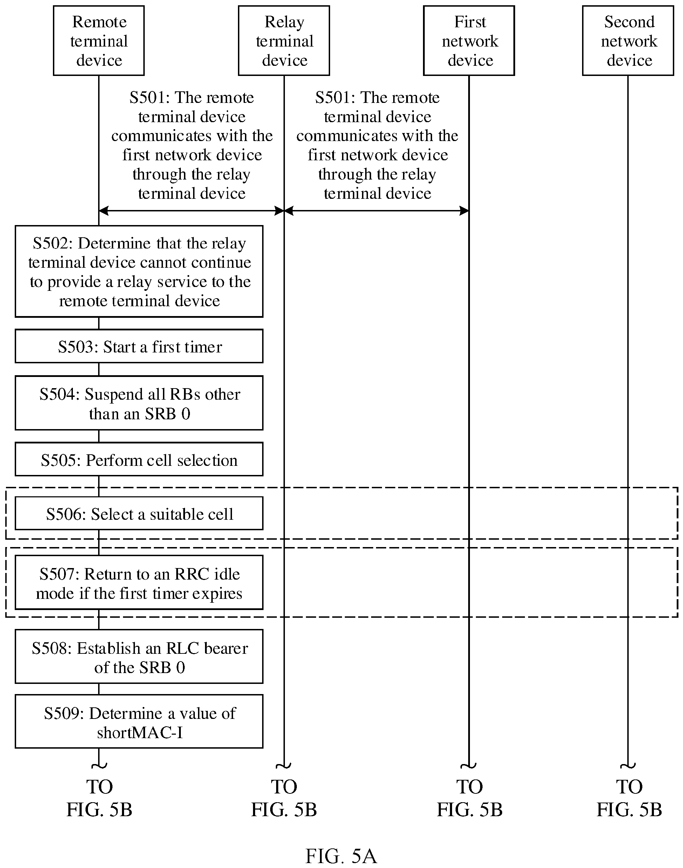

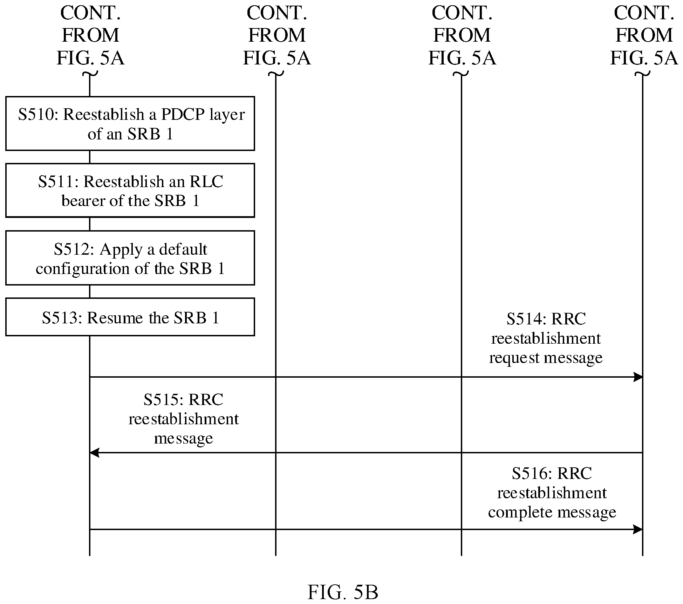

An embodiment of this application provides a second communication method below. FIG. 5A and FIG. 5B are a flowchart of the method. If this embodiment of this application is applied to the network architecture shown in FIG. 3A, remote UE described below may be a remote terminal device in the network architecture shown in FIG. 3A, relay UE described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, remote UE described below may be a remote terminal device in the network architecture shown in FIG. 3B, relay UE described below may be a relay terminal device in the network architecture shown in FIG. 3B, and a first network device described below may be a network device in the network architecture shown in FIG. 3B.

S501: The remote UE communicates with the first network device through the relay UE.

For more content of S501, refer to the description of S401 in the embodiment shown in FIG. 4.

S502: The remote UE determines that the relay UE cannot continue to provide a relay service to the remote UE.

For example, if the remote UE detects an SL RLF between the remote UE and the relay UE, the remote UE determines that the relay UE cannot continue to provide the relay service to the remote UE. For another example, if a first protocol layer in the remote UE requests to release a connection between the remote UE and the relay UE, the remote UE may determine that the relay UE cannot continue to provide the relay service to the remote UE. For another example, if a connection between the remote UE and the relay UE is released, the remote UE may determine that the relay UE cannot continue to provide the relay service to the remote UE. Alternatively, the remote UE may determine, in another manner, that the relay UE cannot continue to provide the relay service to the remote UE. The connection between the remote UE and the relay UE is, for example, a PC5-RRC connection or a PCS unicast link. The first protocol layer is, for example, a PC5-S layer, or may be another protocol layer in the remote UE.

This embodiment of this application may be applied in combination with the embodiment shown in FIG. 4. For example, this embodiment of this application may be considered as a refinement of the embodiment shown in FIG. 4. In this case, after S502, the remote UE may determine a first manner. For how the remote UE determines the first manner, refer to the description of the embodiment shown in FIG. 4. For example, in this embodiment of this application, the first manner determined by the remote UE is a manner of initiating RRC reestablishment through a Uu interface. Alternatively, this embodiment of this application and the embodiment shown in FIG. 4 may not be combined, but are independently applied. In this case, in this embodiment of this application, if the remote UE determines that the relay UE cannot continue to provide the relay service to the remote UE, the remote UE does not need to select a manner of initiating RRC reestablishment, but initiates RRC reestablishment through the Uu interface.

It may be learned that in this embodiment of this application, if the remote UE determines that the relay UE cannot continue to provide the relay service to the remote UE, the remote UE does not need to reselect new relay UE or initiate RRC reestablishment through the original relay UE, but independently initiates RRC reestablishment through the Uu interface. This reduces a probability that a service of the remote UE is interrupted because the network device cannot configure the new relay UE, reduces a probability that there is a failure when RRC reestablishment is performed through the original relay UE, improves service continuity of the remote UE, and reduces a packet loss caused due to service interruption of the remote UE. A process in which the remote UE performs RRC reestablishment through a Uu interface is described below.

S503: The remote UE starts a first timer. The first timer may be stopped when the remote UE selects a suitable cell.

For example, once the remote UE initiates RRC reestablishment, the remote UE starts the first timer; once the remote UE determines that the relay UE cannot continue to provide the relay service to the remote UE, the remote UE starts the first timer; or the remote UE performs cell selection after initiating RRC reestablishment, and before performing cell selection, the remote UE starts the first timer. Alternatively, the remote UE may start the first timer in another case. The first timer is, for example, a timer T311, or may be another timer.

S504: The remote UE suspends all RBs other than a second SRB. The RB suspended by the remote UE is a Uu RB. In embodiments of this application, the second SRB is, for example, an SRB 0, or may be another SRB. In this embodiment of this application, an example in which the second SRB is the SRB 0 is used.

For example, the remote UE may further release an SL RLC bearer of the suspended RB.

S505: The remote UE performs cell selection.

S506: The remote UE selects a suitable cell.

For example, the cell selected by the remote UE is referred to as a first cell. For example, the first cell corresponds to a second network device. In embodiments of this application, one cell corresponds to one network device. This may be understood as that the network device provides a service of the cell. For example, the network device is an access network device, for example, a base station. For example, the first cell corresponds to the second network device. This may be understood as that the second network device provides a service of the first cell. For example, the second network device is an access network device. The second network device is not provided in FIG. 3A or FIG. 3B. It may be understood that the second network device can communicate with a remote terminal device. The second network device and the first network device may be a same network device or different network devices. If selecting a suitable cell, the remote UE may stop the first timer, and perform S508.

S507: If the first timer expires, the remote UE returns to an RRC idle (RRC_IDLE) mode. The procedure ends.

S506 and S507 are two parallel solutions, and either of the solutions is performed based on a status of selecting a cell by the remote UE.

S508: The remote UE establishes an RLC bearer of the SRB 0.

For example, the remote UE may establish the RLC bearer of the SRB 0 by applying a common control channel (common control channel, CCCH) configuration specified in a protocol. The configuration may be referred to as a specified configuration (specified configuration).

Alternatively, the RLC bearer of the SRB 0 may always exist, and does not need to be established. In this case, the remote UE may not perform S508. Therefore, S508 is an optional step.

S509: The remote UE determines a value of shortMAC-I (shortMAC-I).

To perform RRC reestablishment, the remote UE needs to send an RRC reestablishment request (RRC reestablishment request) message to the second network device corresponding to the selected first cell. The RRC reestablishment request message includes shortMAC-I. Therefore, the remote UE needs to determine the value of shortMAC-I. For example, the remote UE may determine the value of shortMAC-I based on an identifier of the first cell (for example, an ID of the first cell).

S510: The remote UE establishes or reestablishes a PDCP entity of a first SRB. In embodiments of this application, the first SRB is, for example, an SRB 1, or may be another SRB. In this embodiment of this application, an example in which the first SRB is the SRB 1 is used.

S511: The remote UE establishes or reestablishes an SL RLC bearer of the SRB 1.

S512: The remote UE applies a default configuration of the SRB 1. The default configuration may be specified in a protocol.

S513: The remote UE resumes the SRB 1.

The remote UE may suspend the SRB 1 in S504. To perform RRC reestablishment, the remote UE needs to send the RRC reestablishment request message to the second network device corresponding to the selected first cell. After receiving the RRC reestablishment request message, the second network device needs to send an RRC reestablishment (RRC reestablishment) message to the remote UE. The RRC reestablishment message is transmitted through the SRB 1. Therefore, the remote UE needs to resume the SRB 1 before receiving the RRC reestablishment message

S514: The remote UE sends an RRC reestablishment request message to the second network device. Correspondingly, the second network device receives the RRC reestablishment request message from the remote UE. The RRC reestablishment request message may be transmitted through the SRB 0 of the remote UE.

S515: The second network device sends an RRC reestablishment (RRC reestablishment) message to the remote UE. Correspondingly, the remote UE receives the RRC reestablishment message from the second network device. The RRC reestablishment message may be transmitted through the SRB 1 of the remote UE.

S516: The remote UE sends an RRC reestablishment complete (RRC reestablishment complete) message to the second network device. Correspondingly, the second network device receives the RRC reestablishment complete message from the remote UE.

By performing the foregoing process, the remote UE completes the RRC reestablishment process through the Uu interface. Then, the second network device may establish the RB of the remote UE, modify the RB of the remote UE, release the RB of the remote UE, or the like by using an RRC reconfiguration procedure, to resume data transmission of the remote UE.

In this embodiment of this application, if the remote UE determines that the relay UE cannot continue to provide the relay service to the remote UE, the remote UE may initiate RRC reestablishment through the Uu interface. This is equivalent to that the remote UE may independently reestablish an RRC connection to the network device, and does not need to select new relay UE. This reduces a probability that the service of the remote UE cannot continue because the new relay UE cannot be configured, improves service continuity of the remote UE, and reduces a packet loss caused due to service discontinuity.

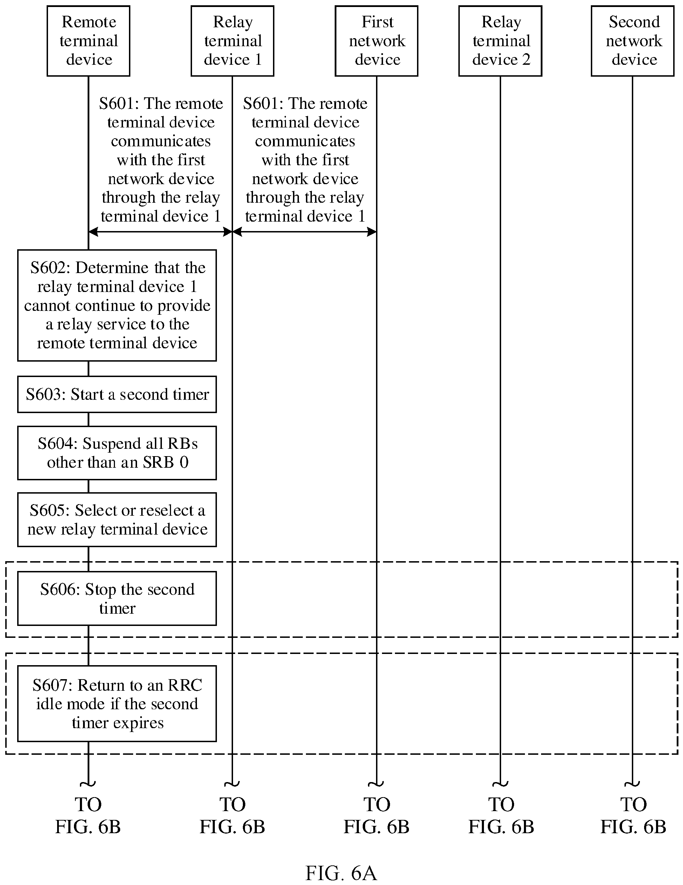

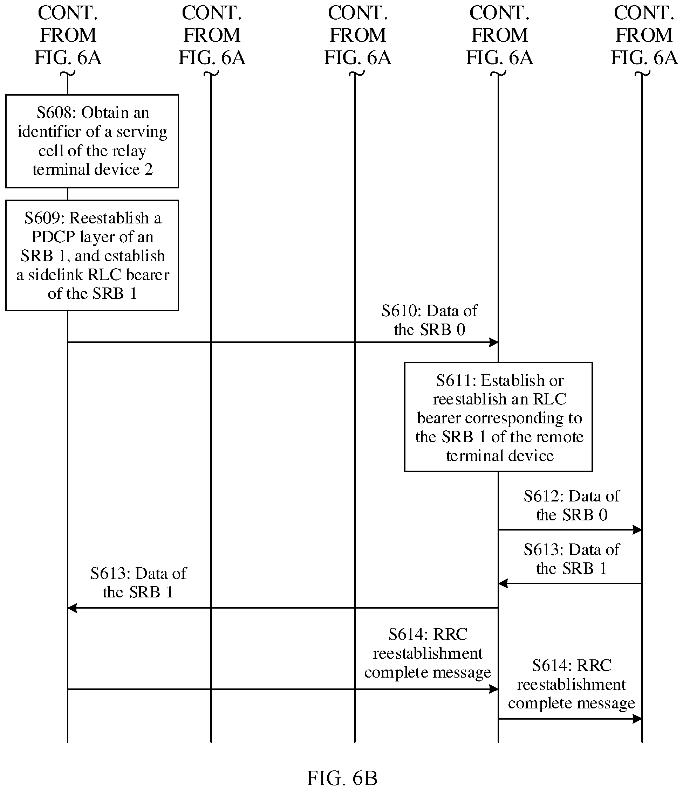

An embodiment of this application provides a third communication method below. FIG. 6A and FIG. 6B are a flowchart of the method. A difference from the embodiment shown in FIG. 5A and FIG. 5B is that in the embodiment shown in FIG. 6A and FIG. 6B, if remote UE determines that relay UE cannot continue to provide a relay service to the remote UE, the remote UE may select new relay UE, and access a network through the new relay UE. If this embodiment of this application is applied to the network architecture shown in FIG. 3A, remote UE described below may be a remote terminal device in the network architecture shown in FIG. 3A, relay UE 1 described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, remote UE described below may be a remote terminal device in the network architecture shown in FIG. 3B, relay UE 1 described below may be a relay terminal device in the network architecture shown in FIG. 3B, and a first network device described below may be a network device in the network architecture shown in FIG. 3B. Relay UE 2 and a second network device described below are not shown in FIG. 3A or FIG. 3B.

S601: The remote UE communicates with the first network device through the relay UE 1.

For more content of S601, refer to S401 in the embodiment shown in FIG. 4.

S602: The remote UE determines that the relay UE 1 cannot continue to provide a relay service to the remote UE.

For a case in which the remote UE may determine that the relay UE 1 cannot continue to provide the relay service to the remote UE, refer to S502 in the embodiment shown in FIG. 5A and FIG. 5B.

This embodiment of this application may be applied in combination with the embodiment shown in FIG. 4. For example, this embodiment of this application may be considered as a refinement of the embodiment shown in FIG. 4. In this case, after S602, the remote UE may determine a first manner. For how the remote UE determines the first manner, refer to the description of the embodiment shown in FIG. 4. For example, in this embodiment of this application, the first manner determined by the remote UE is a manner of initiating RRC reestablishment through new relay UE. Alternatively, this embodiment of this application and the embodiment shown in FIG. 4 may not be combined, but are independently applied. In this case, in this embodiment of this application, if the remote UE determines that the relay UE cannot continue to provide the relay service to the remote UE, the remote UE does not need to select a manner of initiating RRC reestablishment, but initiates RRC reestablishment through the new relay UE.

It may be learned that in this embodiment of this application, if the remote UE determines that the relay UE 1 cannot continue to provide the relay service to the remote UE, the remote UE may select new relay UE, to initiate RRC reestablishment through the new relay UE. That is, if the remote UE determines that the relay UE 1 cannot continue to provide the relay service to the remote UE, the remote UE may select new relay UE to resume a service. This improves service continuity of the remote UE, and reduces a packet loss caused due to service interruption of the remote UE. A process in which the remote UE selects new relay UE and performs RRC reestablishment through the new relay UE is described below.

S603: The remote UE starts a second timer. The second timer may be stopped when the remote UE selects new relay UE.

For example, once the remote UE initiates RRC reestablishment, the remote UE starts the second timer; once the remote UE determines that the relay UE cannot continue to provide the relay service to the remote UE, the remote UE starts the second timer; or the remote UE starts the second timer before selecting new relay UE. Alternatively, the remote UE may start the second timer in another case. The second timer is, for example, a timer T311, or may be another timer.

S604: The remote UE suspends all RBs other than a second SRB. The RB suspended by the remote UE is a Uu RB. The second SRB is, for example, an SRB 0, or may be another SRB. In this embodiment of this application, an example in which the second SRB is the SRB 0 is used.

For example, the remote UE may further release an SL RLC bearer of the suspended RB.

S605: The remote UE selects or reselects new relay UE.

For example, the remote UE may measure other relay UE, to reselect UE that can provide the relay service to the remote UE as the new relay UE.

S606: The remote UE stops the second timer.

For example, if selecting new relay UE, the remote UE may stop the second timer. The new relay UE is referred to as a third terminal device or relay UE 2 below. For another example, if the remote UE selects the relay UE 2, and the remote UE completes establishment of a connection to the relay UE 2, the remote UE may stop the second timer. The connection between the remote UE and the relay UE 2 is, for example, a PC5-RRC connection or a PCS unicast link. For another example, if the remote UE selects the relay UE 2, and the remote UE obtains an identifier of a serving cell of the relay UE 2, the remote UE may stop the second timer.

In addition, regardless of a case in which the remote UE stops the second timer, the remote UE may start a third timer after stopping the second timer or when stopping the second timer. The third timer is, for example, a timer T301, or may be another timer. For example, the third timer is not the timer T301, and timing duration of the third timer is greater than or equal to timing duration of the timer T301. The third timer may be used by the remote UE to receive an RRC reestablishment message.

The remote UE may first establish a connection to the relay UE 2, and then obtain the identifier of the serving cell of the relay UE 2 from the relay UE 2 after establishing the connection. Alternatively, before establishing a connection to the relay UE 2, the remote UE may obtain the identifier of the serving cell of the relay UE 2 from the relay UE 2. Alternatively, in a process of establishing a connection to the relay UE 2, the remote UE may obtain the identifier of the serving cell of the relay UE 2 from the relay UE 2. The identifier of the cell is, for example, an ID of the cell.

For example, the relay UE may send the ID of the serving cell of the relay UE by using a 5G ProSe direct communication message or a PCS direct discovery (PCS direct discovery) message. For example, a cell ID announcement request procedure (Cell ID announcement request procedure) is performed between the remote UE and the relay UE. The remote UE sends a CELL_ID_ANNOUNCEMENT_REQUEST message to the relay UE 2. After receiving the message, the relay UE sends a cell ID announcement response (CELL_ID_ANNOUNCEMENT_RESPONSE) message to the remote UE. The CELL_ID_ANNOUNCEMENT_RESPONSE message may include or indicate the ID of the serving cell of the relay UE 2. Alternatively, the relay UE 2 sends a relay discovery additional information (relay discovery additional information) message. The message includes or indicates the ID of the serving cell of the relay UE 2. After receiving the message, the remote UE may obtain the ID of the serving cell of the relay UE 2.

If the remote UE stops the second timer when selecting new relay UE, or if the remote UE stops the second timer when selecting the relay UE 2 and completing establishment of a connection to the relay UE 2, S608 is performed. If the remote UE stops the second timer when selecting the relay UE 2 and obtaining the identifier of the serving cell of the relay UE 2, S609 is performed.

S607: If the second timer expires, the remote UE returns to an RRC idle mode. The procedure ends.

S606 and S607 are two parallel solutions, and either of the solutions is performed based on a status of selecting relay UE by the remote UE.

S608: The remote UE obtains the identifier of the serving cell of the relay UE 2.

If the remote UE needs to perform RRC reestablishment through the relay UE 2, the remote UE initiates transmission of an RRC reestablishment request message. The RRC reestablishment request message includes shortMAC-I, and the remote UE needs to calculate shortMAC-I based on an ID of a cell to which the RRC reestablishment is initiated. The remote UE performs RRC reestablishment through the relay UE 2. Therefore, the cell to which the RRC reestablishment is initiated is the serving cell of the relay UE 2. Therefore, the remote UE needs to obtain the identifier of the serving cell of the relay UE 2.

If the remote UE stops the second timer when selecting new relay UE, or if the remote UE stops the second timer when selecting the relay UE 2 and completing establishment of a connection to the relay UE 2, the remote UE does not obtain the identifier of the serving cell of the relay UE 2, and the remote UE needs to perform S608. For a method for obtaining the identifier of the serving cell of the relay UE 2 by the remote UE, refer to the description of S606.

After obtaining the identifier of the serving cell of the relay UE 2, the remote UE may determine shortMAC-I based on the identifier of the serving cell of the relay UE 2.

S609: The remote UE reestablishes a PDCP entity of a first SRB, and establishes a first RLC bearer of the first SRB, to resume the SRB 1. The first RLC bearer of the first SRB is, for example, an SL RLC bearer of the first SRB. The first SRB is, for example, the SRB 1, or may be another SRB. In this embodiment of this application, an example in which the first SRB is the SRB 1 is used.

After sending the RRC reestablishment request message, the remote UE needs to receive the RRC reestablishment message. The RRC reestablishment message needs to be transmitted through the SRB 1. Therefore, the remote UE may resume the SRB 1. For example, the remote UE may apply a PDCP default configuration (default configuration) or a specified configuration (specified configuration) of the SRB 1. The default configuration or the specified configuration may be specified in a protocol. The remote UE may apply an SL RLC default configuration (default configuration) or a specified configuration (specified configuration) of the SRB 1. The default configuration or the specified configuration may be specified in a protocol.

After the remote UE establishes the PCS unicast link or the PC5-RRC connection to the relay UE 2, if the remote UE needs to initiate RRC reestablishment or RRC connection resume, optionally, before sending the RRC reestablishment request message or an RRC resume request message, when sending the RRC reestablishment request message or an RRC resume request message, or after sending the RRC reestablishment request message or an RRC resume request message, the remote UE may establish the SL RLC bearer of the SRB 1 by applying the default configuration or the specified configuration. The SL RLC bearer of the SRB may be an SL RLC bearer equivalent to the relay UE (for example, the relay UE 2). Alternatively, if the remote UE needs to initiate RRC connection establishment, the remote UE establishes the SL RLC bearer of the SRB 1 after receiving indication information 1 that is for reestablishing the SL RLC bearer of the SRB 1, that is from the serving cell of the relay UE 2, and that is forwarded by the relay UE 2 or indication information 2 that is for establishing the SL RLC bearer of the SRB 1. If the indication information 1 or the indication information 2 indicates configuration information, the remote UE may establish the SL RLC bearer of the SRB 1 by applying the configuration information. If the indication information 1 or the indication information 2 does not indicate configuration information, the remote UE may establish the SL RLC bearer of the SRB 1 by applying the default configuration or the specified configuration. The indication information 1 or the indication information 2 may be sent by using an RRC connection establishment message.

If the remote UE does not initiate an RRC reestablishment procedure, for example, if the remote UE initiates an RRC connection establishment procedure, after the remote UE establishes the PCS unicast link or the PC5-RRC connection to the relay UE 2, and before the remote UE sends an RRC connection establishment request message, when the remote UE sends an RRC connection establishment request message, or after the remote UE sends an RRC connection establishment request message, the remote UE may not reestablish the PDCP entity of the SRB 1, but may establish the SL RLC bearer of the SRB 1, to resume the SRB 1, or the remote UE may not reestablish the PDCP entity of the SRB 1 or establish the SL RLC bearer of the SRB 1, to resume the SRB 1.

It may be learned from the foregoing description that the remote UE may initiate different procedures such as RRC reestablishment, RRC connection resume, or RRC connection establishment. In this embodiment of this application, an example in which the remote UE initiates RRC reestablishment is used.

S610: The remote UE sends data of the SRB 0 to the relay UE 2. Correspondingly, the relay UE 2 receives the data of the SRB 0 from the remote UE. The data of the SRB 0 is, for example, an RLC service data unit (service data unit, SDU), and the RLC PDU may include the RRC reestablishment request message. For example, the remote UE may send the RLC SDU to the relay UE 2 through an SL RLC bearer corresponding to the SRB 0, and the relay UE 2 receives the RLC SDU. The RLC SDU is to be sent to the second network device, and the second network device is a network device accessed by the relay UE 2. A message sent by the remote UE to the second network device needs to be relayed through the relay UE 2. Therefore, the remote UE 2 sends the data of the SRB 0 to the relay UE 2.

S611: The relay UE 2 establishes or reestablishes an RLC bearer corresponding to the SRB 1 of the remote UE. For example, the relay UE 2 may establish or reestablish the RLC bearer by using a default configuration or a specified configuration. The default configuration or the specified configuration may be specified in a protocol. The RLC bearer of the SRB 1 may include at least one of first RLC bearers between the remote UE and the relay UE 2, and may further include a second RLC bearer between the remote UE and the second network device. The first RLC bearer is, for example, an SL RLC bearer, and the second RLC bearer is, for example, a Uu RLC bearer.

Different trigger manners may be used for the relay UE 2 to establish or reestablish the RLC bearer of the SRB 1. Descriptions are provided below by using an example.

For example, in a trigger manner, after receiving the data of the SRB 0, the relay UE 2 may establish or reestablish the RLC bearer of the SRB 1. After receiving the data of the SRB 0, the relay UE 2 may determine, based on an SL logical channel on which the data of the SRB 0 is located, that the data is data of the SRB 0 of the remote UE. Optionally, after the relay UE 2 receives the data of the SRB 0, and before the relay UE 2 sends the data of the SRB 0 to the second network device, or when the relay UE 2 sends the data of the SRB 0 to the second network device, or after the relay UE 2 sends the data of the SRB 0 to the second network device, the relay UE 2 may establish or reestablish the RLC bearer of the SRB 1. In this trigger manner, the RLC bearer of the SRB 1 that is established or reestablished by the relay UE 2 may include the SL RLC bearer of the SRB 1, the Uu RLC bearer of the SRB 1, or the SL RLC bearer of the SRB 1 and the Uu RLC bearer of the SRB 1.

For another example, in another trigger manner, the second network device sends first indication information to the relay UE 2. Correspondingly, the relay UE 2 receives the first indication information from the second network device. The first indication information may indicate to establish or reestablish the RLC bearer of the SRB 1, indicate to receive data of the SRB 1 that is sent by the second network device to the remote UE, indicate to receive the RRC reestablishment message sent by the second network device to the remote UE, or indicate that the remote UE sends the RRC reestablishment request message through the relay UE 2. After receiving the first indication information, the relay UE 2 may establish or reestablish the RLC bearer of the SRB 1. For example, if the first indication information indicates to establish or reestablish the RLC bearer of the SRB 1, indicates to receive the data of the SRB 1 that is sent by the second network device to the remote UE, indicates to receive the RRC reestablishment message sent by the second network device to the remote UE, or indicates that the remote UE sends the RRC reestablishment request message through the relay UE 2, the RLC bearer of the SRB 1 that is established or reestablished by the relay UE 2 may include the SL RLC bearer of the SRB 1, the Uu RLC bearer of the SRB 1, or the SL RLC bearer of the SRB 1 and the Uu RLC bearer of the SRB 1. Alternatively, if the first indication information indicates to establish or reestablish the SL RLC bearer of the SRB 1 (for example, the SL RLC bearer of the SRB 1 and a Uu RLC bearer of the SRB 1), the second network device may perform indication by using different indication information. In this case, the second network device may send only one piece of indication information, or may send two pieces of indication information. If two pieces of indication information are sent, the two pieces of indication information may be carried in one message, or may be carried in different messages. In this case, the RLC bearer of the SRB 1 that is established or reestablished by the relay UE 2 may include the SL RLC bearer of the SRB 1. Alternatively, if the first indication information indicates to establish or reestablish the Uu RLC bearer of the SRB 1, the RLC bearer of the SRB 1 that is established or reestablished by the relay UE 2 may include the Uu RLC bearer of the SRB 1. Alternatively, if the first indication information indicates to establish or reestablish the SL RLC bearer of the SRB 1 and the Uu RLC bearer of the SRB 1, the RLC bearer of the SRB 1 that is established or reestablished by the relay UE 2 may include the SL RLC bearer of the SRB 1 and the Uu RLC bearer of the SRB 1. For example, the second network device may send the first indication information to the relay UE 2 after receiving the data of the SRB 0 that is forwarded by the relay UE 2. That is, if this trigger manner is used, the relay UE 2 sends the data of the SRB 0 in S610 to the second network device, and the second network device receives the data of the SRB 0.

If this trigger manner is used, and the first indication information indicates a corresponding configuration (for example, indicates a configuration of the SL RLC bearer of the SRB 1 and/or a configuration of the Uu RLC bearer of the SRB 1), the relay UE 2 may establish or reestablish the RLC bearer of the SRB 1 based on the configuration indicated by the first indication information. If the first indication information does not indicate a configuration, the relay UE 2 may establish or reestablish the RLC bearer of the SRB 1 based on the default configuration or the specified configuration.

For another example, in still another trigger manner, the remote UE sends second indication information to the relay UE 2. Correspondingly, the relay UE 2 receives the second indication information from the remote UE. The second indication information may indicate to establish or reestablish the RLC bearer of the SRB 1, indicate to receive data of the SRB 1 that is sent by the second network device to the remote UE, indicate to receive the RRC reestablishment message sent by the second network device to the remote UE, or indicate that the remote UE sends the RRC reestablishment request message through the relay UE 2. After receiving the second indication information, the relay UE 2 may establish or reestablish the RLC bearer of the SRB 1. For a relationship between the RLC bearer reestablished by the relay UE 2 and the second indication information, refer to the description of the first indication information. For example, the second indication information may not be carried in the data of the SRB 0. In this case, the remote UE may first send the data of the SRB 0 to the relay UE 2, and then send the second indication information to the relay UE 2; the remote UE may first send the second indication information to the relay UE 2, and then send the data of the SRB 0 to the relay UE 2; or the remote UE may simultaneously send the second indication information and the data of the SRB 0 to the relay UE 2. Alternatively, the second indication information may be carried in the data of the SRB 0. In this case, if the remote UE sends the data of the SRB 0 to the relay UE 2, the remote UE sends the second indication information. In this manner, signaling overheads can be reduced.

In addition, for the Uu RLC bearer of the SRB 1, if SRBs 1 of a plurality of remote UEs reuse a same Uu RLC bearer of the relay UE 2, other remote UE may communicate with the second network device through the relay UE 2, and the relay UE 2 establishes the Uu RLC bearer. In this case, the relay UE 2 does not need to establish the Uu RLC bearer. However, if the relay UE 2 does not establish the Uu RLC bearer, the relay UE 2 may establish the Uu RLC bearer.

It should be noted that if the relay UE 2 does not enter an RRC connected mode when receiving the data of the SRB 0 from the remote UE, the relay UE 2 may first enter the RRC connected mode, and then establish the Uu RLC bearer corresponding to the SRB 1 of the remote UE.

S612: The relay UE 2 sends the data of the SRB 0 from the remote UE to the second network device. Correspondingly, the second network device receives the data of the SRB 0 from the relay UE 2. For example, the relay UE 2 may send the data of the SRB 0 to the second network device through a Uu RLC bearer of the SRB 0.

If the second network device sends the first indication information to the relay UE 2 to indicate to establish or reestablish the RLC bearer of the SRB 1, the second network device may send the first indication information to the relay UE 2 after receiving the data of the SRB 0 that is forwarded by the relay UE 2. That is, if this trigger manner is used, the relay UE 2 sends the data of the SRB 0 in S610 to the second network device, and the second network device receives the data of the SRB 0. In this case, S612 may be performed before S611. However, if the other two trigger manners described in S611 are used, S612 may be performed before S611, may be performed after S611, or may be simultaneously performed with S611.

S613: The second network device sends the data of the SRB 1 to the remote UE through the relay UE 2. Correspondingly, the remote UE receives the data of the SRB 1 from the second network device through the relay UE 2.

The data of the SRB 1 is, for example, an RLC SDU, and the RLC PDU may include the RRC reestablishment message. Specifically, the second network device sends the data of the SRB 1 to the relay UE 2, and the relay UE 2 receives the data of the SRB 1 from the second network device; and the relay UE 2 sends the data of the SRB 1 to the remote UE, and the remote UE receives the data of the SRB 1 from the relay UE 2. For example, the relay UE 2 may receive the data of the SRB 1 from the second network device through the Uu RLC bearer corresponding to the SRB 1 of the remote UE, the relay UE 2 may send the data of the SRB 1 to the remote UE through the SL RLC bearer corresponding to the SRB 1 of the remote UE, and the remote UE receives the data of the SRB 1 from the remote UE 2 through the SL RLC bearer of the SRB 1. After receiving the data of the SRB 1, the remote UE may submit the data of the SRB 1 to the PDCP entity of the SRB 1 for processing.

In addition, after receiving the data of the SRB 1, the remote UE may stop the third timer, and perform S614. If the remote UE does not receive the data of the SRB 1 when the third timer expires, the remote UE may enter the RRC idle mode, and the procedure ends.

S614: The remote UE sends an RRC reestablishment complete message to the second network device through the relay UE 2. Correspondingly, the second network device receives the RRC reestablishment complete message from the remote UE through the relay UE 2. Specifically, the remote UE sends the RRC reestablishment complete message to the relay UE 2, and the relay UE 2 receives the RRC reestablishment complete message from the remote UE 2; and the relay UE 2 sends the RRC reestablishment complete message to the second network device, and the second network device receives the RRC reestablishment complete message from the relay UE 2.

By performing the foregoing process, the remote UE completes the RRC reestablishment process through the Uu interface. Then, the second network device may establish the RB of the remote UE, modify the RB of the remote UE, release the RB of the remote UE, or the like by using an RRC reconfiguration procedure, to resume data transmission of the remote UE.

In this embodiment of this application, if the remote UE determines that the relay UE 1 cannot continue to provide the relay service to the remote UE, the remote UE may select the relay UE 2, and initiate RRC reestablishment through the relay UE 2. The relay UE 2 can serve as the relay UE only when signal quality of the cell is relatively good or the relay UE 2 is in the RRC connected mode. Therefore, occurrence of a case in which RRC connection reestablishment fails due to poor signal quality of the cell when the remote UE performs RRC reestablishment through the Uu interface can be reduced. This improves service continuity of the remote UE.

The embodiment shown in FIG. 5A and FIG. 5B and the embodiment shown in FIG. 6A and FIG. 6B may be independently applied, or may be applied in combination with each other. Several optional combination manners of the embodiment shown in FIG. 5A and FIG. 5B and the embodiment shown in FIG. 6A and FIG. 6B are described below by using several embodiments. Alternatively, the following several embodiments may be considered as embodiments in which the embodiment shown in FIG. 5A and FIG. 5B and the embodiment shown in FIG. 6A and FIG. 6B are applied in combination with each other, or may be considered as several examples of the embodiment shown in FIG. 4.

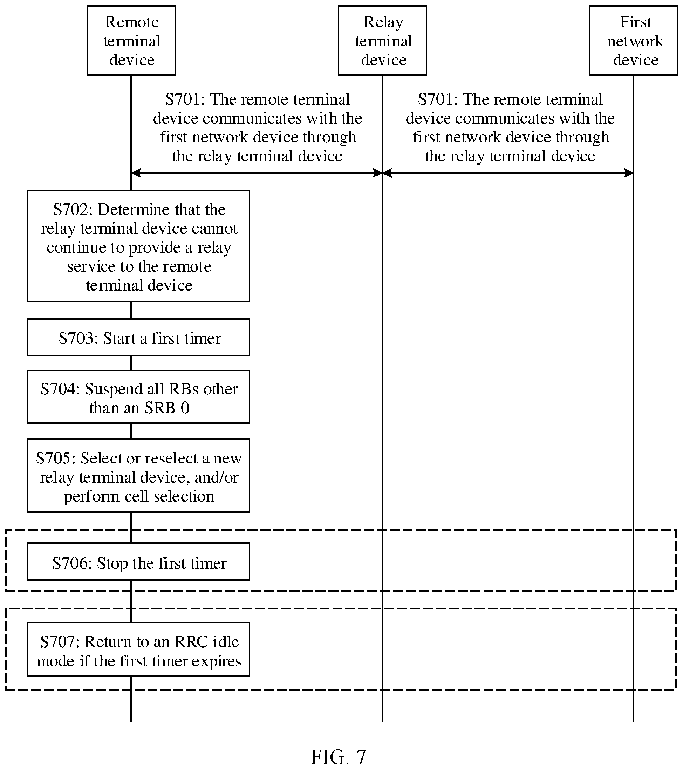

An embodiment of this application provides a fourth communication method. FIG. 7 is a flowchart of the method. If this embodiment of this application is applied to the network architecture shown in FIG. 3A, remote UE described below may be a remote terminal device in the network architecture shown in FIG. 3A, relay UE 1 described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, remote UE described below may be a remote terminal device in the network architecture shown in FIG. 3B, relay UE 1 described below may be a relay terminal device in the network architecture shown in FIG. 3B, and a first network device described below may be a network device in the network architecture shown in FIG. 3B. Relay UE 2 and a second network device described below are not shown in FIG. 3A or FIG. 3B.

S701: The remote UE communicates with the first network device through the relay UE 1.

For more content of S701, refer to S401 in the embodiment shown in FIG. 4.

S702: The remote UE determines that the relay UE 1 cannot continue to provide a relay service to the remote UE.

For a case in which the remote UE may determine that the relay UE 1 cannot continue to provide the relay service to the remote UE, refer to S502 in the embodiment shown in FIG. 5A.

If this embodiment of this application is combined with the embodiment shown in FIG. 4, or this embodiment of this application is considered as an example of the embodiment shown in FIG. 4, and if the remote UE determines that the relay UE cannot continue to provide the relay service to the remote UE, the remote UE may determine a first manner based on a process of selecting a cell by the remote UE and/or a process of selecting new relay UE by the remote UE. Alternatively, it may be considered that the embodiment shown in FIG. 5A and FIG. 5B is not combined with the embodiment shown in FIG. 4, the embodiment shown in FIG. 6A and FIG. 6B is not combined with the embodiment shown in FIG. 4, and this embodiment of this application is a first manner in which the embodiment shown in FIG. 5A and FIG. 5B and the embodiment shown in FIG. 6A and FIG. 6B are applied in combination with each other.

In this embodiment of this application, if the remote UE determines that the relay UE cannot continue to provide the relay service to the remote UE, the remote UE may initiate RRC reestablishment through a Uu interface, or may select new relay UE, to initiate RRC reestablishment through the new relay UE. In this way, more opportunities for performing RRC reestablishment can be provided to the remote UE, to increase a success rate of performing RRC reestablishment by the remote UE. Descriptions are provided below.

S703: The remote UE starts a first timer. The first timer may be stopped when the remote UE selects a suitable cell, or may be stopped when the remote UE selects new relay UE. The first timer is, for example, a timer T311, or may be another timer. It may be understood that the first timer in the embodiment shown in FIG. 7 can implement a function of the first timer in the embodiment shown in FIG. 5A and FIG. 5B, or can implement a function of the second timer in the embodiment shown in FIG. 6A and FIG. 6B.

For example, once the remote UE initiates RRC reestablishment, the remote UE starts the first timer; once the remote UE determines that the relay UE cannot continue to provide the relay service to the remote UE, the remote UE starts the first timer; the remote UE performs cell selection after initiating RRC reestablishment, and before performing cell selection, the remote UE starts the first timer; the remote UE starts the first timer before selecting new relay UE; or the remote UE starts the first timer before performing cell selection and before selecting new relay UE. Alternatively, the remote UE may start the first timer in another case.

S704: The remote UE suspends all RBs other than a second SRB. The RB suspended by the remote UE is a Uu RB. The second SRB is, for example, an SRB 0, or may be another SRB. In this embodiment of this application, an example in which the second SRB is the SRB 0 is used.

For example, the remote UE may further release an SL RLC bearer of the suspended RB.

S705: The remote UE selects or reselects new relay UE, the remote UE performs cell selection, or the remote UE selects or reselects new relay UE, and performs cell selection. An example in which the remote UE selects or reselects new relay UE, and performs cell selection is used below.

S706: The remote UE stops the first timer.

For example, if selecting new relay UE or a suitable cell, the remote UE may stop the first timer. The new relay UE is referred to as a third terminal device or relay UE 2 below. For another example, if the remote UE selects the relay UE 2, and the remote UE completes establishment of a connection to the relay UE 2, or the remote UE selects a suitable cell, the remote UE may stop the first timer. The connection between the remote UE and the relay UE 2 is, for example, a PC5-RRC connection or a PCS unicast link. For another example, if the remote UE selects the relay UE 2, and the remote UE obtains an identifier of a serving cell of the relay UE 2, or the remote UE selects a suitable cell, the remote UE may stop the first timer.

If the remote UE stops the first timer when selecting new relay UE, the remote UE may establish a connection to the relay UE 2, for example, may perform a PCS unicast link establishment procedure or a layer-2 link (layer-2 link) establishment procedure. If the remote UE 2 stops the first timer when obtaining the identifier of the serving cell of the relay UE 2, the remote UE may determine shortMAC-I based on the identifier of the serving cell of the relay UE 2.

In addition, regardless of a case in which the remote UE stops the first timer, the remote UE may further start a second timer after the remote UE stops the first timer, or when the remote UE stops the first timer. The second timer is, for example, a timer T301, or may be another timer. For example, the second timer is not the timer T301, and timing duration of the second timer is greater than or equal to timing duration of the timer T301. For example, the second timer in this embodiment of this application is used by the remote UE to receive an RRC reestablishment message. For example, the second timer in this embodiment of this application may implement a function of the third timer in the embodiment shown in FIG. 6A and FIG. 6B.

S707: If the first timer expires, the remote UE returns to an RRC idle (RRC_IDLE) mode. The procedure ends.

S706 and S707 are two parallel solutions, and either of the solutions is performed based on a status of selecting a cell or a status of selecting new relay UE by the remote UE.

If the first timer is stopped after the remote UE selects a suitable cell, S508 to S516 in the embodiment shown in FIG. 5A and FIG. 5B may continue to be performed. If the first timer is stopped after the remote UE selects new relay UE, if the first timer is stopped after the remote UE selects new relay UE and the remote UE establishes a connection to the new relay UE, or if the first timer is stopped after the remote UE selects new relay UE and the remote UE obtains an identifier of a serving cell of the new relay UE, S608 to S614 in the embodiment shown in FIG. 6B may continue to be performed.

In this embodiment of this application, if the remote UE determines that the relay UE cannot continue to provide the relay service to the remote UE, the remote UE may initiate RRC reestablishment through a Uu interface, or may select new relay UE, to initiate RRC reestablishment through the new relay UE. In this way, more opportunities for performing RRC reestablishment can be provided to the remote UE, to increase a success rate of performing RRC reestablishment by the remote UE.

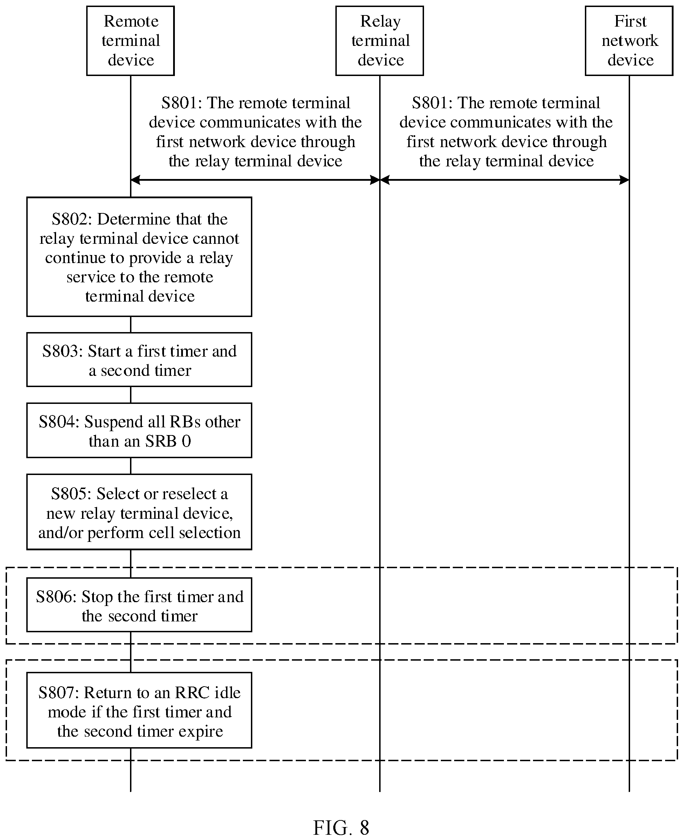

An embodiment of this application provides a fifth communication method. FIG. 8 is a flowchart of the method. If this embodiment of this application is applied to the network architecture shown in FIG. 3A, remote UE described below may be a remote terminal device in the network architecture shown in FIG. 3A, relay UE 1 described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, remote UE described below may be a remote terminal device in the network architecture shown in FIG. 3B, relay UE 1 described below may be a relay terminal device in the network architecture shown in FIG. 3B, and a first network device described below may be a network device in the network architecture shown in FIG. 3B. Relay UE 2 and a second network device described below are not shown in FIG. 3A or FIG. 3B.

S801: The remote UE communicates with the first network device through the relay UE 1.

For more content of S801, refer to S401 in the embodiment shown in FIG. 4.

S802: The remote UE determines that the relay UE 1 cannot continue to provide a relay service to the remote UE.

For a case in which the remote UE may determine that the relay UE 1 cannot continue to provide the relay service to the remote UE, refer to S502 in the embodiment shown in FIG. 5A.

If this embodiment of this application is combined with the embodiment shown in FIG. 4, or this embodiment of this application is considered as an example of the embodiment shown in FIG. 4, and if the remote UE determines that the relay UE cannot continue to provide the relay service to the remote UE, the remote UE may determine a first manner based on a process of selecting a cell by the remote UE and/or a process of selecting new relay UE by the remote UE. Alternatively, it may be considered that the embodiment shown in FIG. 5A and FIG. 5B is not combined with the embodiment shown in FIG. 4, the embodiment shown in FIG. 6A and FIG. 6B is not combined with the embodiment shown in FIG. 4, and this embodiment of this application is a second manner in which the embodiment shown in FIG. 5A and FIG. 5B and the embodiment shown in FIG. 6A and FIG. 6B are applied in combination with each other.

In this embodiment of this application, if the remote UE determines that the relay UE cannot continue to provide the relay service to the remote UE, the remote UE may initiate RRC reestablishment through a Uu interface, or may select new relay UE, to initiate RRC reestablishment through the new relay UE. In this way, more opportunities for performing RRC reestablishment can be provided to the remote UE, to increase a success rate of performing RRC reestablishment by the remote UE. Descriptions are provided below.

S803: The remote UE starts a first timer and a second timer. The first timer may be stopped when the remote UE selects a suitable cell, and the second timer may be stopped when the remote UE selects new relay UE. The first timer is, for example, a timer T311, or may be another timer. It may be understood that the first timer in the embodiment shown in FIG. 8 can implement a function of the first timer in the embodiment shown in FIG. 5A and FIG. 5B, and the second timer in the embodiment shown in FIG. 8 can implement a function of the second timer in the embodiment shown in FIG. 6A and FIG. 6B.

For example, once the remote UE initiates RRC reestablishment, the remote UE starts the first timer and the second timer; once the remote UE determines that the relay UE cannot continue to provide the relay service to the remote UE, the remote UE starts the first timer and the second timer; or the remote UE performs cell selection after initiating RRC reestablishment, and before performing cell selection, the remote UE starts the first timer, and before selecting new relay UE, the remote UE starts the second timer. Alternatively, the remote UE may start the first timer and the second timer in another case.

S804: The remote UE suspends all RBs other than a second SRB. The RB suspended by the remote UE is a Uu RB. The second SRB is, for example, an SRB 0, or may be another SRB. In this embodiment of this application, an example in which the second SRB is the SRB 0 is used.

For example, the remote UE may further release an SL RLC bearer of the suspended RB.

S805: The remote UE selects or reselects new relay UE, the remote UE performs cell selection, or the remote UE selects or reselects new relay UE, and performs cell selection. An example in which the remote UE selects or reselects new relay UE, and performs cell selection is used below.

S806: The remote UE stops the first timer and the second timer.

For example, if selecting new relay UE or a suitable cell, the remote UE may stop the first timer and the second timer. The new relay UE is referred to as a third terminal device or relay UE 2 below. For another example, if the remote UE selects the relay UE 2, and the remote UE completes establishment of a connection to the relay UE 2, or the remote UE selects a suitable cell, the remote UE may stop the first timer and the second timer. The connection between the remote UE and the relay UE 2 is, for example, a PC5-RRC connection or a PCS unicast link. For another example, if the remote UE selects the relay UE 2, and the remote UE obtains an identifier of a serving cell of the relay UE 2, or the remote UE selects a suitable cell, the remote UE may stop the first timer and the second timer.

If the remote UE stops the first timer and the second timer when selecting new relay UE, the remote UE may establish a connection to the relay UE 2, for example, may perform a PCS unicast link establishment procedure or a layer-2 link (layer-2 link) establishment procedure. If the remote UE 2 stops the first timer and the second timer when obtaining the identifier of the serving cell of the relay UE 2, the remote UE may determine shortMAC-I based on the identifier of the serving cell of the relay UE 2.

In addition, regardless of a case in which the remote UE stops the first timer and the second timer, the remote UE may further start a third timer after the remote UE stops the first timer and the second timer, or when the remote UE stops the first timer and the second timer. The third timer is, for example, a timer T301, or may be another timer. For example, the third timer is not the timer T301, and timing duration of the third timer is greater than or equal to timing duration of the timer T301. For example, the third timer in this embodiment of this application is used by the remote UE to receive an RRC reestablishment message. For example, the third timer in this embodiment of this application may implement a function of the third timer in the embodiment shown in FIG. 6A and FIG. 6B.

S807: If the first timer and the second timer expire, the remote UE returns to an RRC idle mode. The procedure ends.

If the remote UE does not select a suitable cell when the first timer expires, the remote UE stops selecting a cell. If the remote UE does not select suitable relay UE when the second timer expires, the remote UE does not establish a connection to new relay UE when the second timer expires, or the remote UE does not obtain an identifier of a serving cell of new relay UE when the second timer expires, the remote UE stops selecting new relay UE. If the first timer expires but the second timer does not expire, the remote UE no longer selects a cell, but may continue to select new relay UE. If the second timer expires but the first timer does not expire, the remote UE no longer selects new relay UE, but may continue to select a cell. If both the first timer and the second timer expire, the remote UE returns to the RRC idle mode, and the procedure ends.

S806 and S807 are two parallel solutions, and either of the solutions is performed based on a status of selecting a cell or a status of selecting new relay UE by the remote UE.

If the first timer and the second timer are stopped after the remote UE selects a suitable cell, S508 to S516 in the embodiment shown in FIG. 5A and FIG. 5B may continue to be performed. If the first timer and the second timer are stopped after the remote UE selects new relay UE, if the first timer and the second timer are stopped after the remote UE selects new relay UE and the remote UE establishes a connection to the new relay UE, or if the first timer and the second timer are stopped after the remote UE selects new relay UE and the remote UE obtains an identifier of a serving cell of the new relay UE, S608 to S614 in the embodiment shown in FIG. 6B may continue to be performed.

In this embodiment of this application, if the remote UE determines that the relay UE cannot continue to provide the relay service to the remote UE, the remote UE may initiate RRC reestablishment through a Uu interface, or may select new relay UE, to initiate RRC reestablishment through the new relay UE. In this way, more opportunities for performing RRC reestablishment can be provided to the remote UE, to increase a success rate of performing RRC reestablishment by the remote UE.

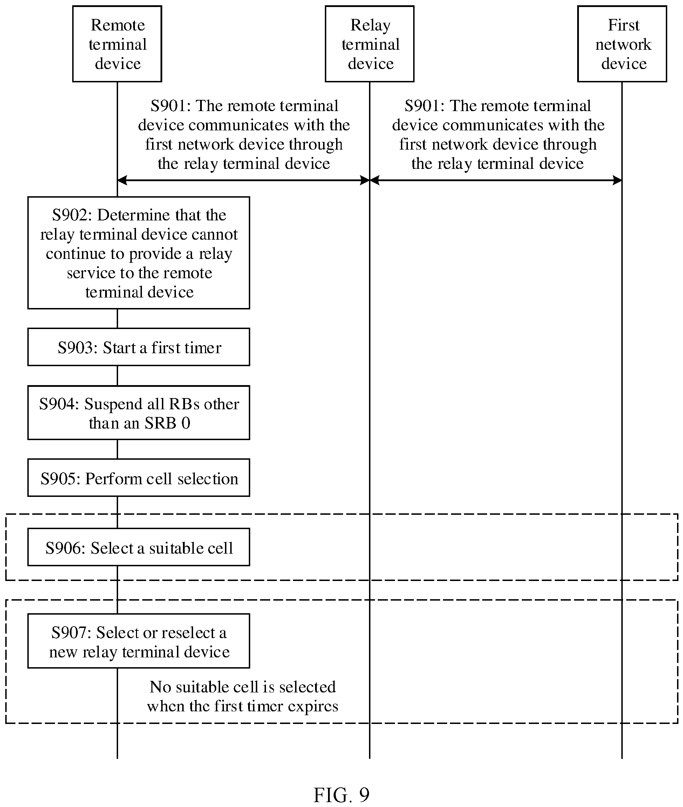

An embodiment of this application provides a sixth communication method. FIG. 9 is a flowchart of the method. If this embodiment of this application is applied to the network architecture shown in FIG. 3A, remote UE described below may be a remote terminal device in the network architecture shown in FIG. 3A, relay UE 1 described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, remote UE described below may be a remote terminal device in the network architecture shown in FIG. 3B, relay UE 1 described below may be a relay terminal device in the network architecture shown in FIG. 3B, and a first network device described below may be a network device in the network architecture shown in FIG. 3B. Relay UE 2 and a second network device described below are not shown in FIG. 3A or FIG. 3B.

S901: The remote UE communicates with the first network device through the relay UE 1.

For more content of S901, refer to S401 in the embodiment shown in FIG. 4.

S902: The remote UE determines that the relay UE 1 cannot continue to provide a relay service to the remote UE.

For a case in which the remote UE may determine that the relay UE 1 cannot continue to provide the relay service to the remote UE, refer to S502 in the embodiment shown in FIG. 5A.

If this embodiment of this application is combined with the embodiment shown in FIG. 4, or this embodiment of this application is considered as an example of the embodiment shown in FIG. 4, and if the remote UE determines that the relay UE cannot continue to provide the relay service to the remote UE, the remote UE may determine a first manner based on a process of selecting a cell by the remote UE and/or a process of selecting new relay UE by the remote UE. Alternatively, it may be considered that the embodiment shown in FIG. 5A and FIG. 5B is not combined with the embodiment shown in FIG. 4, the embodiment shown in FIG. 6A and FIG. 6B is not combined with the embodiment shown in FIG. 4, and this embodiment of this application is a third manner in which the embodiment shown in FIG. 5A and FIG. 5B and the embodiment shown in FIG. 6A and FIG. 6B are applied in combination with each other.

S903: The remote UE starts a first timer. The first timer may be stopped when the remote UE selects a suitable cell.

For more content of S903, refer to S503 in the embodiment shown in FIG. 5A.

S904: The remote UE suspends all RBs other than a second SRB. The RB suspended by the remote UE is a Uu RB. The second SRB is, for example, an SRB 0, or may be another SRB. In this embodiment of this application, an example in which the second SRB is the SRB 0 is used.

For example, the remote UE may further release an SL RLC bearer of the suspended RB.

S905: The remote UE performs cell selection. If the remote UE selects a suitable cell, S906 is performed. If the remote UE does not select a suitable cell, S907 is performed.

S906: The remote UE selects a suitable cell.

If selecting a suitable cell, the remote UE may stop the first timer, and continue to perform S508 to S516 in the embodiment shown in FIG. 5A and FIG. 5B.

S907: The remote UE selects or reselects new relay UE.

If the remote UE does not select a suitable cell, the cell selected by the remote UE is no longer suitable (for example, the remote UE selects a suitable cell, but the cell becomes no longer suitable), the remote UE does not receive an RRC reestablishment message from a network device to which the remote UE initiates RRC reestablishment, or RSRP of the cell selected by the remote UE is less than or equal to a second RSRP threshold, S907 may be performed. The network device to which the remote UE initiates the RRC reestablishment is, for example, the second network device. For example, the second RSRP threshold is specified in a protocol, or may be configured by the network device.

That the remote UE does not select a suitable cell may be understood as that the remote UE does not select a suitable cell when the first timer expires. That the remote UE does not receive an RRC reestablishment message from a second network device may be understood as that the remote UE does not receive the RRC reestablishment message from the second network device when a second timer expires. For example, the second timer is started after the remote UE selects a suitable cell.

For example, if the remote UE does not select a suitable cell, the cell selected by the remote UE is no longer suitable (for example, the remote UE selects a suitable cell, but the cell becomes no longer suitable), the remote UE does not receive an RRC reestablishment message from a network device to which the remote UE initiates RRC reestablishment, the remote UE may start a third timer, and the remote UE starts to reselect or select new relay UE, and may continue to perform S606 to S614 in the embodiment shown in FIG. 6A and FIG. 6B. In addition, the second network device in this embodiment of this application is a network device to which the remote UE initiates the RRC reestablishment through a Uu interface. Therefore, when S606 to S614 in the embodiment shown in FIG. 6A and FIG. 6B are performed, the second network device in S606 to S614 may be replaced with a third network device. The third network device and the second network device may be a same network device or different network devices.

In this embodiment of this application, if the remote UE determines that the relay UE cannot continue to provide the relay service to the remote UE, the remote UE may initiate RRC reestablishment through a Uu interface. If the remote UE fails to initiate RRC reestablishment through the Uu interface, the remote UE may further select new relay UE, to initiate RRC reestablishment through the new relay UE. In this way, more opportunities for performing RRC reestablishment can be provided to the remote UE, to increase a success rate of performing RRC reestablishment by the remote UE.

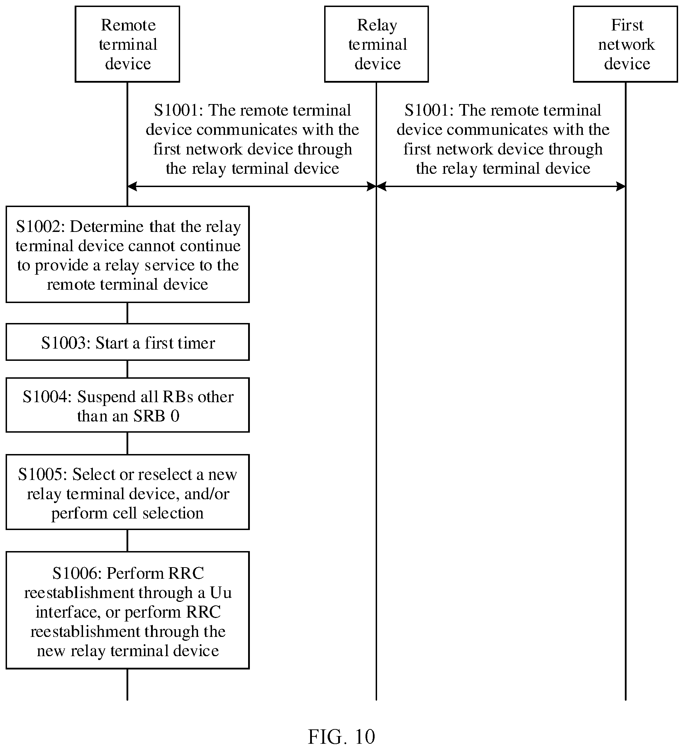

An embodiment of this application provides a seventh communication method. FIG. 10 is a flowchart of the method. If this embodiment of this application is applied to the network architecture shown in FIG. 3A, remote UE described below may be a remote terminal device in the network architecture shown in FIG. 3A, relay UE 1 described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, remote UE described below may be a remote terminal device in the network architecture shown in FIG. 3B, relay UE 1 described below may be a relay terminal device in the network architecture shown in FIG. 3B, and a first network device described below may be a network device in the network architecture shown in FIG. 3B. Relay UE 2 and a second network device described below are not shown in FIG. 3A or FIG. 3B.

S1001: The remote UE communicates with the first network device through the relay UE 1.

For more content of S1001, refer to S401 in the embodiment shown in FIG. 4.

S1002: The remote UE determines that the relay UE 1 cannot continue to provide a relay service to the remote UE.

For a case in which the remote UE may determine that the relay UE 1 cannot continue to provide the relay service to the remote UE, refer to S502 in the embodiment shown in FIG. 5A.

If this embodiment of this application is combined with the embodiment shown in FIG. 4, or this embodiment of this application is considered as an example of the embodiment shown in FIG. 4, and if the remote UE determines that the relay UE cannot continue to provide the relay service to the remote UE, the remote UE may determine a first manner based on RSRP of a cell selected by the remote UE and/or RSRP of new relay UE selected by the remote UE. Alternatively, it may be considered that the embodiment shown in FIG. 5A and FIG. 5B is not combined with the embodiment shown in FIG. 4, the embodiment shown in FIG. 6A and FIG. 6B is not combined with the embodiment shown in FIG. 4, and this embodiment of this application is a fourth manner in which the embodiment shown in FIG. 5A and FIG. 5B and the embodiment shown in FIG. 6A and FIG. 6B are applied in combination with each other.

S 1003: The remote UE starts a first timer. The first timer may be stopped when the remote UE selects a suitable cell, or may be stopped when the remote UE selects new relay UE. The first timer is, for example, a timer T311, or may be another timer. It may be understood that the first timer in the embodiment shown in FIG. 10 can implement a function of the first timer in the embodiment shown in FIG. 5A and FIG. 5B, or can implement a function of the second timer in the embodiment shown in FIG. 6A and FIG. 6B.

For example, once the remote UE initiates RRC reestablishment, the remote UE starts the first timer; once the remote UE determines that the relay UE cannot continue to provide the relay service to the remote UE, the remote UE starts the first timer; the remote UE performs cell selection after initiating RRC reestablishment, and before performing cell selection, the remote UE starts the first timer; the remote UE starts the first timer before selecting new relay UE; or the remote UE starts the first timer before performing cell selection and before selecting new relay UE. Alternatively, the remote UE may start the first timer in another case.

S1004: The remote UE suspends all RBs other than a second SRB. The RB suspended by the remote UE is a Uu RB. The second SRB is, for example, an SRB 0, or may be another SRB. In this embodiment of this application, an example in which the second SRB is the SRB 0 is used.

For example, the remote UE may further release an SL RLC bearer of the suspended RB.

S1005: The remote UE selects or reselects new relay UE, the remote UE performs cell selection, or the remote UE selects or reselects new relay UE, and performs cell selection. An example in which the remote UE selects or reselects new relay UE, and performs cell selection is used below.

S1006: The remote UE performs RRC reestablishment through a Uu interface, or performs RRC reestablishment through the new relay UE.

For example, if the remote UE selects a suitable cell, and RSRP of the selected cell is less than or equal to a first RSRP threshold, but the remote UE does not select new relay UE, the remote UE may perform RRC reestablishment through the Uu interface. Alternatively, if the remote UE selects a suitable cell, but does not select new relay UE, the remote UE may perform RRC reestablishment through the Uu interface. Alternatively, if the remote UE selects a suitable cell, and RSRP of the selected cell is greater than a first RSRP threshold, the remote UE may perform RRC reestablishment through the Uu interface.

For another example, if the remote UE selects new relay UE, and does not select a suitable cell, the remote UE may perform RRC reestablishment through the new relay UE. Alternatively, if the remote UE selects new relay UE and a suitable cell, and a difference between RSRP of the selected cell and RSRP of the new relay UE is less than or equal to a first RSRP threshold, it indicates that there is relatively good signal quality if the remote UE performs RRC reestablishment through the new relay UE. In this case, the remote UE may perform RRC reestablishment through the new relay UE.

For another example, if the remote UE selects a suitable cell, and RSRP of the selected cell is greater than a first RSRP threshold, the remote UE may perform RRC reestablishment through the Uu interface. Alternatively, if the remote UE selects a suitable cell, and the remote UE cannot serve as a remote terminal device, or the remote UE cannot communicate with a network through other UE, the remote UE may perform RRC reestablishment through the Uu interface.

For another example, if the remote UE selects a suitable cell, RSRP of the selected cell is less than or equal to a second RSRP threshold, and the remote UE selects new relay UE, the remote UE may perform RRC reestablishment through the new relay UE. Alternatively, if the remote UE selects a suitable cell, and RSRP of the selected cell is less than or equal to a first RSRP threshold, the remote UE may perform RRC reestablishment through the Uu interface.

For example, the first RSRP threshold may be specified in a protocol, or may be configured by the network device. In addition, the second RSRP threshold is used in the embodiment shown in FIG. 9. The first RSRP threshold may be equal to or may not be equal to the second RSRP threshold.

If selecting new relay UE or a suitable cell, the remote UE may stop the first timer. If performing RRC reestablishment through the Uu interface, the remote UE may continue to perform S508 to S516 in the embodiment shown in FIG. 5A and FIG. 5B. Alternatively, if performing RRC reestablishment through the new relay UE, the remote UE may continue to perform S608 to S614 in the embodiment shown in FIG. 6B. However, if the remote UE does not select new relay UE or a suitable cell when the first timer expires, the remote UE enters an RRC idle mode, and the procedure ends.

In this embodiment of this application, if the remote UE determines that the relay UE cannot continue to provide the relay service to the remote UE, the remote UE may select, based on signal quality (for example, the RSRP), whether to initiate RRC reestablishment through the Uu interface or initiate RRC reestablishment through the new relay UE. In this way, more opportunities for performing RRC reestablishment can be provided to the remote UE, and signal quality for performing RRC reestablishment by the remote UE can be improved, to increase a success rate of performing RRC reestablishment by the remote UE.

In this embodiment of this application, if the remote UE determines that the relay UE cannot continue to provide the relay service to the remote UE, the remote UE may select, based on signal quality (for example, the RSRP), whether to initiate RRC reestablishment through the Uu interface or initiate RRC reestablishment through the new relay UE. In this way, more opportunities for performing RRC reestablishment can be provided to the remote UE, and signal quality for performing RRC reestablishment by the remote UE can be improved, to increase a success rate of performing RRC reestablishment by the remote UE.

In any one of the embodiment shown in FIG. 5A and FIG. 5B to the embodiment shown in FIG. 10, the remote UE determines that the relay UE cannot continue to provide the relay service to the remote UE. However, there is another possibility that the relay UE may determine that the relay UE cannot continue to provide the relay service to the remote UE. How the relay UE and the remote UE perform processing in this scenario is described below.

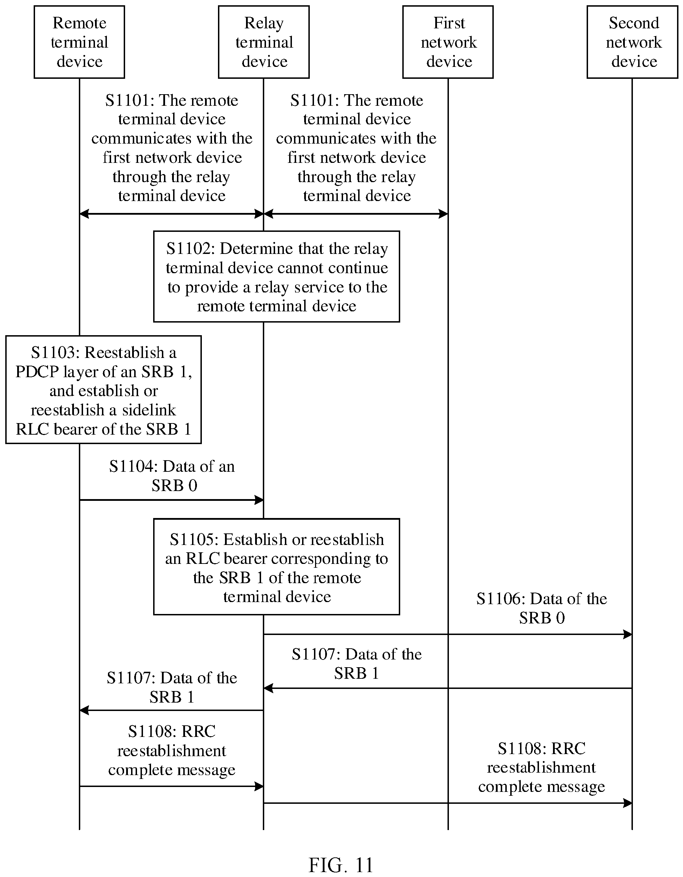

An embodiment of this application provides an eighth communication method. FIG. 11 is a flowchart of the method. If this embodiment of this application is applied to the network architecture shown in FIG. 3A, remote UE described below may be a remote terminal device in the network architecture shown in FIG. 3A, relay UE described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, remote UE described below may be a remote terminal device in the network architecture shown in FIG. 3B, relay UE described below may be a relay terminal device in the network architecture shown in FIG. 3B, and a first network device described below may be a network device in the network architecture shown in FIG. 3B.

S1101: The remote UE communicates with the first network device through the relay UE.

For more content of S1101, refer to S401 in the embodiment shown in FIG. 4.

S1102: The relay UE determines that the relay UE cannot continue to provide a relay service to the remote UE.

For example, if detecting an RLF between the relay UE and the first network device, the relay UE may determine that the relay UE cannot continue to provide the relay service to the remote UE. Then, the relay UE may perform RRC reestablishment. After initiating RRC reestablishment, the relay UE may perform cell selection. For example, in a cell selection process, the relay UE may preferentially select a cell that supports a layer 2 relay technology. For example, the relay UE selects a cell that supports the layer 2 relay technology. If there is no suitable cell that supports the layer 2 relay technology, the relay UE may select a cell that does not support the layer 2 relay technology. For more processes of performing RRC reestablishment by the relay UE, refer to the process of performing RRC reestablishment by the remote UE described in the embodiment shown in FIG. 5A and FIG. 5B.

Optionally, if the relay UE detects the RLF between the relay UE and the first network device, the relay UE may further send third indication information to the remote UE. The third indication information may indicate to perform RRC reestablishment (in this case, the third indication information may also be referred to as RRC reestablishment indication information), or may indicate that an RLF occurs on the relay UE (in this case, the third indication information may also be referred to as RLF indication information). A Uu RLF occurs on the relay UE. After receiving the third indication information, the remote UE may suspend all RBs other than a second SRB. The RB suspended by the remote UE is a Uu RB. The second SRB is, for example, an SRB 0, or may be another SRB. In this embodiment of this application, an example in which the second SRB is the SRB 0 is used. After receiving the third indication information, the remote UE may send response information of the third indication information to the relay UE, or may not send response information of the third indication information to the relay UE.

Alternatively, if detecting the RLF between the relay UE and the first network device, the relay UE may not send third indication information to the remote UE, but may send the third indication information to the remote UE after completing RRC reestablishment. In this case, the third indication information may indicate that RRC reestablishment is performed, indicate that the relay UE completes RRC reestablishment, or the like. In this case, the third indication information may include an identifier of a serving cell of the relay UE. After receiving the third indication information, the remote UE may determine shortMAC-I based on the identifier of the serving cell. In addition, the remote UE may start a first timer, and perform S1103. The first timer is, for example, T301, or may be another timer. The first timer may be used by the remote UE to receive an RRC reestablishment message. For example, the relay UE sends an RRC reestablishment request message to a second network device. After receiving the RRC reestablishment message, the second network device sends an RRC reestablishment message to the relay UE. After receiving the RRC reestablishment request message, the relay UE sends an RRC reestablishment complete message to the second network device. After the relay UE sends the RRC reestablishment complete message to the second network device, it may be considered that the relay UE completes RRC reestablishment. The second network device is a network device corresponding to a cell (for example, referred to as a second cell) selected by the relay UE through cell selection in an RRC reestablishment process. The second network device and the first network device may be a same network device or different network devices. The RRC reestablishment process performed by the relay UE is not described.

If the relay UE sends the third indication information to the remote UE after detecting the RLF between the relay UE and the first network device, after completing RRC reestablishment, the relay UE may further send an identifier of a serving cell of the relay UE to the remote UE. After receiving the identifier of the serving cell of the relay UE, the remote UE may determine shortMAC-I based on the identifier of the serving cell. In addition, the remote UE may start a first timer, and perform S1103.

This embodiment of this application may be applied in combination with the embodiment shown in FIG. 4, or may be independently applied. If this embodiment of this application is applied in combination with the embodiment shown in FIG. 4, after the relay UE sends the third indication information to the remote UE, the remote UE may determine, based on the third indication information, that the relay UE cannot continue to provide the relay service to the remote UE, and then the remote UE may initiate RRC reestablishment in a first manner. The first manner may be selected by the remote UE. In this embodiment of this application, an example in which the first manner is a manner of initiating RRC reestablishment through the original relay UE is used.

In addition, in the RRC reestablishment process performed by the relay UE, if a timer T311 of the relay UE expires, T301 of the relay UE expires, the cell selected by the relay UE is no longer suitable, the relay UE enters an RRC idle mode, or the like, it indicates that the relay UE fails to perform RRC reestablishment. In this case, the relay UE may send fourth indication information to the remote UE. The fourth indication information may indicate that the RRC reestablishment fails (in this case, the fourth indication information may also be referred to as RRC reestablishment failure indication information), or indicate (or request) to release a connection (for example, a PC5-RRC connection) to the remote UE. If receiving the fourth indication information, the remote UE may enter an RRC idle mode, and the procedure ends. Alternatively, if receiving the fourth indication information, the remote UE may select or reselect new relay UE, and then perform RRC reestablishment through the new relay UE. For this process, refer to the embodiment shown in FIG. 6A and FIG. 6B. Alternatively, if receiving the fourth indication information, the remote UE may initiate RRC reestablishment through a Uu interface. For this process, refer to the embodiment shown in FIG. 5A and FIG. 5B.

If the relay UE has another service of the relay UE in addition to the relay service, the relay UE needs to enter an RRC connected mode. In this case, if the relay UE does not select a suitable cell, or selects a cell that does not support the layer 2 relay technology, the relay UE may re-initiate RRC reestablishment. Alternatively, if the relay UE has another service of the relay UE in addition to the relay service, and if the relay UE selects a cell that does not support the layer 2 relay technology, the relay UE may continue to perform RRC reestablishment. Alternatively, if the relay UE has only the relay service, and if the relay UE does not select a suitable cell, or selects a cell that does not support the layer 2 relay technology, the relay UE may enter the RRC idle mode.

S 1103: The remote UE reestablishes a PDCP entity of a first SRB, and establishes or reestablishes a first RLC bearer of the first SRB, to resume the SRB 1. The first RLC bearer of the first SRB is, for example, an SL RLC bearer of the first SRB. The first SRB is, for example, the SRB 1, or may be another SRB. In this embodiment of this application, an example in which the first SRB is the SRB 1 is used.

For example, after sending an RRC reestablishment request message (the message needs to be sent to the second network device) to the relay UE, the remote UE may reestablish a PDCP layer of the SRB 1, and establish or reestablish the SL RLC bearer of the SRB 1, to resume the SRB 1.

For more content of S1103, refer to S609 in the embodiment shown in FIG. 6B.

S1104: The remote UE sends data of the SRB 0 to the relay UE. Correspondingly, the relay UE receives the data of the SRB 0 from the remote UE. The data of the SRB 0 is, for example, an RLC SDU, and the RLC PDU may include the RRC reestablishment request message. For example, the remote UE may send the RLC SDU to the relay UE through an SL RLC bearer corresponding to the SRB 0, and the relay UE receives the RLC SDU. The RLC SDU is to be sent to the second network device, and the second network device is a network device accessed by the relay UE. A message sent by the remote UE to the second network device needs to be relayed through the relay UE. Therefore, the remote UE sends the data of the SRB 0 to the relay UE.

S1105: The relay UE establishes or reestablishes an RLC bearer corresponding to the SRB 1 of the remote UE.

For more content of S1105, refer to S611 in the embodiment shown in FIG. 6B. The relay UE 2 in S611 may be replaced with the relay UE in this embodiment of this application.

S1106: The relay UE sends the data of the SRB 0 from the remote UE to the second network device. Correspondingly, the second network device receives the data of the SRB 0 from the relay UE. For example, the relay UE may send the data of the SRB 0 to the second network device through a Uu RLC bearer of the SRB 0.

For more content of S1106, refer to S612 in the embodiment shown in FIG. 6B. The relay UE 2 in S612 may be replaced with the relay UE in this embodiment of this application.

S1107: The second network device sends data of the SRB 1 to the remote UE through the relay UE. Correspondingly, the remote UE receives the data of the SRB 1 from the second network device through the relay UE.

For more content of S1107, refer to S613 in the embodiment shown in FIG. 6B. The relay UE 2 in S613 may be replaced with the relay UE in this embodiment of this application, and the third timer in S613 may be replaced with the first timer in this embodiment of this application.

S1108: The remote UE sends an RRC reestablishment complete message to the second network device through the relay UE. Correspondingly, the second network device receives the RRC reestablishment complete message from the remote UE through the relay UE.

For more content of S1108, refer to S614 in the embodiment shown in FIG. 6B. The relay UE 2 in S614 may be replaced with the relay UE in this embodiment of this application.

In this embodiment of this application, if the relay UE determines that the relay UE cannot continue to provide the relay service to the remote UE, the relay UE may perform RRC reestablishment, and may trigger the remote UE to perform RRC reestablishment. The remote UE may continue to access a network through the relay UE that completes RRC reestablishment, and does not need to select other relay UE, to reduce power consumption caused by selecting the other relay UE by the remote UE. In addition, the remote UE accesses the network through the relay UE, and the relay UE is in the RRC connected mode. Therefore, occurrence of a case in which RRC reestablishment fails due to poor signal quality of the cell when the remote UE initiates RRC reestablishment through the Uu interface can be reduced. This improves service continuity of the remote UE.

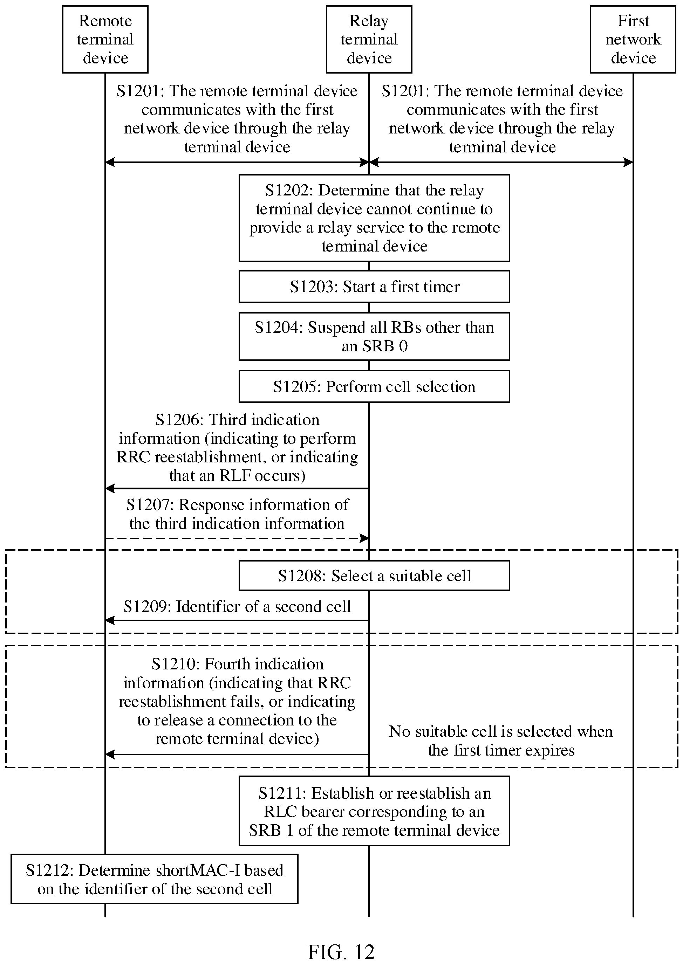

An embodiment of this application provides a ninth communication method. FIG. 12 is a flowchart of the method. In the method, relay UE still determines that the relay UE cannot continue to provide a relay service to remote UE. In the method, efficiency of performing RRC reestablishment by the remote UE can be improved. If this embodiment of this application is applied to the network architecture shown in FIG. 3A, the remote UE described below may be a remote terminal device in the network architecture shown in FIG. 3A, the relay UE described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, the remote UE described below may be a remote terminal device in the network architecture shown in FIG. 3B, the relay UE described below may be a relay terminal device in the network architecture shown in FIG. 3B, and a first network device described below may be a network device in the network architecture shown in FIG. 3B.

S1201: The remote UE communicates with the first network device through the relay UE.

For more content of S1201, refer to S401 in the embodiment shown in FIG. 4.

S1202: The relay UE determines that the relay UE cannot continue to provide a relay service to the remote UE.

For example, if detecting an RLF between the relay UE and the first network device, the relay UE may determine that the relay UE cannot continue to provide the relay service to the remote UE.

S1203: The relay UE starts a first timer. The first timer may be stopped when the relay UE selects a suitable cell.

For example, once the relay UE initiates RRC reestablishment, the relay UE starts the first timer; once the relay UE determines that the relay UE cannot continue to provide the relay service to the remote UE, the relay UE starts the first timer; or the relay UE performs cell selection after initiating RRC reestablishment, and before performing cell selection, the relay UE starts the first timer. Alternatively, the relay UE may start the first timer in another case. The first timer is, for example, a timer T311, or may be another timer.

S1204: The relay UE suspends all RBs other than an SRB 0. The RB suspended by the relay UE is a Uu RB. For example, the relay UE may further release an SL RLC bearer of the suspended RB.

S1205: The relay UE performs cell selection. For example, in a cell selection process, the relay UE may preferentially select a cell that supports a layer 2 relay technology. For example, the relay UE selects a cell that supports the layer 2 relay technology. If there is no suitable cell that supports the layer 2 relay technology, the relay UE may select a cell that does not support the layer 2 relay technology.

S1206: The relay UE sends third indication information to the remote UE. Correspondingly, the remote UE receives the third indication information from the relay UE. The third indication information may indicate to perform RRC reestablishment (in this case, the third indication information may also be referred to as RRC reestablishment indication information), or may indicate that an RLF occurs on the relay UE (in this case, the third indication information may also be referred to as RLF indication information). A Uu RLF occurs on the relay UE. After receiving the third indication information, the remote UE may suspend all RBs other than a second SRB. The RB suspended by the remote UE is a Uu RB. The second SRB is, for example, an SRB 0, or may be another SRB. In this embodiment of this application, an example in which the second SRB is the SRB 0 is used.

This embodiment of this application may be applied in combination with the embodiment shown in FIG. 4, or may be independently applied. If this embodiment of this application is applied in combination with the embodiment shown in FIG. 4, after the relay UE sends the third indication information to the remote UE, the remote UE may determine, based on the third indication information, that the relay UE cannot continue to provide the relay service to the remote UE, and then the remote UE may initiate RRC reestablishment in a first manner. The first manner may be selected by the remote UE. In this embodiment of this application, an example in which the first manner is a manner of initiating RRC reestablishment through the original relay UE is used.

S1207: The remote UE sends response information of the third indication information to the relay UE. Correspondingly, the relay UE receives the response information of the third indication information from the remote UE.

After receiving the third indication information, the remote UE may send the response information of the third indication information to the relay UE, or may not send the response information of the third indication information to the relay UE. In other words, S1207 is an optional step.

S1208: The relay UE selects a suitable cell. For example, the relay UE selects a cell that supports the layer 2 relay technology. For example, the cell selected by the relay UE is referred to as a second cell. For example, the second cell corresponds to a second network device.

S1209: The relay UE sends an identifier of the second cell to the remote UE. Correspondingly, the remote UE receives the identifier of the second cell from the relay UE. If selecting a suitable cell, the relay UE may send an identifier of the selected cell to the remote UE, so that the remote UE determines shortMAC-I based on the identifier of the cell. Then, S1211 is performed.

S1210: If the relay UE does not select a suitable cell (for example, the relay UE does not select a cell that supports the layer 2 relay technology) when the first timer expires, the relay UE sends fourth indication information to the remote UE. Correspondingly, the remote UE receives the fourth indication information from the relay UE.

The fourth indication information may indicate that the RRC reestablishment fails (in this case, the fourth indication information may also be referred to as RRC reestablishment failure indication information), or indicate (or request) to release a connection (for example, a PC5-RRC connection) to the remote UE. If receiving the fourth indication information, the remote UE may enter an RRC idle mode, and the procedure ends. Alternatively, if receiving the fourth indication information, the remote UE may select or reselect new relay UE, and then perform RRC reestablishment through the new relay UE. For this process, refer to the embodiment shown in FIG. 6A and FIG. 6B. Alternatively, if receiving the fourth indication information, the remote UE may initiate RRC reestablishment through a Uu interface. For this process, refer to the embodiment shown in FIG. 5A and FIG. 5B.

In addition, if the relay UE has another service of the relay UE in addition to the relay service, the relay UE needs to enter an RRC connected mode. When the first timer expires, if the relay UE does not select a suitable cell, or selects a cell that does not support the layer 2 relay technology, the relay UE may perform RRC reestablishment. However, the RRC reestablishment process is not the process described in S1211. Alternatively, if the relay UE has another service of the relay UE in addition to the relay service, and if the relay UE selects, before the first timer expires, a cell that does not support the layer 2 relay technology, the relay UE may continue to perform RRC reestablishment. However, the RRC reestablishment process is not the process described in S1211. Alternatively, if the relay UE has only the relay service, and when the first timer expires, if the relay UE does not select a suitable cell, or selects a cell that does not support the layer 2 relay technology, the relay UE may enter an RRC idle mode.

S1208 and S1209 and S1210 are two parallel solutions, and either of the solutions is performed based on a status of selecting a cell by the relay UE. In addition, S1211 is not performed after S1210 is performed.

S1211: The relay UE establishes or reestablishes an RLC bearer corresponding to an SRB 1 of the remote UE.

For more content of S1211, refer to S611 in the embodiment shown in FIG. 6B, or refer to S1105 in the embodiment shown in FIG. 11. In addition, the RRC reestablishment process performed by the relay UE is not described.

S1212: The remote UE determines shortMAC-1 based on the identifier of the second cell.

After receiving the identifier of the serving cell of the relay UE, the remote UE may determine shortMAC-1 based on the identifier of the serving cell. In addition, the remote UE may perform steps such as S1103, S1104, and S1106 to S1108 in the embodiment shown in FIG. 11. Details are not described.

In this embodiment of this application, if the relay UE cannot continue to provide the relay service to the remote UE, the relay UE may send the third indication information to the remote UE when initiating RRC reestablishment, so that the remote UE can initiate RRC reestablishment as soon as possible. This improves efficiency of performing RRC reestablishment by the remote UE, and correspondingly improves service continuity of the remote UE.

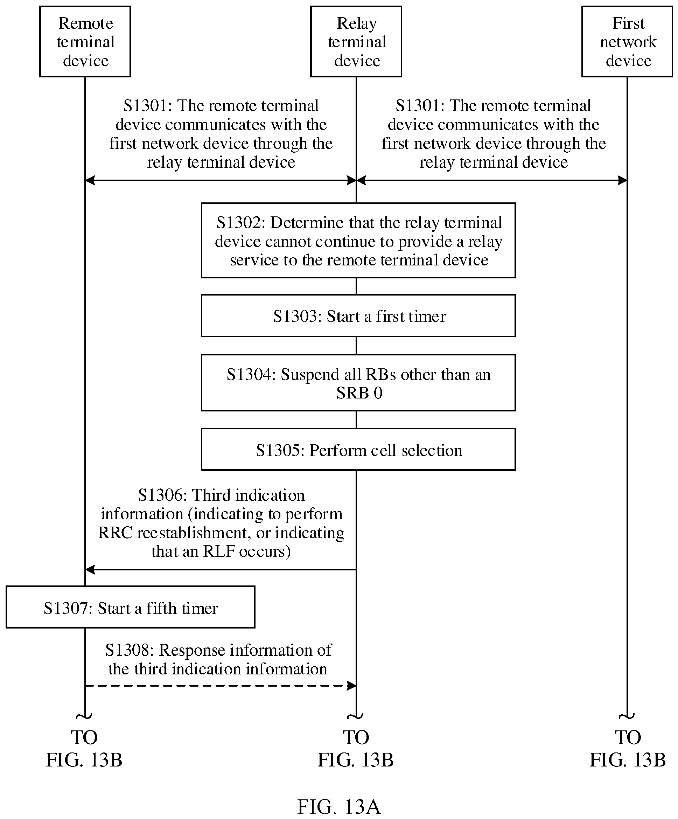

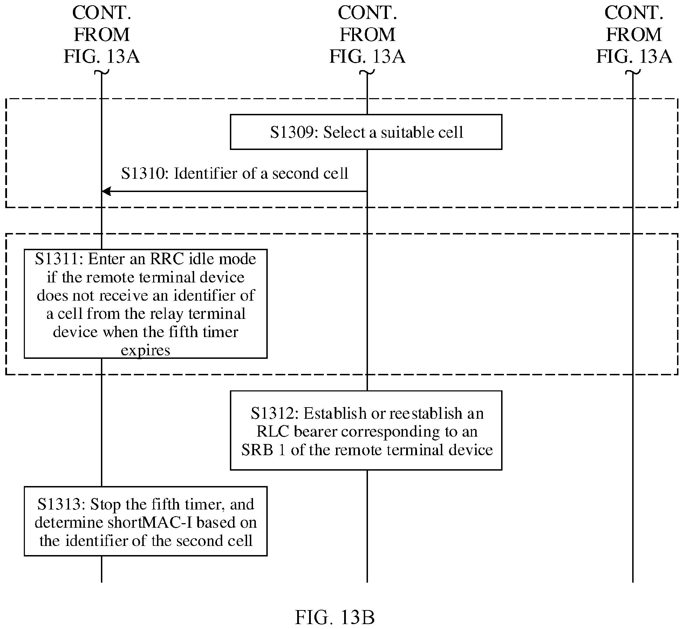

An embodiment of this application provides a tenth communication method. FIG. 13A and FIG. 13B are a flowchart of the method. In the method, relay UE still determines that the relay UE cannot continue to provide a relay service to remote UE. In the method, efficiency of performing RRC reestablishment by the remote UE can be improved. If this embodiment of this application is applied to the network architecture shown in FIG. 3A, the remote UE described below may be a remote terminal device in the network architecture shown in FIG. 3A, the relay UE described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, the remote UE described below may be a remote terminal device in the network architecture shown in FIG. 3B, the relay UE described below may be a relay terminal device in the network architecture shown in FIG. 3B, and a first network device described below may be a network device in the network architecture shown in FIG. 3B.

S1301: The remote UE communicates with the first network device through the relay UE.

For more content of S1301, refer to S401 in the embodiment shown in FIG. 4.

S1302: The relay UE determines that the relay UE cannot continue to provide a relay service to the remote UE.

For example, if detecting an RLF between the relay UE and the first network device, the relay UE may determine that the relay UE cannot continue to provide the relay service to the remote UE.

S1303: The relay UE starts a first timer. The first timer may be stopped when the relay UE selects a suitable cell.

For example, once the relay UE initiates RRC reestablishment, the relay UE starts the first timer; once the relay UE determines that the relay UE cannot continue to provide the relay service to the remote UE, the relay UE starts the first timer; or the relay UE performs cell selection after initiating RRC reestablishment, and before performing cell selection, the relay UE starts the first timer. Alternatively, the relay UE may start the first timer in another case. The first timer is, for example, a timer T311, or may be another timer.

S1304: The relay UE suspends all RBs other than an SRB 0. The RB suspended by the relay UE is a Uu RB. For example, the relay UE may further release an SL RLC bearer of the suspended RB.

S1305: The relay UE performs cell selection.

S1306: The relay UE sends third indication information to the remote UE. Correspondingly, the remote UE receives the third indication information from the relay UE. The third indication information may indicate to perform RRC reestablishment (in this case, the third indication information may also be referred to as RRC reestablishment indication information), or may indicate that an RLF occurs on the relay UE (in this case, the third indication information may also be referred to as RLF indication information). A Uu RLF occurs on the relay UE. After receiving the third indication information, the remote UE may suspend all RBs other than a second SRB. The RB suspended by the remote UE is a Uu RB. The second SRB is, for example, an SRB 0, or may be another SRB. In this embodiment of this application, an example in which the second SRB is the SRB 0 is used.

This embodiment of this application may be applied in combination with the embodiment shown in FIG. 4, or may be independently applied. If this embodiment of this application is applied in combination with the embodiment shown in FIG. 4, after the relay UE sends the third indication information to the remote UE, the remote UE may determine, based on the third indication information, that the relay UE cannot continue to provide the relay service to the remote UE, and then the remote UE may initiate RRC reestablishment in a first manner. The first manner may be selected by the remote UE. In this embodiment of this application, an example in which the first manner is a manner of initiating RRC reestablishment through the original relay UE is used.

S1307: The remote UE starts a fifth timer. For example, timing duration of the fifth timer may be specified in a protocol, or may be configured by the network device.

S1308: The remote UE sends response information of the third indication information to the relay UE. Correspondingly, the relay UE receives the response information of the third indication information from the remote UE.

After receiving the third indication information, the remote UE may send the response information of the third indication information to the relay UE, or may not send the response information of the third indication information to the relay UE. In other words, S1308 is an optional step. If S1308 is performed, S1307 may be performed before S1308, S1307 may be performed after S1308, or S1307 and S1308 may be simultaneously performed.

S1309: The relay UE selects a suitable cell. For example, the relay UE selects a cell that supports a layer 2 relay technology. For example, the cell selected by the relay UE is referred to as a second cell. For example, the second cell corresponds to a second network device.

S1310: The relay UE sends an identifier of the second cell to the remote UE. Correspondingly, the remote UE receives the identifier of the second cell from the relay UE. If selecting a suitable cell, the relay UE may send an identifier of the selected cell to the remote UE, so that the remote UE determines shortMAC-1 based on the identifier of the cell. If the remote UE receives the identifier of the second cell before the fifth timer expires, S1312 is performed.

S1311: If the remote UE does not receive an identifier of a cell from the relay UE when the fifth timer expires, the remote UE enters an RRC idle mode.

For example, if the relay UE does not select a suitable cell before the first timer expires, the relay UE may not send an identifier of the selected cell to the remote UE. For the remote UE, when the fifth timer expires, if the remote UE does not receive the identifier of the serving cell of the relay UE from the relay UE, the remote UE may enter the RRC idle mode, or the remote UE may initiate RRC reestablishment through a Uu interface, the remote UE may initiate RRC reestablishment by selecting a new relay, or the like. In S1311, an example in which the remote UE enters the RRC idle mode is used.

In addition, if the relay UE has another service of the relay UE in addition to the relay service, the relay UE needs to enter an RRC connected mode. When the first timer expires, if the relay UE does not select a suitable cell, or selects a cell that does not support the layer 2 relay technology, the relay UE may perform RRC reestablishment. However, the RRC reestablishment process is not the process described in S1312. Alternatively, if the relay UE has only the relay service, and when the first timer expires, if the relay UE does not select a suitable cell, or selects a cell that does not support the layer 2 relay technology, the relay UE may enter an RRC idle mode.

S1309 and S1310 and S1311 are two parallel solutions, and either of the solutions is performed based on whether the fifth timer expires. In addition, S1311 is not performed after S1310 is performed.

S1312: The relay UE establishes or reestablishes an RLC bearer corresponding to an SRB 1 of the remote UE.

For more content of S1312, refer to S611 in the embodiment shown in FIG. 6B, or refer to S1105 in the embodiment shown in FIG. 11. In addition, the RRC reestablishment process performed by the relay UE is not described.

S1313: The remote UE stops the fifth timer, and determines shortMAC-1 based on the identifier of the second cell.

After receiving the identifier of the second cell, the remote UE may stop the fifth timer, and determine shortMAC-1 based on the identifier of the serving cell. In addition, the remote UE may perform steps such as S1103, S1104, and S1106 to S1108 in the embodiment shown in FIG. 11. Details are not described.

In this embodiment of this application, if the relay UE cannot continue to provide the relay service to the remote UE, the relay UE may send the third indication information to the remote UE when initiating RRC reestablishment, so that the remote UE can initiate RRC reestablishment as soon as possible. This improves efficiency of performing RRC reestablishment by the remote UE, and correspondingly improves service continuity of the remote UE. In addition, if the relay UE does not select a suitable cell, the relay UE does not need to notify the remote UE, and the remote UE may determine a subsequent behavior based on the fifth timer. This reduces signaling overheads.

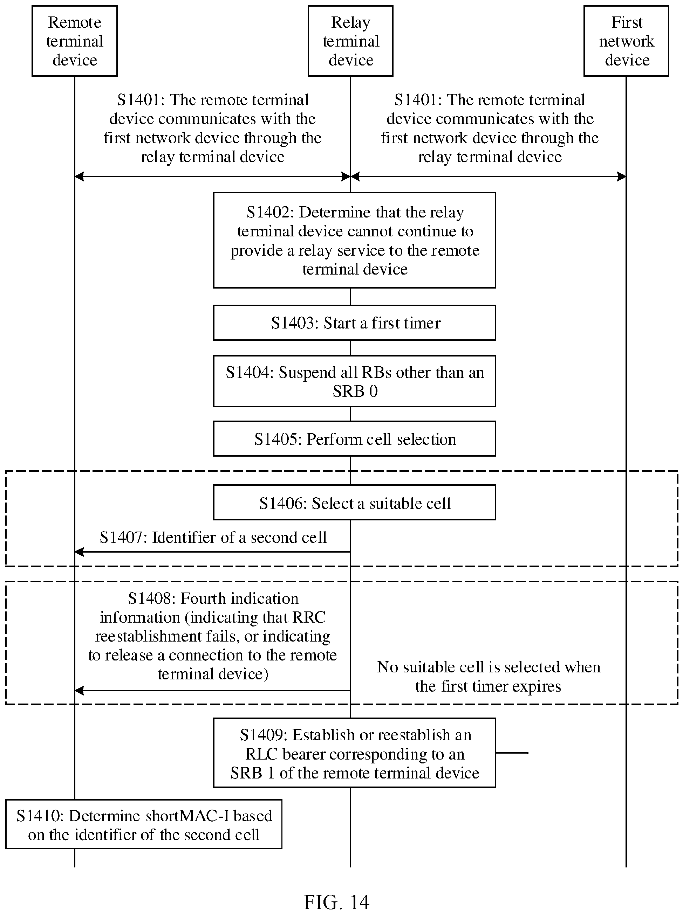

An embodiment of this application provides an eleventh communication method. FIG. 14 is a flowchart of the method. In the method, relay UE still determines that the relay UE cannot continue to provide a relay service to remote UE. In the method, efficiency of performing RRC reestablishment by the remote UE can be improved. If this embodiment of this application is applied to the network architecture shown in FIG. 3A, the remote UE described below may be a remote terminal device in the network architecture shown in FIG. 3A, the relay UE described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, the remote UE described below may be a remote terminal device in the network architecture shown in FIG. 3B, the relay UE described below may be a relay terminal device in the network architecture shown in FIG. 3B, and a first network device described below may be a network device in the network architecture shown in FIG. 3B.

S1401: The remote UE communicates with the first network device through the relay UE.

For more content of S1401, refer to S401 in the embodiment shown in FIG. 4.

S1402: The relay UE determines that the relay UE cannot continue to provide a relay service to the remote UE.

For example, if detecting an RLF between the relay UE and the first network device, the relay UE may determine that the relay UE cannot continue to provide the relay service to the remote UE.

S1403: The relay UE starts a first timer. The first timer may be stopped when the relay UE selects a suitable cell.

For example, once the relay UE initiates RRC reestablishment, the relay UE starts the first timer; once the relay UE determines that the relay UE cannot continue to provide the relay service to the remote UE, the relay UE starts the first timer; or the relay UE performs cell selection after initiating RRC reestablishment, and before performing cell selection, the relay UE starts the first timer. Alternatively, the relay UE may start the first timer in another case. The first timer is, for example, a timer T311, or may be another timer.

S1404: The relay UE suspends all RBs other than an SRB 0. The RB suspended by the relay UE is a Uu RB. For example, the relay UE may further release an SL RLC bearer of the suspended RB.

S1405: The relay UE performs cell selection.

S1406: The relay UE selects a suitable cell. For example, the relay UE selects a cell that supports a layer 2 relay technology. For example, the cell selected by the relay UE is referred to as a second cell. For example, the second cell corresponds to a second network device.

S 1407: The relay UE sends an identifier of the second cell to the remote UE. Correspondingly, the remote UE receives the identifier of the second cell from the relay UE. If selecting a suitable cell, the relay UE may send an identifier of the selected cell to the remote UE, so that the remote UE determines shortMAC-1 based on the identifier of the cell. Then, S1409 is performed.

S1408: If the relay UE does not select a suitable cell (for example, the relay UE does not select a cell that supports the layer 2 relay technology) when the first timer expires, the relay UE sends fourth indication information to the remote UE. Correspondingly, the remote UE receives the fourth indication information from the relay UE.

The fourth indication information may indicate that the RRC reestablishment fails (in this case, the fourth indication information may also be referred to as RRC reestablishment failure indication information), or indicate (or request) to release a connection (for example, a PC5-RRC connection) to the remote UE. If receiving the fourth indication information, the remote UE may enter an RRC idle mode, and the procedure ends. Alternatively, if receiving the fourth indication information, the remote UE may select or reselect new relay UE, and then perform RRC reestablishment through the new relay UE. For this process, refer to the embodiment shown in FIG. 6A and FIG. 6B. Alternatively, if receiving the fourth indication information, the remote UE may initiate RRC reestablishment through a Uu interface. For this process, refer to the embodiment shown in FIG. 5A and FIG. 5B.

In addition, if the relay UE has another service of the relay UE in addition to the relay service, the relay UE needs to enter an RRC connected mode. When the first timer expires, if the relay UE does not select a suitable cell, or selects a cell that does not support the layer 2 relay technology, the relay UE may perform RRC reestablishment. However, the RRC reestablishment process is not the process described in S1409. Alternatively, if the relay UE has only the relay service, and when the first timer expires, if the relay UE does not select a suitable cell, or selects a cell that does not support the layer 2 relay technology, the relay UE may enter an RRC idle mode.

S1406 and S1407 and S1408 are two parallel solutions, and either of the solutions is performed based on a status of selecting a cell by the relay UE. In addition, S1409 is not performed after S1408 is performed.

S1409: The relay UE establishes or reestablishes an RLC bearer corresponding to an SRB 1 of the remote UE.

For more content of S1409, refer to S611 in the embodiment shown in FIG. 6B, or refer to S1105 in the embodiment shown in FIG. 11. In addition, the RRC reestablishment process performed by the relay UE is not described.

S1410: The remote UE determines shortMAC-1 based on the identifier of the second cell.

This embodiment of this application may be applied in combination with the embodiment shown in FIG. 4, or may be independently applied. If this embodiment of this application is applied in combination with the embodiment shown in FIG. 4, after the relay UE sends the identifier of the second cell to the remote UE, the remote UE may determine that the relay UE cannot continue to provide the relay service to the remote UE, and then the remote UE may initiate RRC reestablishment in a first manner. The first manner may be selected by the remote UE. In this embodiment of this application, an example in which the first manner is a manner of initiating RRC reestablishment through the original relay UE is used.

After receiving the identifier of the serving cell of the relay UE, the remote UE may determine shortMAC-I based on the identifier of the serving cell. In addition, the remote UE may perform steps such as S1103, S1104, and S1106 to S1108 in the embodiment shown in FIG. 11. Details are not described.

Optionally, the remote UE may send acknowledgment information to the relay UE. The acknowledgment information is used to acknowledge that RRC reestablishment is to be performed through the relay UE.

In this embodiment of this application, if the relay UE cannot continue to provide the relay service to the remote UE, the relay UE may independently initiate RRC reestablishment. If the relay UE selects a suitable cell, the relay UE can implicitly indicate, by sending an identifier of the selected cell to the remote UE, that an original RRC connection to the relay UE cannot continue to provide the relay service to the remote UE, and does not need to send third indication information to the remote UE. This reduces signaling overheads, enables the remote UE to initiate RRC reestablishment as soon as possible, and improves efficiency of performing RRC reestablishment by the remote UE.

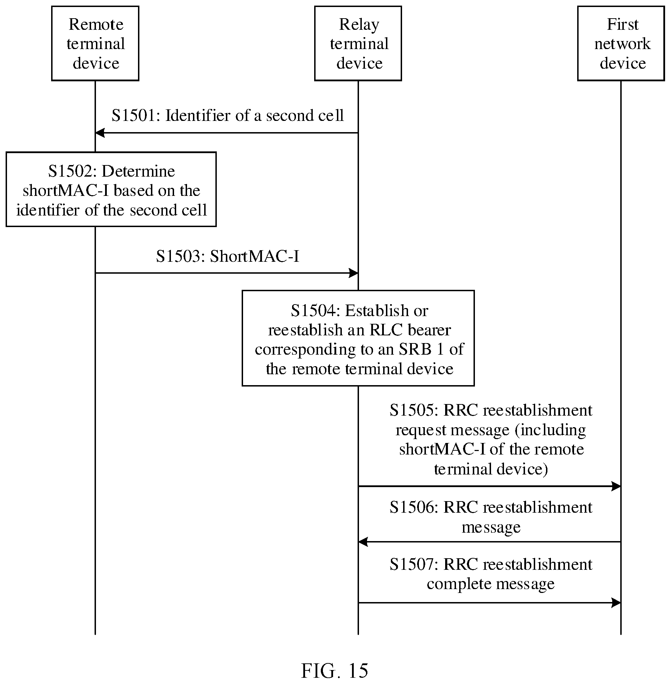

An embodiment of this application provides a twelfth communication method. FIG. 15 is a flowchart of the method. In the method, relay UE still determines that the relay UE cannot continue to provide a relay service to remote UE. In the method, efficiency of performing RRC reestablishment by the remote UE can be improved. If this embodiment of this application is applied to the network architecture shown in FIG. 3A, the remote UE described below may be a remote terminal device in the network architecture shown in FIG. 3A, the relay UE described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, the remote UE described below may be a remote terminal device in the network architecture shown in FIG. 3B, the relay UE described below may be a relay terminal device in the network architecture shown in FIG. 3B, and a first network device described below may be a network device in the network architecture shown in FIG. 3B.

S1501: The relay UE sends an identifier of a second cell to the remote UE. Correspondingly, the remote UE receives the identifier of the second cell from the relay UE.

The second cell is, for example, a cell selected by the relay UE. This embodiment of this application may be combined with any one of the embodiment shown in FIG. 11 to the embodiment shown in FIG. 14. For a manner in which the relay UE sends the identifier of the second cell to the remote UE, refer to the description of the corresponding embodiment.

S1502: The remote UE determines shortMAC-1 based on the identifier of the second cell.

S1503: The remote UE sends shortMAC-1 to the relay UE. Correspondingly, the relay UE receives shortMAC-1 from the remote UE.

S1504: The relay UE establishes or reestablishes an RLC bearer corresponding to a first SRB of the remote UE. The first SRB is, for example, an SRB 1.

For more content of S1504, refer to S611 in the embodiment shown in FIG. 6B, or refer to S1105 in the embodiment shown in FIG. 11. In addition, the RRC reestablishment process performed by the relay UE is not described.

S1505: The relay UE sends an RRC reestablishment request message to a second network device. Correspondingly, the second network device receives the RRC reestablishment request message from the relay UE.

The RRC reestablishment request message may include shortMAC-1 determined by the relay UE, and include an identifier of the relay UE. For example, the identifier of the relay UE is a cell radio network temporary identifier (cell radio network temporary identifier, C-RNTI) of the relay UE. In addition, the RRC reestablishment request message may further include shortMAC-1 determined by the remote UE and an identifier of the remote UE. The identifier of the remote UE is, for example, a local ID (local ID) or a C-RNTI of the remote UE. Certainly, the RRC reestablishment request message may further include other corresponding information. This is not limited in this embodiment of this application.

S1506: The second network device sends an RRC reestablishment message to the relay UE. Correspondingly, the relay UE receives the RRC reestablishment message from the second network device. For example, the relay UE may receive the RRC reestablishment message through a Uu RLC bearer corresponding to the remote UE.

The RRC reestablishment message may indicate that the relay UE is allowed to perform RRC reestablishment, or may indicate that the remote UE is allowed to perform RRC reestablishment. Optionally, the relay UE may send the RRC reestablishment message to the remote UE. For example, the relay UE may send the RRC reestablishment message to the remote UE, so that the remote UE determines that RRC reestablishment can be performed. For example, the relay UE may send the RRC reestablishment message to the remote UE through an SL RLC bearer corresponding to the remote UE.

S1507: The relay UE sends an RRC reestablishment complete message to the second network device. Correspondingly, the second network device receives the RRC reestablishment complete message from the relay UE.

In this embodiment of this application, both the remote UE and the relay UE need to perform RRC reestablishment. In this case, the remote UE may not need to send an RRC reestablishment request message to the second network device, but the relay UE may add information about the remote UE to the RRC reestablishment request message of the relay UE, and send the RRC reestablishment request message to the second network device. In this manner, signaling overheads can be reduced, and the remote UE can perform RRC reestablishment, so that a service of the remote UE can be resumed, to reduce a packet loss caused due to service interruption.

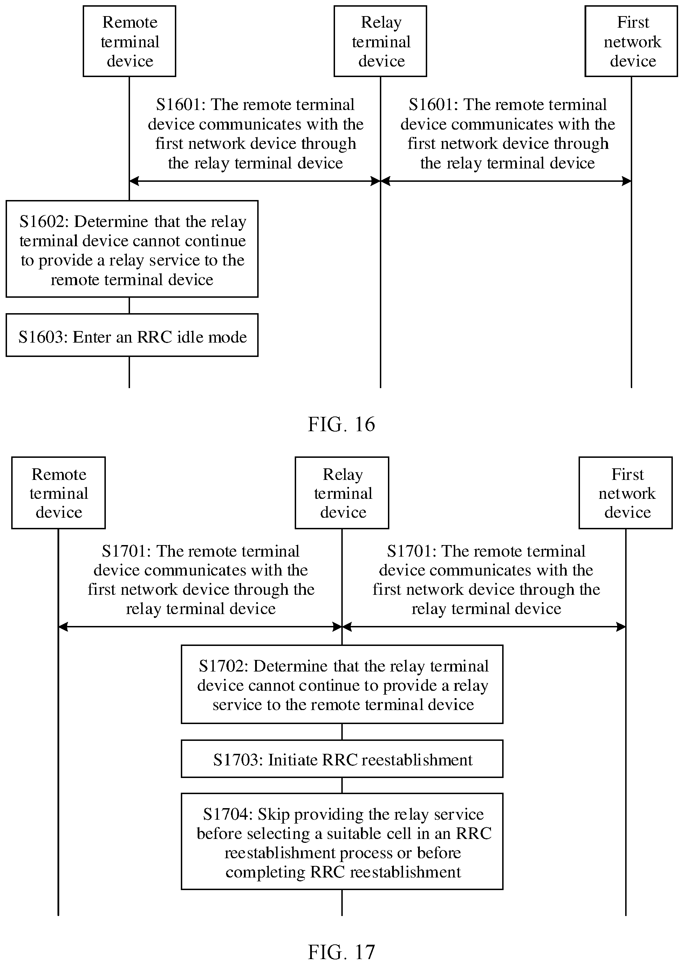

An embodiment of this application provides a thirteenth communication method. FIG. 16 is a flowchart of the method. In the method, if remote UE determines that relay UE cannot continue to provide a relay service to the remote UE, the remote UE may enter an RRC idle mode, to reduce power consumption. If this embodiment of this application is applied to the network architecture shown in FIG. 3A, the remote UE described below may be a remote terminal device in the network architecture shown in FIG. 3A, the relay UE described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, the remote UE described below may be a remote terminal device in the network architecture shown in FIG. 3B, the relay UE described below may be a relay terminal device in the network architecture shown in FIG. 3B, and a first network device described below may be a network device in the network architecture shown in FIG. 3B.

S1601: The remote UE communicates with the first network device through the relay UE.

For more content of S1601, refer to the description of S401 in the embodiment shown in FIG. 4.

S1602: The remote UE determines that the relay UE cannot continue to provide the relay service to the remote UE.

For more content of S1602, refer to the description of S402 in the embodiment shown in FIG. 4.

S1603: The remote UE enters the RRC idle mode.

If the remote UE determines that the relay UE cannot continue to provide the relay service to the remote UE, the remote UE may release a PC5-RRC connection to the relay UE, and return to the RRC idle mode. This is easy to implement, and can reduce power consumption. After returning to the RRC idle mode, the remote UE may reestablish an RRC connection to the network device, or may reselect relay UE, to continue a service of the remote UE.

An embodiment of this application provides a fourteenth communication method. FIG. 17 is a flowchart of the method. In the method, if remote UE determines that relay UE cannot continue to provide a relay service to the remote UE, the remote UE may enter an RRC idle mode, to reduce power consumption. If this embodiment of this application is applied to the network architecture shown in FIG. 3A, the remote UE described below may be a remote terminal device in the network architecture shown in FIG. 3A, the relay UE described below may be a relay terminal device in the network architecture shown in FIG. 3A, and a first network device described below may be a network device in the network architecture shown in FIG. 3A. Alternatively, if this embodiment of this application is applied to the network architecture shown in FIG. 3B, the remote UE described below may be a remote terminal device in the network architecture shown in FIG. 3B, the relay UE described below may be a relay terminal device in the network architecture shown in FIG. 3B, and a first network device described below may be a network device in the network architecture shown in FIG. 3B.

S1701: The remote UE communicates with the first network device through the relay UE.

For more content of S1701, refer to the description of S401 in the embodiment shown in FIG. 4.

S1702: The relay UE determines that the relay UE cannot continue to provide the relay service to the remote UE.

For example, if detecting an RLF between the relay UE and the first network device, the relay UE may determine that the relay UE cannot continue to provide the relay service to the remote UE.

S1703: The relay UE initiates RRC reestablishment. For a process of performing RRC reestablishment by the relay UE, refer to the embodiment shown in FIG. 11.

S1704: The relay UE skips providing the relay service before selecting a suitable cell in an RRC reestablishment process or before completing RRC reestablishment.

The relay UE performs cell selection in the RRC reestablishment process. Therefore, before the relay UE selects a suitable cell, the relay UE skips providing the relay service. Alternatively, the relay UE skips providing the relay service before the RRC reestablishment process performed by the relay UE is completed. For example, after the relay UE sends an RRC reestablishment complete message to a second network device, it is considered that the RRC reestablishment process performed by the relay UE is completed. The second network device is a network device corresponding to the cell selected by the relay UE in the RRC reestablishment process.

There may be a plurality of implementations in which the relay UE skips providing the relay service. Descriptions are provided below by using an example.

Manner 1: The relay UE skips sending a discovery message related to the relay service, the relay UE refuses to establish a connection to UE that requests to provide the relay service, or the relay UE skips sending a discovery message related to the relay service, and the relay UE refuses to establish a connection to UE that requests to provide the relay service.

For example, UE (for example, the relay UE) having a capability of providing the relay service may send a discovery message. The discovery message may include information related to the relay service, for example, may indicate that the UE that sends the discovery message can provide the relay service. In this case, in this embodiment of this application, before selecting a suitable cell or before completing the RRC reestablishment process, the relay UE skips sending the discovery message related to the relay service.

For another example, other UE may request to establish a PC5 unicast link to the relay UE. A purpose of requesting, by the other UE, to establish a PC5 unicast link may be to request the relay UE to provide the relay service, or may be another purpose, for example, to perform D2D communication with the relay UE. In this case, the relay UE may refuse to establish a connection to the UE that requests to provide the relay service, and the relay UE may continue to establish a connection to UE that does not request to provide the relay service. Alternatively, the relay UE may refuse to establish a connection to all UEs that request a connection.

Manner 2: The relay UE sends sixth indication information, where the sixth indication information may indicate that the relay UE is in an RLF state, indicate that the relay UE is performing RRC reestablishment, or indicate that a connection between the relay UE and the first network device is unavailable.

For example, the relay UE may send the sixth indication information to the remote UE. For example, the sixth indication information may be included in a first message, and the first message is, for example, a message used to establish a connection between UEs. Alternatively, the relay UE may broadcast the sixth indication information, so that more UEs can learn of a status of the relay UE. For example, the sixth indication information may be included in a first message, and the first message is, for example, a discovery message or a system message. The UE (for example, the remote UE) that receives the sixth indication information may not select the relay UE to provide the relay service. Alternatively, the UE that receives the sixth indication information may continue to select the relay UE to provide the relay service, for example, may request, after a period of time, the relay UE to provide the relay service.

Manner 3: The remote UE sends seventh indication information, where the seventh indication information may indicate not to send a connection establishment request message, or indicate not to perform a PC5 connection establishment process.

For example, the relay UE may send the seventh indication information to the remote UE. For example, the seventh indication information may be included in a second message, and the second message is, for example, a message used to establish a connection between UEs. Alternatively, the relay UE may broadcast the seventh indication information, so that more UEs can learn a status of the relay UE. For example, the seventh indication information may be included in a second message, and the second message is, for example, a discovery message or a system message. The UE (for example, the remote UE) that receives the sixth indication information may not select the relay UE to provide the relay service, or may not initiate a procedure of establishing a PC5 unicast link to the relay UE, for example, does not send a connection establishment request message (the connection establishment request message is used to request to establish a PC5 connection) to the relay UE. Alternatively, the UE that receives the sixth indication information may continue to select the relay UE to provide the relay service, for example, may request, after a period of time, the relay UE to provide the relay service.

Manner 4: The relay UE skips responding to a message used to establish a connection to the relay UE.

For example, the relay UE skips responding to a message that is from the remote UE and that is used to establish a connection to the relay UE, or the relay UE skips responding to all messages used to establish a connection to the relay UE. For example, before the relay UE selects a suitable cell, if the relay UE receives a connection establishment request message from the remote UE, or the relay UE and the remote UE are currently in a process of establishing a PC5 unicast link (that is, establishment of the PC5 unicast link is not completed), the relay UE may first not respond to the remote UE. For example, the relay UE does not send a message to the remote UE. Then, if selecting a suitable cell, the relay UE may continue to respond to the message that is previously not responded to. For another example, before the relay UE completes RRC reestablishment, if the relay UE receives a connection establishment request message from the remote UE, or the relay UE and the remote UE are currently in a process of establishing a PC5 unicast link (that is, establishment of the PC5 unicast link is not completed), the relay UE may first not respond to the remote UE. For example, the relay UE does not send a message to the remote UE. Then, if completing RRC reestablishment, the relay UE may continue to respond to the message that is previously not responded to.

Alternatively, there may be another implementation in which the relay UE skips providing the relay service. This is not limited in this embodiment of this application. A manner in which the relay UE skips providing the relay service may be specified in a protocol, may be configured by the network device, may be determined by the relay UE and the remote UE through negotiation in advance, or may be independently determined by the relay UE.

This embodiment of this application may be applied in combination with any one of the embodiments shown in FIG. 4 to FIG. 16, or may not be applied in combination with any embodiment, and may be independently applied. In addition, the technical solution in this embodiment of this application is applicable to both a layer 2 relay technology and a layer 3 relay technology.

If the remote UE establishes a PC5 unicast link to the relay UE that is undergoing an RLF or is performing the RRC reestablishment process, the remote UE possibly cannot immediately transmit data through the relay UE, or cannot be connected to the network device through the relay UE, which causes a relatively high delay to a service of the remote UE. However, in the technical solution in this embodiment of this application, the problem can be resolved, so that the remote UE can select more suitable UE as soon as possible to provide the relay service, to reduce a service interruption time of the remote UE.

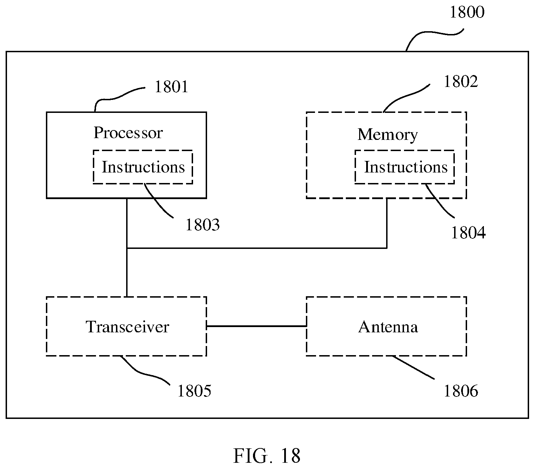

FIG. 18 is a schematic diagram of a structure of a communication apparatus according to an embodiment of this application. The communication apparatus 1800 may be the first terminal device or a chip system of the first terminal device in any one of the embodiment shown in FIG. 4 to the embodiment shown in FIG. 17, and is configured to implement the method corresponding to the first terminal device in the foregoing method embodiments. Alternatively, the communication apparatus may be the second terminal device or a chip system of the second terminal device in any one of the embodiment shown in FIG. 4 to the embodiment shown in FIG. 17, and is configured to implement the method corresponding to the second terminal device in the foregoing method embodiments. Alternatively, the communication apparatus may be the third terminal device or a chip system of the third terminal device in any one of the embodiment shown in FIG. 4 to the embodiment shown in FIG. 17, and is configured to implement the method corresponding to the third terminal device in the foregoing method embodiments. For a specific function, refer to the description in the foregoing method embodiments.

The communication apparatus 1800 includes one or more processors 1801. The processor 1801 may also be referred to as a processing unit, and may implement a specific control function. The processor 1801 may be a general-purpose processor, a dedicated processor, or the like. For example, the processor 1801 includes a baseband processor or a central processing unit. The baseband processor may be configured to process a communication protocol and communication data. The central processing unit may be configured to: control the communication apparatus 1800, execute a software program, and/or process data. Different processors may be independent components, or may be disposed in one or more processing circuits, for example, integrated into one or more application-specific integrated circuits.

Optionally, the communication apparatus 1800 includes one or more memories 1802, configured to store instructions 1804. The instructions 1804 may be run on the processor, so that the communication apparatus 1800 performs the method described in the foregoing method embodiments. Optionally, the memory 1802 may further store data. The processor and the memory may be independently disposed, or may be integrated together.

Optionally, the communication apparatus 1800 may include instructions 1803 (which may also be referred to as code or programs sometimes). The instructions 1803 may be run on the processor, so that the communication apparatus 1800 performs the method described in the foregoing embodiments. The processor 1801 may store data.

Optionally, the communication apparatus 1800 may further include a transceiver 1805 and an antenna 1806. The transceiver 1805 may be referred to as a transceiver unit, a transceiver machine, a transceiver circuit, a transceiver, an input/output interface, or the like, and is configured to implement a transceiver function of the communication apparatus 1800 through the antenna 1806.

Optionally, the communication apparatus 1800 may further include one or more of the following components: a wireless communication module, an audio module, an external memory interface, an internal memory, a universal serial bus (universal serial bus, USB) port, a power management module, an antenna, a speaker, a microphone, an input/output module, a sensor module, a motor, a camera, a display, or the like. It may be understood that in some embodiments, the communication apparatus 1800 may include more or fewer components, or some components are integrated, or some components are split. These components may be implemented by hardware, software, or a combination of software and hardware.

The processor 1801 and the transceiver 1805 described in this embodiment of this application may be implemented in an integrated circuit (integrated circuit, IC), an analog IC, a radio frequency integrated circuit (radio frequency integrated circuit, RFIC), a hybrid signal IC, an application-specific integrated circuit (application-specific integrated circuit, ASIC), a printed circuit board (printed circuit board, PCB), an electronic device, or the like. The communication apparatus described in this specification may be implemented by an independent device (for example, an independent integrated circuit or a mobile phone), or may be a part of a relatively large device (for example, a module that can be built into another device). For details, refer to the foregoing description of the terminal device and the network device. Details are not described herein.

An embodiment of this application provides a terminal device. The terminal device (which is referred to as UE for ease of description) may be used in the foregoing embodiments. The terminal device includes a corresponding means (means), unit, and/or circuit for implementing a function of the first terminal device, the second terminal device, or the third terminal device in any one of the embodiment shown in FIG. 4 to the embodiment shown in FIG. 17. For example, the terminal device includes a transceiver module, configured to support the terminal device in implementing a transceiver function, and a processing module, configured to support the terminal device in processing a signal.

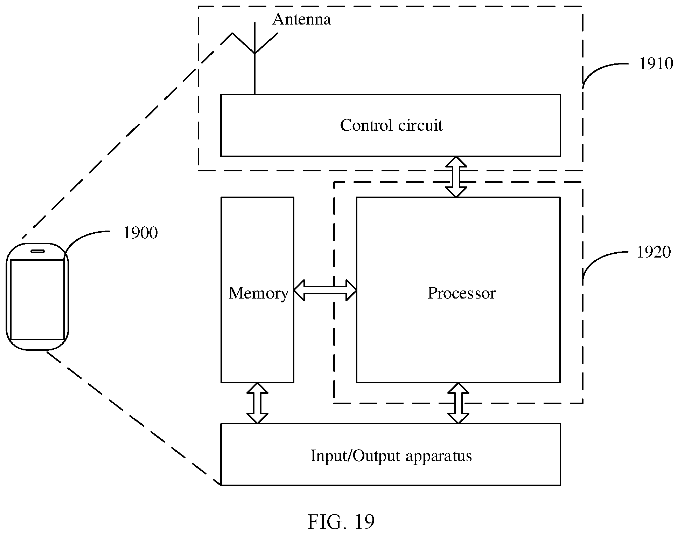

FIG. 19 is a schematic diagram of a structure of a terminal device according to an embodiment of this application.

The terminal device 1900 may be applied to the architecture shown in any one of FIG. 1, FIG. 3A, or FIG. 3B. For ease of description, FIG. 9 shows only main components of the terminal device 1900. As shown in FIG. 19, the terminal device 1900 includes a processor, a memory, a control circuit, an antenna, and an input/output apparatus. The processor is mainly configured to: process a communication protocol and communication data, control the entire terminal device 1900, execute a software program, and process data of the software program. The memory is mainly configured to store a software program and data. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data entered by a user, and output data to the user.

A person skilled in the art may understand that for ease of description, FIG. 19 shows only one memory and one processor. In some embodiments, the terminal device 1900 may include a plurality of processors and memories. The memory may also be referred to as a storage medium, a storage device, or the like. This is not limited in this embodiment of this application.

In an example, the antenna and the control circuit that have a transceiver function may be considered as a transceiver unit 1910 of the terminal device 1900, and the processor having a processing function may be considered as a processing unit 1920 of the terminal device 1900. As shown in FIG. 19, the terminal device 1900 includes the transceiver unit 1910 and the processing unit 1920. The transceiver unit may also be referred to as a transceiver, a transceiver machine, a transceiver apparatus, or the like. Optionally, a component that is in the transceiver unit 1910 and that is configured to implement a receiving function may be considered as a receiving unit, and a component that is in the transceiver unit 1910 and that is configured to implement a sending function may be considered as a sending unit. In other words, the transceiver unit 1910 includes the receiving unit and the sending unit. For example, the receiving unit may also be referred to as a receiver, a receiver machine, or a receiver circuit, and the sending unit may also be referred to as a transmitter, a transmitter machine, or a transmitter circuit.

When the several embodiments provided in this application are implemented in the form of software functional units and sold or used as independent products, the several embodiments may be stored in a computer-readable storage medium. The computer software product is stored in a storage medium, and includes several instructions for instructing a computer device (which may be a personal computer, a server, a network device, or the like) to perform all or some of the steps of the method described in embodiments of this application. The computer-readable storage medium may be any usable medium that can be accessed by a computer. The following provides an example but imposes no limitation: The computer-readable medium may include a random access memory (random access memory, RAM), a read-only memory (read-only memory, ROM), or any other medium that can be configured to carry or store expected program code in a form of an instruction or a data structure and that can be accessed by a computer.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
initiating, by a first terminal device, RRC reestablishment in a first manner when the first terminal device determines that a second terminal device is incapable of continuing to provide a relay service to the first terminal device, wherein the first manner is a manner of initiating RRC reestablishment through a Uu interface, a manner of initiating RRC reestablishment through a new terminal device, or a manner of initiating RRC reestablishment through the second terminal device, wherein
the method further comprises: receiving, by the first terminal device, first information from a first network device through the second terminal device, wherein the first information is used to indicate to initiate RRC reestablishment through a Uu interface, indicate to initiate RRC reestablishment through a new terminal device, or indicate to initiate RRC reestablishment through the second terminal device; or
the first information comprises RSRP of a cell selected by the first terminal device and/or RSRP of a third terminal device selected by the first terminal device.

2. The method according to claim 1, wherein when the first information comprises the RSRP of the cell selected by the first terminal device and/or the RSRP of the third terminal device selected by the first terminal device,
if RSRP of a first cell is less than or equal to a first RSRP threshold, and the first terminal device does not select a terminal device that is capable of providing the relay service, the first manner is the manner of initiating RRC reestablishment through a Uu interface, wherein the first cell is a cell selected by the first terminal device;
if RSRP of a first cell is greater than a first RSRP threshold, the first manner is the manner of initiating RRC reestablishment through a Uu interface, wherein the first cell is a cell selected by the first terminal device;
if the RSRP of the cell selected by the first terminal device is less than or equal to a first RSRP threshold, and the first terminal device selects the third terminal device that is capable of providing the relay service, the first manner is a manner of initiating RRC reestablishment through the third terminal device; or
if a difference between the RSRP of the cell and the RSRP of the third terminal device selected by the first terminal device is less than or equal to a first RSRP threshold, the first manner is a manner of initiating RRC reestablishment through the third terminal device, wherein the third terminal device is a new terminal device that is selected by the first terminal device and that is capable of providing the relay service, or the third terminal device and the second terminal device are a same terminal device.

3. The method according to claim 1 or 2, wherein that the first terminal device determines that a second terminal device is incapable of continuing to provide a relay service to the first terminal device comprises:
detecting, by the first terminal device, an SL RLF between the first terminal device and the second terminal device; or
requesting, by a first protocol layer in the first terminal device, to release a connection between the first terminal device and the second terminal device.

4. The method according to any one of claims 1 to 3, wherein when the first manner is the manner of initiating RRC reestablishment through a Uu interface, the method further comprises:
starting, by the first terminal device, a first timer, wherein the first timer is stopped when the first terminal device selects a cell, or is stopped when the first terminal device selects a new terminal device that is capable of providing the relay service; the first timer is stopped when the first terminal device selects a cell, or is stopped when the first terminal device completes establishment of a connection to a new terminal device that is capable of providing the relay service; or the first timer is stopped when the first terminal device selects a cell, or is stopped when the first terminal device obtains an identifier of a serving cell of a new terminal device that is selected by the first terminal device and that is capable of providing the relay service; and
stopping, by the first terminal device, the first timer when selecting the first cell.

5. The method according to claim 4, wherein the starting, by the first terminal device, a first timer comprises:
starting, by the first terminal device, the first timer when initiating RRC reestablishment in the first manner;
starting, by the first terminal device, the first timer when determining that the second terminal device is incapable of continuing to provide the relay service to the first terminal device; or
starting, by the first terminal device, the first timer after initiating RRC reestablishment in the first manner and before performing cell selection.

6. The method according to any one of claims 1 to 3, wherein when the first manner is the manner of initiating RRC reestablishment through a Uu interface, after the initiating, by a first terminal device, RRC reestablishment in a first manner, the method further comprises:
if the first terminal device does not select a cell, the cell selected by the first terminal device is no longer suitable, the first terminal device does not receive an RRC reestablishment message from a second network device, or the RSRP of the cell selected by the first terminal device is less than or equal to a second RSRP threshold, selecting, by the first terminal device, a new terminal device that can provide the relay service, wherein the second network device is a network device to which the first terminal device initiates the RRC reestablishment;
and
initiating, by the first terminal device, RRC reestablishment through the third terminal device when the first terminal device selects the third terminal device, wherein the third terminal device is capable of providing the relay service to the first terminal device.

7. The method according to claim 6, wherein that the first terminal device does not select a cell comprises:
the first terminal device does not select a cell when a first timer expires, wherein the first timer is started when the first terminal device initiates RRC reestablishment in the first manner, the first timer is started when the first terminal device determines that the second terminal device is incapable of continuing to provide the relay service to the first terminal device, or the first timer is started after the first terminal device initiates RRC reestablishment in the first manner and before cell selection is performed.

8. The method according to claim 6, wherein that the first terminal device does not receive an RRC reestablishment message from a second network device comprises:
the first terminal device does not receive the RRC reestablishment message from the second network device when a second timer expires, wherein the second timer is started after the first terminal device selects a cell.

9. The method according to any one of claims 1 to 3, wherein when the first manner is the manner of initiating RRC reestablishment through a new terminal device, the method further comprises:
starting, by the first terminal device, a second timer when the first terminal device initiates RRC reestablishment in the first manner, when the first terminal device determines that the second terminal device is incapable of continuing to provide the relay service to the first terminal device, or before the first terminal device reselects a terminal device that is capable of providing the relay service; and
stopping, by the first terminal device, the second timer when the first terminal device selects the third terminal device, when the first terminal device completes establishment of a connection to the third terminal device, or when the first terminal device obtains an identifier of a serving cell of the third terminal device.

10. The method according to claim 9, wherein the initiating, by a first terminal device, RRC reestablishment in a first manner comprises:
establishing, by the first terminal device, an SL RLC bearer of a first SRB;
sending, by the first terminal device, an RRC reestablishment request message to a second network device through the third terminal device, wherein the second network device is a network device accessed by the third terminal device; and
receiving, by the first terminal device, an RRC reestablishment message from the second network device through the third terminal device, wherein the RRC reestablishment message is transmitted on the first SRB.

11. The method according to any one of claims 1 to 3, wherein when the first manner is the manner of initiating RRC reestablishment through a new terminal device, the method further comprises:
starting, by the first terminal device, a first timer, wherein the first timer is stopped when the first terminal device selects a cell, or is stopped when the first terminal device selects a new terminal device that is capable of providing the relay service; the first timer is stopped when the first terminal device selects a cell, or is stopped when the first terminal device completes establishment of a connection to a new terminal device that is capable of providing the relay service; or the first timer is stopped when the first terminal device selects a cell, or is stopped when the first terminal device obtains an identifier of a serving cell of a new terminal device that is selected by the first terminal device and that is capable of providing the relay service; and
reselecting, by the first terminal device, a terminal device that is capable of providing the relay service, and stopping, by the first terminal device, the first timer when selecting the third terminal device; reselecting, by the first terminal device, a terminal device that is capable of providing the relay service, and stopping, by the first terminal device, the first timer when selecting the third terminal device and establishing a connection to the third terminal device; or reselecting, by the first terminal device, a terminal device that is capable of providing the relay service, and stopping, by the first terminal device, the first timer when selecting the third terminal device and obtaining an identifier of a serving cell of the third terminal device.

12. The method according to claim 11, wherein the starting, by the first terminal device, a first timer comprises:
starting, by the first terminal device, the first timer when initiating RRC reestablishment in the first manner;
starting, by the first terminal device, the first timer when determining that the second terminal device is incapable of continuing to provide the relay service to the first terminal device; or
starting, by the first terminal device, the first timer after initiating RRC reestablishment in the first manner and before reselecting the terminal device that is capable of providing the relay service.

13. The method according to any one of claims 1 to 3 and claims 9 to 12, wherein when the first manner is the manner of initiating RRC reestablishment through a new terminal device, the method further comprises:
sending, by the first terminal device, data of a second SRB to the third terminal device, wherein the second SRB is an SRB between the first terminal device and the second network device, the second network device is a network device accessed by the third terminal device, and the third terminal device is a new terminal device selected by the first terminal device;
receiving, by the third terminal device, the data of the second SRB from the first terminal device;
establishing or reestablishing, by the third terminal device, an RLC bearer corresponding to the first SRB of the first terminal device, wherein the RLC bearer of the first SRB comprises a first RLC bearer between the first terminal device and the third terminal device and a second RLC bearer between the first terminal device and the second network device, and the first SRB is an SRB between the first terminal device and the second network device;
sending, by the third terminal device, the data of the second SRB to the second network device;
receiving, by the third terminal device, data of the first SRB from the second network device through the second RLC bearer; and
sending, by the third terminal device, the data of the first SRB to the first terminal device through the first RLC bearer.

14. The method according to claim 13, wherein the establishing or reestablishing, by the third terminal device, an RLC bearer corresponding to the first SRB of the first terminal device comprises:
receiving, by the third terminal device, the data of the second SRB from the first terminal device, and establishing or reestablishing, by the third terminal device, the RLC bearer of the first SRB;
receiving, by the third terminal device, first indication information from the second network device, and establishing or reestablishing, by the third terminal device, the RLC bearer of the first SRB, wherein the first indication information is used to indicate to establish the RLC bearer of the first SRB, indicate to receive the data of the first SRB that is sent by the second network device to the first terminal device, indicate to receive the RRC reestablishment message sent by the second network device to the first terminal device, or indicate that the first terminal device sends the RRC reestablishment request message through the third terminal device; or
receiving, by the third terminal device, second indication information from the first terminal device, and establishing or reestablishing, by the third terminal device, the RLC bearer of the first SRB, wherein the second indication information is used to indicate to establish the RLC bearer of the first SRB, indicate to receive the data of the first SRB that is sent by the second network device to the first terminal device, indicate to receive the RRC reestablishment message sent by the second network device to the first terminal device, or indicate that the first terminal device sends the RRC reestablishment request message through the third terminal device.

15. The method according to any one of claims 1 to 3, wherein when the first manner is the manner of initiating RRC reestablishment through the second terminal device, the method further comprises:
detecting, by the second terminal device, an RLF between the second terminal device and the first network device; and
initiating, by the second terminal device, RRC reestablishment.

16. The method according to claim 15, wherein the method further comprises:
sending, by the second terminal device, third indication information to the first terminal device, wherein the third indication information is used to indicate to perform RRC reestablishment, or is used to indicate that an RLF occurs on the second terminal device.

17. The method according to claim 16, wherein that the first terminal device determines that a second terminal device is incapable of continuing to provide a relay service to the first terminal device comprises:
determining, by the first terminal device based on the third indication information, that the second terminal device is incapable of continuing to provide the relay service to the first terminal device.

18. The method according to claim 17, wherein the method further comprises:
starting, by the first terminal device, a fifth timer after receiving the third indication information; and
when the fifth timer expires, if the first terminal device does not receive an identifier of a second cell from the second terminal device, entering, by the first terminal device, an RRC idle mode; or before the fifth timer expires, if the first terminal device receives an identifier of a second cell from the second terminal device, disabling, by the first terminal device, the fifth timer, wherein the second cell is a cell selected by the second terminal device.

19. The method according to any one of claims 15 to 18, wherein the method further comprises:
sending, by the second terminal device, the identifier of the second cell to the first terminal device after completing RRC reestablishment; or
sending, by the second terminal device, the identifier of the second cell to the first terminal device when selecting the second cell, wherein
the second cell is a cell selected by the second terminal device by initiating RRC reestablishment.

20. The method according to claim 19, wherein after the initiating, by the second terminal device, RRC reestablishment, the method further comprises:
sending, by the second terminal device, fourth indication information to the first terminal device if the second terminal device does not select a cell, wherein the fourth indication information is used to indicate that the RRC reestablishment fails, or indicate to release the connection to the first terminal device; and
after receiving the fourth indication information, entering, by the first terminal device, the RRC idle mode, initiating RRC reestablishment by selecting a new terminal device, or initiating RRC reestablishment through a Uu interface.

21. The method according to claim 16 or 17, wherein the method further comprises:
sending, by the first terminal device, fifth indication information to the second terminal device, wherein the fifth indication information is used to indicate that RRC reestablishment is not to be performed through the second terminal device, or indicate to release the connection to the second terminal device.

22. The method according to claim 15, wherein the method further comprises:
skipping providing, by the second terminal device, the relay service before selecting a suitable cell in an RRC reestablishment process or before completing RRC reestablishment.

23. The method according to claim 22, wherein the skipping providing, by the second terminal device, the relay service comprises:
skipping sending, by the second terminal device, a discovery message related to the relay service, or refusing to establish a connection to a terminal device that requests to provide the relay service.

24. The method according to claim 22, wherein the skipping providing, by the second terminal device, the relay service comprises:
sending, by the second terminal device, sixth indication information to the first terminal device, wherein the sixth indication information is used to indicate that the second terminal device is in an RLF state, indicate that the second terminal device is performing RRC reestablishment, or indicate that a connection between the second terminal device and the first network device is unavailable.

25. The method according to claim 24, wherein the sixth indication information is comprised in a first message, and the first message is a discovery message or a message used to establish a connection between terminal devices.

26. The method according to claim 22, wherein the skipping providing, by the second terminal device, the relay service comprises:
sending, by the second terminal device, seventh indication information to the first terminal device, wherein the seventh indication information is used to indicate not to send a connection establishment request message, or indicate not to perform a PC5 connection establishment process.

27. The method according to claim 26, wherein the seventh indication information is comprised in a second message, and the second message is a discovery message or a message used to establish a connection between terminal devices.

28. The method according to claim 22, wherein the skipping providing, by the second terminal device, the relay service comprises:
skipping responding, by the second terminal device, to a message that is from the first terminal device and that is used to establish a connection to the second terminal device.

29. The method according to claim 28, wherein the method further comprises:
after selecting a new cell or completing RRC reestablishment, responding, by the second terminal device, to the message that is from the first terminal device and that is used to establish a connection to the second terminal device.

30. A communication system, comprising a first terminal device and a second terminal device, wherein
the second terminal device is configured to: receive first data from the first terminal device, and send the first data to a first network device, or is configured to: receive second data from a first network device, and send the second data to the first terminal device, wherein the second terminal device provides a relay service to the first terminal device; and
the first terminal device is configured to: determine that the second terminal device is incapable of continuing to provide the relay service to the first terminal device, and initiate RRC reestablishment in a first manner, wherein the first manner is determined based on first information, and the first manner is a manner of initiating RRC reestablishment through a Uu interface, a manner of initiating RRC reestablishment through a new terminal device, or a manner of initiating RRC reestablishment through the second terminal device.

31. A communication apparatus, comprising a transceiver unit and a processing unit, wherein the transceiver unit is coupled to the processing unit, and is able to perform the method performed by the first terminal device according to any one of claims 1 to 29, perform the method performed by the second terminal device according to any one of claims 1 to 29, or perform the method performed by the third terminal device according to any one of claims 1 to 29.

32. A computer-readable storage medium, wherein the computer-readable storage medium is configured to store a computer program, and when the computer program is run on a computer, the computer is enabled to perform the method performed by the first terminal device according to any one of claims 1 to 29, the computer is enabled to perform the method performed by the second terminal device according to any one of claims 1 to 29, or the computer is enabled to perform the method performed by the third terminal device according to any one of claims 1 to 29.
